(19) Europäisches Patentamt
European Patent Office
Office européen des brevets

(11) **EP 4 787 844 A1**

(12) **EUROPEAN PATENT APPLICATION**
published in accordance with Art. 153(4) EPC

(43) Date of publication:
**05.08.2026  Bulletin 2026/32**

(21) Application number: **23953840.8**

(22) Date of filing: **28.09.2023**

(51) International Patent Classification (IPC):
**H04N 19/176** (2014.01)

(52) Cooperative Patent Classification (CPC):
**H04N 19/176**

(86) International application number:
**PCT/CN2023/123010**

(87) International publication number:
**WO 2025/065696 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **MA, Yanzhuo**
**Dongguan, Guangdong 523860 (CN)**
• **HUO, Junyan**
**Dongguan, Guangdong 523860 (CN)**
• **YANG, Fuzheng**
**Dongguan, Guangdong 523860 (CN)**
• **QIU, Nengfu**
**Dongguan, Guangdong 523860 (CN)**
• **LI, Ming**
**Dongguan, Guangdong 523860 (CN)**

(74) Representative: **Penza, Giancarlo et al**
**Bugnion S.p.A.
Viale Lancetti, 17
20158 Milano (IT)**

(54) **CODING METHOD, DECODING METHOD, CODE STREAM, CODER, DECODER, AND STORAGE MEDIUM**

(57)    The embodiments of the present application disclose a coding method, a decoding method, a code stream, a coder, a decoder and a storage medium. The decoding method comprises: a codec determining a prediction parameter corresponding to the current block; according to the prediction parameter of the current block, determining a first reference block of the current block; according to the first reference block of the current block, determining a first transformation parameter of the current block; according to the first reference block of the current block, determining a prediction block of the current block; and, on the basis of the prediction block and the first transformation parameter of the current block, determining a reconstruction block corresponding to the current block.

**FIG. 11**

EP 4 787 844 A1

**Description**

TECHNICAL FIELD

Embodiments of the present disclosure relate to the field of video encoding and decoding technology, and particularly to an encoding method, a decoding method, a bitstream, an encoder, a decoder, and a storage medium.

BACKGROUND

Common Block Vector (BV)-based prediction techniques, such as Intra Template Matching Prediction (Intra TMP) or Intra block copy (IBC), may use the best matching reconstructed block as the prediction block for the current coding block; the prediction block undergoes data processing procedures such as filtering and fusion, to acquire the final prediction block; and based on this final prediction block, Decoder-side Intra Mode Derivation (DIMD) may be further adopted to derive the Low-Frequency Non-Separable Transform (LFNST) transform set, and then the LFNST transform set may be used to perform subsequent inverse transform processing.

However, after undergoing data processing such as filtering and fusion, the final prediction block loses some texture edge information, which affects the accuracy of the subsequent derivation of the LFNST transform set to a certain extent. That is, the derived LFNST transform set may not necessarily be the most matching one, which reduces encoding and decoding performance. Meanwhile, the prediction process that sequentially performs prediction block processing, LFNST transform set derivation, and inverse transform processing also has the problem of high complexity, which reduces encoding and decoding efficiency.

That is to say, the common BV-based prediction technologies have the problems of low efficiency and poor performance of encoding and decoding.

SUMMARY

Embodiments of the present disclosure provide an encoding method, a decoding method, a bitstream, an encoder, a decoder, and a storage medium, which can effectively improve encoding and decoding efficiency and performance.

The technical solutions of the embodiments of the present disclosure can be realized as follows.

According to a first aspect, an embodiment of the present disclosure provides a decoding method applied to a decoder, the method includes the following operations.

A prediction parameter for the current block is determined.

A first reference block for the current block is determined based on the prediction parameter for the current block.

A first transform parameter for the current block is determined based on the first reference block for the current block.

A prediction block for the current block is determined based on the first reference block for the current block.

A reconstructed block for the current block is determined based on the prediction block and the first transform parameter for the current block.

According to a second aspect, an embodiment of the present disclosure provides an encoding method, applied to an encoder, the method includes the following operations.

A prediction parameter for the current block is determined.

A first reference block for the current block is determined based on the prediction parameter for the current block.

A first transform parameter for the current block is determined based on the first reference block for the current block.

A prediction block for the current block is determined based on the first reference block for the current block.

A reconstructed block for the current block is determined based on the prediction block and the first transform parameter for the current block.

According to a third aspect, an embodiment of the present disclosure provides a bitstream. Herein, the bitstream is generated by bit encoding based on to-be-encoded information, here the to-be-encoded information includes at least one of following:

prediction mode identifier information for the current block, first identifier information, first transform coefficient corresponding to the prediction residual, and transform kernel index number.

According to a fourth aspect, an embodiment of the present disclosure provides an encoder, the encoder includes a first determination unit.

The first determination unit is configured to: determine a prediction parameter for a current block; determine a first reference block for the current block based on a prediction parameter for the current block; determine a first transform parameter for the current block based on a first reference block for the current block; determine a prediction block for the current block from a first reference block for the current block; determine a reconstructed block for the current block based on the prediction block and the first transform parameter for the current block.

According to a fifth aspect, an embodiment of the present disclosure provides an encoder, the encoder including a first memory and a first processor.

The first memory is configured to store a computer program executable on the first processor.

The first processor is configured to, when executing the computer program, perform the method of the second aspect.

According to a sixth aspect, an embodiment of the present disclosure provides a decoder, the decoder includes a second determination unit.

The second determination unit is configured to: determine a prediction parameter for a current block; determine a first reference block for the current block based on a prediction parameter for the current block; determine a first transform parameter for the current block based on a first reference block for the current block; determine a prediction block for the current block from a first reference block for the current block; determine a reconstructed block for the current block based on the prediction block and the first transform parameter for the current block.

According to a seventh aspect, an embodiment of the present disclosure provides a decoder including a second memory and a second processor.

The second memory is configured to store a computer program executable on second processor.

The second processor is configured to, when executing the computer program, perform the method of the first aspect.

According to an eighth aspect, an embodiment of the present disclosure provides a computer storage medium having stored thereon a computer program that, when executed, implements the method of the first aspect or the second aspect.

Embodiments of the present disclosure proposes an encoding method, a decoding method, a bitstream, an encoder, a decoder, and a storage medium. Herein, the encoder/decoder determines a prediction parameter for a current block; determines a first reference block for the current block based on the prediction parameter for the current block; determines a first transform parameter for the current block based on the first reference block for the current block; determines a prediction block for the current block based on the first reference block for the current block; and determines a reconstructed block for the current block based on the prediction block and the first transform parameter for the current block. That is, in the embodiment of the present disclosure, after determining the first reference block for the current block based on the prediction parameter, it can select to directly use the first reference block before data processing to determine the transform parameter for the current block, and then use the determined transform parameter in combination with the prediction block for the current block acquired after data processing of the first reference block, to complete the reconstruction of the current block. Herein, the data processing process may, to a certain extent, result in the loss of the texture edge information of the prediction block; and thus, compared with the final prediction values after data processing (i.e., the prediction block), the initial prediction values before data processing (i.e., the first reference block) has richer texture edge information. By using the first reference block to derive the prediction direction, it can acquire more accurate transform parameters, thereby effectively improving the encoding and decoding performance. Meanwhile, after determining the first reference block directly indicated by the prediction parameter, the operations of generating the prediction block, generating the transform parameter and the residual can be performed in parallel, which shortens the length of critical path for encoding and decoding, and solves the problem of high complexity, thereby improving encoding and decoding efficiency. Therefore, the encoding and decoding method proposed in the embodiments of the present disclosure can improve encoding and decoding efficiency and performance.

BRIEF DESCRIPTION OF THE DRAWINGS

FIG. 1 is a schematic diagram of the application of LFNST technology;

FIG. 2 is a schematic diagram of acquiring reconstructed sample values based on a BV prediction mode;

FIG. 3 is a schematic diagram of the prediction in Intra TMP;

FIG. 4 is a schematic diagram of template types in an Intra TMP technology;

FIG. 5 is a schematic diagram of a template search region;

FIG. 6 is a schematic diagram of neighbouring blocks;

FIG. 7 is a schematic diagram of TM-FLM prediction;

FIG. 8 is a schematic block diagram of a composition of an encoder according to an embodiment of the present disclosure;

FIG. 9 is a schematic block diagram of a composition of a decoder according to an embodiment of the present disclosure;

FIG. 10 is a schematic diagram of a network architecture of a encoding and decoding system according to an embodiment of the present disclosure;

FIG. 11 is a schematic flowchart of a decoding method according to an embodiment of the present disclosure;

FIG. 12 is a schematic diagram of a transform matrix selection process according to an embodiment of the present disclosure;

FIG. 13 is a first schematic diagram of acquiring reconstructed sample values based on the BV prediction mode according to the embodiment of the present disclosure;

FIG. 14 is a second schematic diagram of acquiring reconstructed sample values based on the BV prediction mode according to the embodiment of the present disclosure;

FIG. 15 is a schematic flowchart of an encoding method according to an embodiment of the present disclosure;

FIG. 16 is a first schematic diagram of a composition structure of an encoder according to an embodiment of the present disclosure;

FIG. 17 is a second schematic diagram of a composition structure of the encoder according to the embodiment of the present disclosure;

FIG. 18 is a first schematic diagram of a composition structure of the decoder according to the embodiment of the present disclosure;

FIG. 19 is a second schematic diagram of a composition structure of the decoder according to the embodiment of the present disclosure.

## DETAILED DESCRIPTION

In order to understand characteristics and technical contents of the embodiments of the present disclosure more thoroughly, the implementation of the embodiments of the present disclosure will be described in detail below with reference to the accompanying drawings. The accompanying drawings are only for the purpose of reference and explanation, and are not intended to limit the embodiments of the present disclosure.

Unless otherwise defined, all technical and scientific terms used herein have the same meaning as commonly understood by those skilled in the art to which the present disclosure belongs. The terms used herein are for the purpose of describing embodiments of the present disclosure only and are not intended to limit the present disclosure.

In the following description, reference is made to "some embodiments" which describe a subset of all possible embodiments; however, it may be understood that "some embodiments" may be the same or different subsets of all possible embodiments, and may be combined with each other without conflict. It should also be pointed out that terms "first \second\third" involved in the embodiments of the disclosure are only intended to distinguish similar objects and do not represent a specific order of the objects. It may be understood that "first\second\third" may be interchanged in a specific order or priority order where permitted, such that the embodiments of the disclosure described here may be implemented in an order other than that illustrated or described herein.

It may be understood that in a video picture, a coding block is usually represented by using a first colour component, a second colour component, and a third colour component. These three colour components are a luma component, a blue chroma component, and a red chroma component, respectively. Specifically, the luma component is usually represented by a symbol Y, the blue chroma component is usually represented by a symbol Cb or U, and the red chroma component is usually represented by a symbol Cr or V. In this way, the video picture may be represented in a YCbCr format or a YUV format.

At present, block Vector (BV)-based prediction mode primarily includes: Intra block copy (IBC) and Intra template matching prediction (IntraTMP).

Among them, the intra block copy IBC is an extended tool of H.266/Versatile Video Coding (VVC) for coding video sequences of screen content (Screen content coding), which significantly improves the coding efficiency of screen content sequences.

IBC is a block-level coding mode. The encoding side performs Block Matching (BM) to determine a block vector (BV) for the current coding block, which may also be called a Motion Vector (MV). The block vector is a vector pointing from the current block to the reference block. The block vector in IBC is searched in the reconstructed region of the picture (that is, the current coding picture) where the current coding block is located, while the inter motion vector is acquired by searching the reference picture for the current coding picture in the temporal domain.

Intra template prediction IntraTMP is also a coding mode that performs intra prediction based on BV. The matching criterion in the search process is not measured by the matching degree of the coding block itself, but by template matching (TM).

Low-Frequency Non-Separable Transform (LFNST) technology mainly includes five steps: core parameter configuration, intra prediction mode mapping, transform matrix selection, matrix multiplication calculation and primary transform coefficient matrix construction. Specifically, since the transform matrix in the LFNST is related to the directional characteristics of the prediction mode, the selection of the transform matrix is realized by determining the transform set for the intra prediction mode.

At the decoding end, taking IBC and IntraTMP modes as examples, the basic decoding process includes several processes: acquiring BV, acquiring a prediction value by using BV, and determining reconstructed value.

First, the BV is determined. In actual implementation, BV may be acquired in various ways, such as the decoder directly acquires a best BV through BV search within a certain range, or the decoder first constructs a candidate BV list and then determines the specific information of the BV ultimately used based on the syntax elements in the bitstream.

Secondly, the prediction value is determined based on the BV. Typically, by using the BV, data processing processes such as copying, filtering, and fusion are performed on the corresponding region pointed to by the BV to obtain the prediction value for the current block.

In addition, the bitstream is decoded to acquire the prediction residual, and then the prediction residual and the prediction value are summed to acquire the final reconstructed value.

At the decoding side, the residual value is acquired by performing inverse quantization and inverse transform on the quantization coefficients acquired from the bitstream. Herein, the transform process may include a primary transform, or may include a primary transform and a secondary transform. During decoding, inverse secondary transform is performed first, and then inverse primary transform is performed.

At the encoding side, the residual value (original) is first acquired by subtracting the prediction value from the original data, and then through transform, quantization, inverse quantization, and inverse transform, a residual value consistent with the residual value required for reconstruction at the decoder side is acquired.

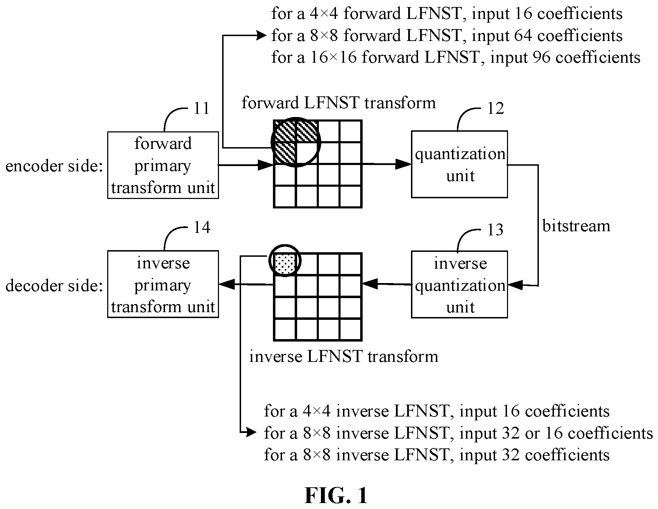

FIG. 1 is a schematic diagram of the application of LFNST technology. Referring to FIG. 1, it illustrates a schematic diagram of an application position of an LFNST technology according to the related art. As illustrated in FIG. 1, in the intra prediction mode, for the encoder side, the LFNST technology is applied between the forward primary transform unit 11 and the quantization unit 12; and for the decoder side, the LFNST technology is applied between the inverse quantization unit 13 and the inverse primary transform unit 14.

That is to say, on the encoder side, forward primary transform is performed on the prediction residual of the current transform block to acquire primary transform coefficients, and then the secondary transform is performed on part of the primary transform coefficients through matrix multiplication to acquire fewer and more concentrated secondary transform coefficients, which are then quantized. On the decoder side, after parsing the quantization values, the inverse quantization is performed; inverse secondary transform is performed on the inverse-quantized coefficients through matrix multiplication; and then inverse primary transform is performed on the coefficients acquired after inverse secondary transform, to recover the prediction residual.

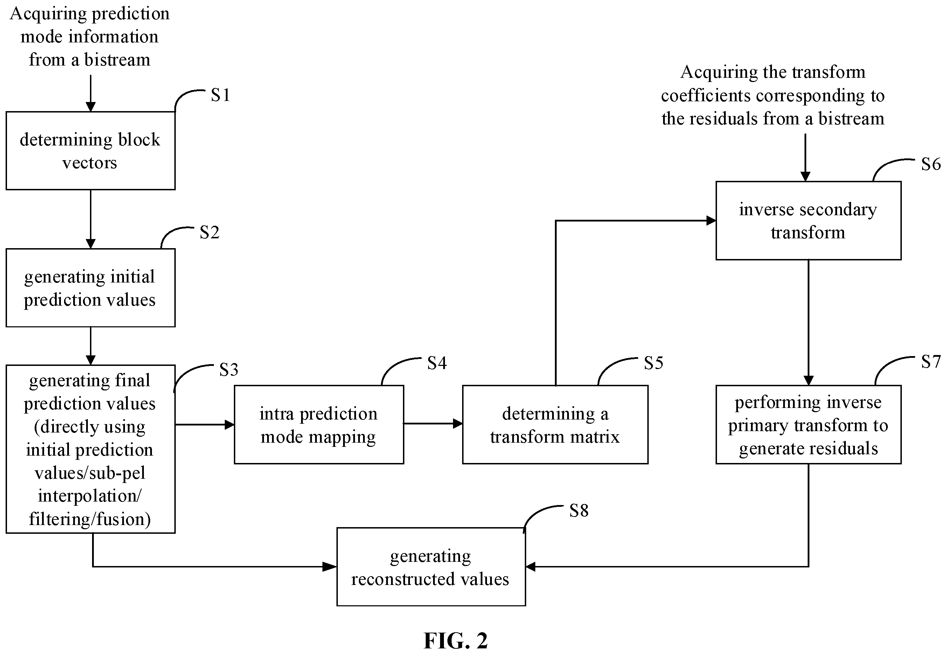

FIG. 2 is a schematic diagram of acquiring reconstructed sample values based on a BV prediction mode. As illustrated in FIG. 2, the process of reconstructing sample values mainly includes following operations: S1, determining block vectors; S2, generating initial prediction values; S3, generating final prediction values; S4, performing intra prediction mode mapping; S5, determining a transform block matrix; S6, performing inverse secondary transform; S7, performing inverse primary transform; and S8, generating reconstructed values.

In operation S1, determining the block vectors:

(1) Luma:

Input: luma position (xCb, yCb), specifying the top-left sample of the current coding block relative to the top-left luma sample of the current picture; a variable cbWidth, specifying the width of the current coding block in the luma sample; and a variable cbHeight, specifying the height of the current coding block in the luma sample.

Output: Block vector of luma, BVL (Block Vector Luma)

Herein, the above search process is performed at the decoding side.

In IntraTMP mode, a template (T) of a coding block is used to search for a matching template (T_BEST) with a minimum cost relative to the template of the coding block in a predefined search range of a current picture based on a preset cost function. An offset of a best matching template relative to a template of a current coding block is a best block vector (BV_BEST). Then, a reconstructed block (Ref Block) corresponding to the matching template is used as a prediction block for the current coding block (Cur Block). The template of the coding block usually is selected from a neighbouring reconstructed region of the current coding block.

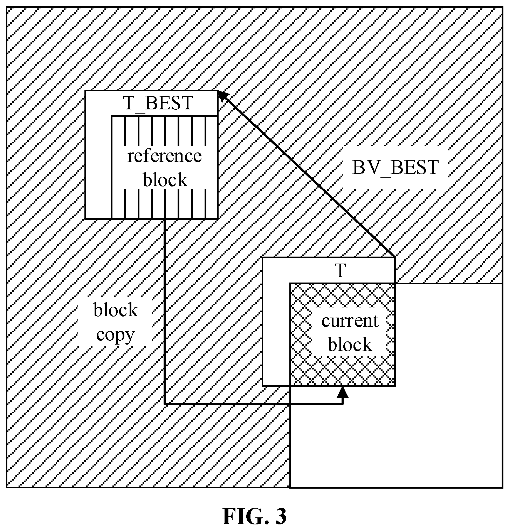

For example, taking a neighbouring reconstructed region of a current block as an example, FIG. 3 is a schematic diagram of prediction in Intra TMP. As illustrated in FIG. 3, a region filled with dark colour represents a reconstructed region, a block filled with grid lines is the current block, and a neighbouring region of the current block is a first template (T); a block filled with diagonal lines is a reference block, and a neighbouring region of the reference block is a second template (that is, a best matching template T_BEST); an offset of the second template relative to the first template is a best block vector (BV_BEST), and at this time, block copy may be performed on the reference block to used as a prediction block for the current block.

In the embodiment of the present disclosure, the preset cost function may be an Sum of Absolute Differences (SAD), Sum of Absolute Transformed Differences (SATD), Mean Square Error (MSE), Sum of Squared Differences (SSD), Mean Absolute Deviation (MAD), Mean Squared Differences (MSD), Normalized Correlation Coefficient (NCC), etc., which is not specifically limited herein.

For example, taking the SAD as an example, the cost function at this time is as follows:

$$\mathrm{SAD}(T_i) = \sum_{m=0}^{M-1} |T_{i,\ m} - T_m|, \ m = 0,\ 1, \dots,\ M-1 \qquad (1)$$

Where $T_i$ is the template in the search process, and M represents the number of samples in the template.

Specifically, in IntraTMP mode, the template type is first acquired, and then the template samples around the current block are acquired accordingly, and the search is performed within the predefined search range.

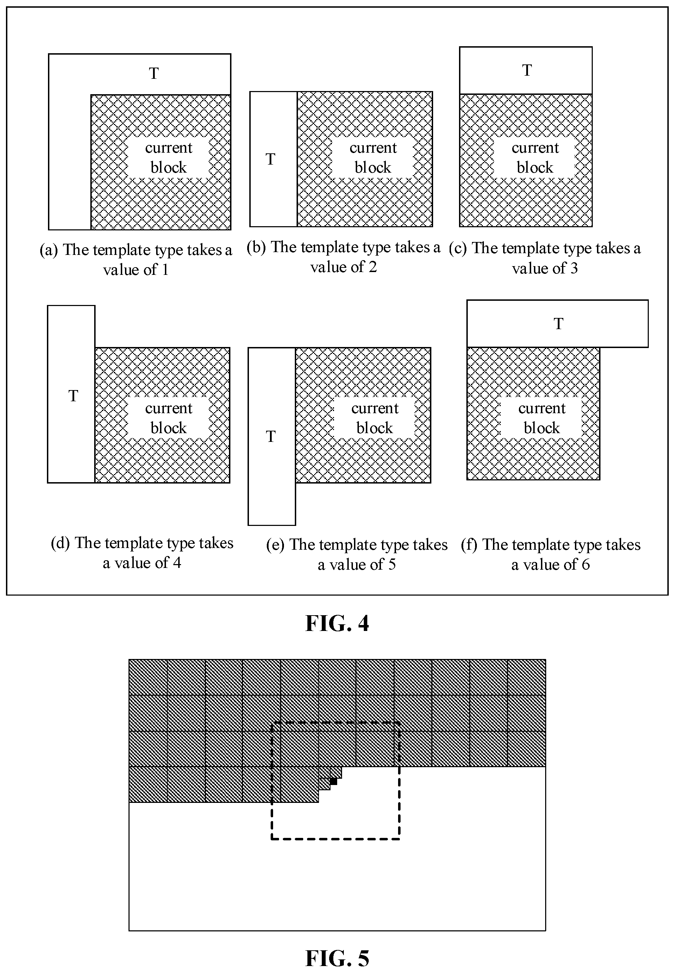

It should also be noted that the template type may be represented by refTemplateType. FIG. 4 is a schematic diagram of template types in an Intra TMP technology. As illustrated in FIG. 4, a block filled with grid lines is a current block, and a neighbouring region of the current block is a template T. Here, six template types are illustrated.

For example, the six template types are as follows.

When the top-left reference samples, the top reference samples, and the left reference samples are all available, the value of refTemplateType is 1, and the template shape is illustrated in (a) of FIG. 3.

When only the left reference samples are available, the value of refTemplateType is 2, and the template shape is illustrated in (b) in FIG. 3.

When only the top reference samples are available, the value of refTemplateType is 3, and the template shape is illustrated in (c) of FIG. 3.

When only the left reference samples and the top-left reference samples are available, the value of refTemplateType is 4, and the template shape is illustrated in (d) of FIG. 3.

When only the left reference samples and the bottom-left reference samples are available, the value of refTemplateType is 5, and the template shape is illustrated in (e) in FIG. 3.

When only the top reference samples and the top-right reference samples are available, the value of refTemplateType is 6, and the template shape is illustrated in (f) in FIG. 3.

It should be noted that in the Intra TMP technology, the search region is the reconstructed part in the current picture, and is limited by the size of the search range.

FIG. 5 is a schematic diagram of the template search region. As illustrated in FIG. 5, the background region filled with dark colour is the reconstructed region, the background block filled with black colour is the current block, and the dashed box is the search range window. Therefore, in the Intra TMP technology, the search region is not larger than the overlapping part of the reconstructed region represented by the dark background and the region marked by the dashed box.

If the final BV is directly determined based on the preset matching criterion, the entry with the minimum cost is the final BV.

If the BV candidate list is constructed based on the preset matching criterion, the list stores multiple BV candidates in ascending order of cost, and then the corresponding syntax element in the bitstream is used to determine which BV candidate or candidates are finally selected. The one or more BV candidates are used as the BV for acquiring initial prediction sample(s).

$$\mathrm{BVL}[0] = \mathrm{BVCandList}[\mathrm{BVIdx}][0]$$

$$\mathrm{BVL}[1] = \mathrm{BVCandList}[\mathrm{BVIdx}][1]$$

In the actual implementation of IBC, there are various ways to acquire BVs, thus, the bitstream may contain the mode information for BV acquisition manner and corresponding parameter information. For example, if the IBC MEGRE mode is acquired from the syntax element, the decoder constructs the MEGRE list, parses the MEGRE list option index, and then acquires the specific information of the BV from the corresponding option in the MEGRE list based on the index. Another example is the normal IBC mode, the decoder acquires specific information of the BV by decoding the value of the syntax element describing the BV or the BV prediction difference value in the bitstream.

IBC mode may be roughly classified into two categories: IBC MEGRE and IBC ABVP. The process of acquiring BV(s) may be regarded as the following three operations:

(1) When deriving BVL, an IBC block vector candidate list BVCandList is required to be constructed;
(2) the selected candidate(s) from the list are then determined based on the bitstream; and

(3) finally, the final BV is determined based on the candidate(s).

The specific information stored for IBC candidate(s) includes at least one of the following information:

i. prediction direction (L0 or L1, general defaulting to L0)
ii. BV information (horizontal component, vertical component)
iii. reference picture (default current picture)
iv. flip type (e.g.: no flip, horizontal flip, or vertical flip)
v. whether to use LIC (linear model)

For the process of constructing candidate list, taking the process of constructing IBC MEGRE list as an example, the basic process of constructing IBC ABVP list is consistent with that for IBC MEGRE, but the maximum number of candidates differs between the two (for example, the length of IBC MEGRE candidate list is defined as 6, and the length of IBC ABVP candidate list is defined as 2).

Operation 1: derivation of spatial candidates:

When a usage condition is satisfied (for example, the size condition IsGt4by4 is equal to TRUE (which is TRUE when the luma width multiplied by the height is greater than 16)), the derivation procedure for spatial block vector candidates from neighbouring coding units, as specified in the decoding standard, is invoked by using the luma coding block position (xCb, yCb), the luma coding block width cbWidth and height cbHeight as inputs, and the outputs are availability flags (such as availableFlagA1 and available FlagB1), and block vectors BVA1 and BVB1.
The availability detection of candidates is as follows. A candidate is considered available if all of the following conditions are satisfied:

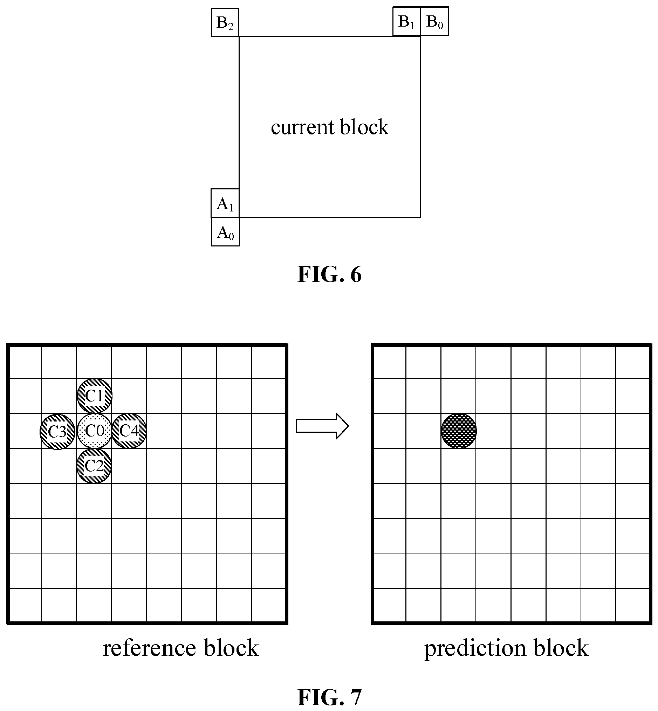

whether the offset position acquired by adding BVP to the current block position does not exceed the Picture boundary;
whether the block position pointed to by adding the BVP to the current block position does not overlap the current block;
whether the offset position acquired by adding BVP to the current block position does not exceed the IBC available region;
whether the block position pointed to by adding the BVP to the current block position has been reconstructed;
herein, A1 and B1 are neighbouring blocks. FIG. 6 is a schematic diagram of neighbouring blocks. As illustrated in FIG. 6, the relative positions of the neighbouring blocks where A1 and B1 are located with respect to the current coding block are the bottom-left and top-right, respectively. The traversal order may be A1-> B1-> B0-> A0-> B2.

Operation 2: adding spatial candidates to the candidate list:

When the usage condition is satisfied (e.g. the size condition IsGt4by4 is equal to TRUE), the block vector candidate list BVCandList is constructed as follows: i = 0if(availableFlagA1)BVCandList[i++] = BVA1if(availableFlagB1) BVCandList[i++] = BVB1

Operation 3: checking the number of available entries in the candidate list:

The process of deriving the variable numCurrCand (the number of candidates that have been acquired currently) is as follows:
if the usage condition is satisfied (for example, the size condition IsGt4by4 is equal to TRUE), numCurrCand is set to be equal to the number of candidates in BVCandList; otherwise, numCurrCand is set to 0.
Operation 4: If the candidate list does not reach the specified number of entries (for example, the number of entries specified in IBC MEGRE mode is 6, and the number of entries specified in IBC ABVP mode is 2), continue the derivation, availability detection and addition of historical candidates:
when numCurrCand is less than MaxNumIbcMEGRECand (the maximum number of candidates in IBC MEGRE mode) and NumHmvpIbcCand (the maximum number of candidates for the historical-based optimal block vector (Hmvp) in IBC mode) is greater than 0, BVCandList and numCurrCand are taken as inputs, and modified BVCandList and numCurrCand are taken as outputs, and the derivation process of history-based IBC block vector candidates, as specified in the decoding standard, is invoked.
Operation 5: continue to check the number of available entries in the candidate list and add other available candidates (such as paired average candidates, zero-value BV candidates, etc.) until the specified number of entries is reached.

In the process of determining the candidate in the selected list based on the bitstream, the index BVIdx of the candidate in the IBV MEGRE mode (general_MEGRE_flag[xCb][yCb] is true) and the IBC ABVP mode (general_MEGRE_flag[xCb][yCb] is false) is derived as follows, the general_MEGRE_flag indicates whether it is in IBC MEGRE mode:

$$BVIdx = general\_MEGRE\_flag[xCb][yCb]?MEGRE\_idx[xCb][yCb]:$$

$$mvp\_l0\_flag[xCb][yCb]$$

In the process of determining the final BV based on the candidate, in the IBC MEGRE mode, the specific BVL may be acquired based on the index BVIdx and the block vector candidate list BVCandList:

$$BVL[0] = BVCandList[BVIdx][0]$$

$$BVL[1] = BVCandList[BVIdx][1]$$

This BVL is the final BV.

In the IBC MBVD mode, similar to MMVD in the inter technology of VVC, a candidate is selected from a candidate point set corresponding to a predefined set of distances and directions, and the block vector corresponding to the selected candidate is used as the final BV.

For example, in IBC MBVD, the distance set is defined as {1-pel, 2-pel, 4-pel, 8-pel, 12 pel, 16 pel, 24 pel, 32 pel, 40 pel, 48 pel, 56 pel, 64 pel, 72 pel, 80 pel, 88 pel, 96 pel, 104 pel, 112 pel, 120 pel, 128 pel}, and the BVD directions are the positive and negative horizontal directions and the positive and negative vertical directions.

The base candidates are selected from the first five candidates in the reordered IBC MEGRE list, and the refinement positions (i.e. 20 × 4 candidates) of part or all of the possible MBVDs for the base candidate are reordered based on the SAD cost between the template and the reference at each refinement position for the base candidate. Finally, the first 8 refinement positions with the minimum template SAD are retained for MBVD index encoding. Candidates of IBC-MBVD do not inherit the flip type from RR-IBC-encoded neighbouring blocks. The MBVD index is binarized by using a Rice code with a parameter equal to 1.

In IBC TM MEGRE mode, after acquiring BVL based on the above information, the BV may be further refined locally by using Template Matching (TM). The specific operation is to search in a small range centered on the acquired BVL, and select the best BV in this range based on the minimum template matching cost as the final BV.

TM refinement is performed on the candidate list of IBC MEGRE mode. A specific implementation process is as follows:

when constructing a candidate, the flip type defaults to no flip; and

In IBC TM MEGRE Mode under the IBC MEGRE mode, the syntax element is transmitted to specify whether to perform TM refinement of integer sample precision. The refinement motion vector and the position of the used template in each refinement operation must comply with the constraints of the reference region.

A search near the pointing position of the candidate is performed, and the SAD size between the template of the reference block and the template of the current block is used to determine the best position.

For the IBC ABVP mode, the BVL acquired based on the index BVIdx and the block vector candidate list BVCandList is the prediction BVL, and the actual BVL further needs to add the Block Vector Difference (BVD).

The final derived BV should be within the specified range (coordinate range in units of rows and columns).

(2) Chroma: the BV of chroma may be derived based on the BV of luma, and then prediction and reconstruction may be performed based on this BV. The process of deriving the BV of chroma based on the BV of luma is as follows:

Input: BVL of luma (1/16 sample precision)
Output: BVC (Block Vector Chroma) of chroma (1/32 sample precision)

The derivation process may be direct scaling, or scaling followed by TM refinement. An example of scaling operation embodiment is as follows: $BVC[0] = ((BVL[0] >> (3+SubWidthC)) \times 32)$ $BVC[1] = ((BVL[1] >> (3+SubHeightC)) \times 32)$

The variables SubWidthC and SubHeightC depend on the chroma format sampling structure specified by sps_chroma_format_idc, and the specific correspondences is as follows:

Table 1. Correspondences between sps_chroma_format_idc and chroma format sampling structure

| sps_chroma_format_idc | Colour sampling format | SubWidthC | SubHeightC |
|---|---|---|---|
| 0 | Monochrome | 1 | 1 |
| 1 | 4:2:0 | 2 | 2 |
| 2 | 4:2:2 | 2 | 1 |
| 3 | 4:4:4 | 1 | 1 |

In operation S2, generating initial prediction values:

Inputs: luma position (xCb, yCb), specifying the top-left sample of the current coding block relative to the top-left luma sample of the current picture; a variable cbWidth, specifying the width of the current coding block in the luma sample; a variable cbHeight, specifying the height of the current coding block in the luma sample; a block vector BV; a variable cIdx, specifying the colour component index of the current block.
Output: An array of prediction samples, predSamples.

An example of the derivation process of directly copying to acquire the prediction block is as follows:
When cIdx is equal to 0, i.e., indicating the luma component, for x = xCb.. xCb+cbWidth-1 and y=yCb..yCb+cbHeight-1: xVb = (x+(BVL[0] >> 4)) & (IbcBufWidthY-1) yVb = (y + (BVL[1] >> 4)) & (CtbSizeY - 1) predSamples[x][y] = ibcVirBuf[0][xVb][yVb]

IbcBufWidthY is a width of a luma sample in the reconstructed buffer stored for IBC, CtbSizeY is the size of the Coding Tree Unit (CTU), and ibcVirBuf is a reconstructed sample stored for the IBC.

When cIdx is not equal to 0, i.e., indicating the chroma component, for x = xCb/SubWidthC..xCb/SubWidthC+cbWidth/subWidthC-1 and y = yCb/SubHeightC.. yCb/SubHeightC+cbHeight/subHeightC-1: xVb=(x + (BVC[0] >> 4)) & (IbcBufWidthC-1) yVb = (y+(BVC[1] >> 4)) & ((CtbSizeY/subHeightC)-1) predSamples[x][y] = ibcVirBuf[cIdx][xVb][yVb].

In operation S3, generating final prediction values:
In the IntraTMP mode, in addition to the basic copying method for acquiring the prediction values, there are also a method of acquiring the prediction values by using the positions corresponding to multiple BVs for fusion, a method of copying after filtering the reference block corresponding to the BV, and a method of performing sub-pixel processing on the BVs to interpolate their corresponding reference blocks and then copy them.

For example, in a region search process at the decoding side, after acquiring the BV candidate list through template matching, the first N entries (for example, N = 3) of the BV candidate list are selected for weighted fusion. This method may be referred to as an IntraTMP Fusion mode.

Alternatively, after acquiring a best BV, multiple points around the BV are selected, and the weighted fusion is performed on prediction values for the multiple points, to acquire the prediction values. This method may be referred to as an IntraTMP FLM mode.

Alternatively, after acquiring a best BV, the template is sorted with sub-pixel precision, to select the best direction and precision, and a prediction value is calculated by using an interpolation filter. This method may be referred to as IntraTMP SubPel mode.

In IBC mode, in addition to the above basic copying method for acquiring the prediction values, there is also a method, in IBC flip mode, where the prediction region is horizontally or vertically flipped before being used as the prediction value. For example, a syntax element indicates whether to flip, and if flipped, whether to flip horizontally or vertically. The decoding side performs horizontal or vertical inverse rearrangement for the reference region samples based on the indication of the syntax, to acquire the prediction sample values of the coding block.

Alternatively, the template is used to establish a model between the current block and the prediction region, and the prediction value of the current block is acquired by processing the prediction block based on the model. For example, IBC LIC mode, applied to IBC MEGRE and IBC ABVP, uses linear equation to compensate for local illumination variations. Similar to the LIC of inter prediction in VVC, the parameters of the linear equation may be represented by a scaling parameter $\alpha$ and an offset parameter $\beta$, i.e., $\alpha \times p[x]+\beta$, to compensate for illumination variation, where p[x] is the reference sample pointed to by the BV at the position x in the current picture. The least squares method is used to derive the linear model parameters.

Based on the above method for acquiring the prediction values, there is also FIBC mode, which establishes a linear model between the template of the reference block corresponding to the BV and the template for the current block, acquires filter coefficients, and then applies the linear filtering model to the current block to acquire a final prediction value. Similar to the IntraTMP Fusion mode, there is also a prediction mode that fuses multiple IBC prediction blocks determined based on the relationships between the multiple prediction blocks and the current block template.

On the basis of the prediction value acquisition above, weighted prediction with other intra prediction manners may be performed, and the result obtained through the weighted prediction may be used as the final prediction result.

The weighted prediction manner includes: a combined inter and intra prediction (CIIP) manner in VVC, that is, at each sample position, the weighted prediction is performed on the results acquired from the above prediction process and the prediction results acquired from the ordinary intra directional prediction mode; the inter geometric prediction mode GPM (Geometric Partitioning Mode) in VVC, that is, based on wedge partitioning, different prediction modes are used in different wedge regions to acquire results, and the weighted fusion complying with certain rules is performed near the wedge partitioning line.

The implementation process of some of the above methods is described in detail below.

In Intra TMP technology, there are different prediction manner for the different prediction mode. For example, in the Intra TMP Fusion technology, after acquiring block vectors BVs for N candidate templates, N candidate reconstructed blocks are acquired through the BVs, and then the weighted fusion is performed on the N candidate reconstructed blocks to acquire a prediction block for the current coding block. Specifically, the final prediction values are generated through the following operations: acquiring N candidate reconstructed blocks, determining weighted fusion weights, and generating the prediction values through weighted fusion.

Herein, when acquiring N candidate reconstructed blocks, block vectors BVs for N candidate templates are acquired, and candidate reconstructed blocks $RefBlock_n$ are directly acquired in the current picture based on $BV_n$, herein, the horizontal offset of $BV_n$ is $pX_n$ and the vertical offset of $BV_n$ is $pY_n$, where n = 0, 1..., N-1.

This is implemented through a simple translation and copying. The specific operation is as follows: for x = 0... nTbW-1, and y = 0... nTbH-1,

$$\mathrm{RefBlock_n[x][y]} = \mathrm{recSamples[x + pX_n][y + pY_n]}$$

Here, recSamples represents the reconstructed samples of the current picture.

When determining the weighted fusion weights, after acquiring the N candidate reconstructed blocks RefBlock, the weighted fusion weights W for the N candidate reconstructed blocks are required to be calculated. The weights may be predefined determination values, or may be values adaptively calculated by using cost values, sample values, or the like.

In an embodiment of the Intra TMP Fusion technology, the weighted fusion weights are derived by minimizing the MSE between the reconstructed values of the candidate template ($refT_n$) and the sample values of the template ($refpredT_n$) to be predicted.

Specifically, the MSE minimization process takes the autocorrelation matrix of the first P matching reference samples refT, the cross-correlation vector between the first P matching reference samples refT and the neighbouring template samples curT of the current coding block as inputs, and outputs the weight of the reconstructed block for each matching reference entry.

When generating prediction values through weighted fusion, a prediction block is calculated based on each candidate reconstructed blocks and a weighted fusion weight for the each candidate reconstructed block. Specifically, the value of each candidate reconstructed block is multiplied by its corresponding weight, and then a sum operation is performed to acquire the current prediction block (i.e., weighted prediction).

For x = 0... nTbW-1 and y = 0... nTbH-1, the prediction values are calculated as follows:

$$\mathrm{predSamples}_{x,\ y} = \sum_{p=0}^{P-1} w_{p,\ x,\ y} * RefBlock_{p,\ x,\ y} \qquad (2)$$

Each prediction value $predSamples_{x,\ y}$ is stored spatially, to generate the output prediction block for Intra TMP Fusion.

In IntraTMP FLM mode, a linear filtering model is established by using the best matching template acquired from the previous search process and the template of the current coding block. It mainly includes the following two processes: determining the reconstructed region for calculating the filter coefficients, and calculating the filter coefficients. The specific prediction value calculation process is as follows.

FIG. 7 is a schematic diagram of TM-FLM prediction. As illustrated in FIG. 7, assuming that the number of filter taps, nTap, is 5, the shape of the filter is as illustrated in the left figure, $c_0$ to $c_4$ are respective tap coefficients of the filter, and a corresponding point of the tap coefficient $C_0$ is the reconstructed sample *ref*[i][j] at the corresponding position of the current sample to be predicted, $Y^{pred}[i]$ [j], in the best matching block; the remaining points are reconstructed samples, neighbouring to the current spatial position, in the best matching reconstructed block. The point in the right figure is the acquired prediction sample $Y^{pred}[i][j]$.

The specific prediction value calculation process is as follows.

For each current sample (i, j) to be predicted, a sample position in the filter template is defined as (k, 1), then the corresponding reconstructed sample in the best matching block during filtering is defined as ref[i + k][j + l], and each filter coefficient at the position (k, 1) in the filter template is defined as

$$c_{k, 1}: c_{k, 1} = c_n \qquad (3)$$

Where n = 0,..., nTap - 1, k and l are between -1 and 1.

For i = 0,..., nTbW-1, and j = 0,..., nTbH-1: $Y^{pred}[i][j] = \Sigma_k \Sigma_l ref[i + k][j + l] \times C_{k, l}$ (4)

The final prediction sample is: $predSamples[i][j] = Clip3(0, (1 \ll BitDepth) - 1, Y^{pred}[i][j])$ (5)

$$\text{Herein, } Clip3(x, y, z) = \begin{cases} x\,; z < x \\ y\,; z > y \\ z\,; otherwise \end{cases} \qquad (6)$$

In Intra TMP SubPel mode, for the best BV, the 1/4, 1/2, 3/4, as well as the eight directions of top, bottom, left, right, top-left, top-right, bottom-left, and bottom-right, are traversed. A sort is performed based on template cost; and for the reference block corresponding to the BV with the minimum template cost, an interpolation filter is used to calculate the prediction values.

In the IBC technology, in the IBC flip mode, an acquisition method is needed, which the prediction region is horizontally or vertically flipped before being used as the prediction value. For example, a syntax element indicates whether to flip, and if flipped, whether to flip horizontally or vertically. The decoding side performs horizontal or vertical inverse rearrangement for the reference region samples based on the indication of the syntax, to acquire the prediction sample values of the coding block.

In the IBC LIC mode, the template is used to establish a model between the current block and the prediction region, and the prediction value of the current block is acquired by processing the prediction block based on the model. IBC LIC mode, applied to IBC MEGRE and IBC ABVP, uses linear equation to compensate for local illumination variations. Same to the LIC of inter prediction in VVC, the parameters of the linear equation may be represented by a scaling parameter $\alpha$ and an offset parameter $\beta$, i.e., $\alpha \times p[x] + \beta$, to compensate for illumination variation, where p[x] is the reference sample pointed to by the BV at the position x in the current picture. The least squares method is used to derive the linear model parameters.

In the filter IBC mode, a linear model is established by using the template of the current block and the template of the reference block corresponding to the BV, and the filter coefficients are acquired and used for the current block, to acquire the final prediction value.

The specific prediction value calculation process is as follows.

For each current sample (i, j) to be predicted, a sample position in the filter template is defined as (k, l), then the corresponding reconstructed sample in the best matching block during filtering is defined as ref[i + k][j + l], and each filter coefficient at the position (k, l) in the filter template is defined as

$$c_{k, 1}: c_{k, 1} = c_n \qquad (3)$$

Where n = 0,..., nTap - 1, k and l are between -1 and 1.

For

$$i = 0,..., \text{nTbW-1, and } j = 0,..., \text{nTbH-1}: \qquad (4)$$

The final prediction sample is: $predSamples[i][j] = Clip3(0, (1 \ll BitDepth) - 1, Y^{pred}[i][j])$ (5)

On the basis of the prediction value acquisition above, weighted prediction with other intra prediction manners may be performed, and the result obtained through the weighted prediction may be used as the final prediction result.

The weighted prediction manner includes: a combined inter and intra prediction (CIIP) manner in VVC, that is, at each sample position, the weighted prediction is performed on the results acquired from the above prediction process and the prediction results acquired from the ordinary intra directional prediction mode; the inter geometric prediction mode GPM (Geometric Partitioning Mode) in VVC, that is, based on wedge partitioning, different prediction modes are used in different wedge regions to acquire results, and the weighted fusion complying with certain rules is performed near the wedge partitioning line.

An example of the operation process in the BV-based CIIP mode is that: weighted fusion for the BV-based prediction value for the current block and the prediction value in a certain intra mode is performed, and the BV-based prediction part may be acquired by adopting traditional MEGRE, TM MEGRE, MBVD, and ABVP modes.

For the case where the BV-based prediction parts adopts different modes, different weights may be set. For example, when the BV-based prediction part adopts the traditional IBC MEGRE, TM MEGRE and MBVD modes, the weight ratio of the BV-based prediction and the intra prediction is 13: 3, the intra mode includes the TIMD (Template-based Intra Mode Derivation) mode of the current block and the intra prediction mode at the candidate BV position, if the second prediction mode and the first prediction mode in the intra mode are the same, it is determined whether the first prediction mode is the PLANAR mode, if yes, the second prediction mode is replaced with the horizontal prediction mode; otherwise, the second prediction mode is replaced with the PLANAR mode. When the BV-based prediction part adopts an ABVP mode, a weight ratio of the BV-based prediction and the intra prediction is 1: 1, the TIMD mode is obtained as the first prediction mode for the intra prediction mode. If the derived prediction mode is the horizontal prediction mode, the PLANAR mode is obtained as the second prediction mode for the intra prediction mode; otherwise, the horizontal prediction mode is obtained as the second prediction mode for the intra prediction mode.

An example of the operation process in the BV-based GPM mode: the BV-based prediction part may adopt traditional MEGRE and TM MEGRE.

For example, one partition is BV-based prediction mode and one partition is INTRA mode may be implemented, an intra prediction mode (IPM) candidate list is constructed by using the same method as inter GPM, and the IPM candidate list size is predefined as 3.

In specific implementation, a total of 48 geometric partitioning modes may be classified into two geometric partitioning mode sets:

Table 2: First set of geometric partitioning modes

| ibc_gpm_partition_idx | 0 | 1 | 2 | 3 | 4 | 5 | 6 | 7 |
|---|---|---|---|---|---|---|---|---|
| angleIdx | 0 | 0 | 8 | 8 | 16 | 16 | 24 | 24 |
| distanceIdx | 1 | 3 | 1 | 3 | 1 | 3 | 1 | 3 |

Table 3: Second set of geometric partitioning modes

| ibc_gpm_partition_idx | 0 | 1 | 2 | 3 | 4 | 5 | 6 | 7 | 8 | 9 |
|---|---|---|---|---|---|---|---|---|---|---|
| angleIdx | 2 | 2 | 2 | 3 | 3 | 3 | 4 | 4 | 4 | 5 |
| distanceIdx | 0 | 1 | 3 | 0 | 1 | 3 | 0 | 1 | 3 | 0 |
| ibc_gpm_partition_idx | 10 | 11 | 12 | 13 | 14 | 15 | 16 | 17 | 18 | 19 |
| angleIdx | 5 | 5 | 11 | 11 | 11 | 12 | 12 | 12 | 13 | 13 |
| distanceIdx | 1 | 3 | 0 | 1 | 3 | 0 | 1 | 3 | 0 | 1 |
| ibc_gpm_partition_idx | 20 | 21 | 22 | 23 | 24 | 25 | 26 | 27 | 28 | 29 |
| angleIdx | 13 | 14 | 14 | 14 | 18 | 18 | 19 | 19 | 20 | 20 |
| distanceIdx | 3 | 0 | 1 | 3 | 1 | 3 | 1 | 3 | 1 | 3 |
| ibc_gpm_partition_idx | 30 | 31 | 32 | 33 | 34 | 35 | 36 | 37 | 38 | 39 |
| angleIdx | 21 | 21 | 27 | 27 | 28 | 28 | 29 | 29 | 30 | 30 |
| distanceIdx | 1 | 3 | 1 | 3 | 1 | 3 | 1 | 3 | 1 | 3 |

When using a BV-based GPM, a flag for geometric partitioning mode sets of a BV-based GPM (e.g., IBC-GPM) is transmitted to indicate whether a first set or second set of geometric partitioning modes is selected, and then a geometric partitioning mode index is transmitted; a partition flag for the picture in the BV-based GPM (or IBC-GPM) is transmitted to indicate whether intra prediction is used for the first sub-partition. Herein, for the intra prediction part, an intra prediction mode index is required to be transmitted; and for the IBC prediction part, the MEGRE index is required to be transmitted.

In operation S4, performing intra prediction mode mapping:
The final prediction values are taken as input, the vertical gradient and horizontal gradient of all prediction samples are calculated, and the direction with the maximum gradient is mapped into a traditional intra prediction mode.

This manner is similar to the existing DIMD technology, that is, the method of deriving the dominant prediction direction by using the gradient information between samples in a block.

One achievable manner is to calculate the horizontal and vertical gradients of BV-based final prediction values through the Sobel operator. The Sobel operator formula is shown below, where $G\_x$ is used to calculate the horizontal gradient, and G_y is used to calculate the vertical gradient.

$$G_x = \begin{bmatrix} -1 & 0 & 1 \\ -2 & 0 & 2 \\ -1 & 0 & 1 \end{bmatrix} \text{ and } G_y = \begin{bmatrix} -1 & -2 & -1 \\ 0 & 0 & 0 \\ 1 & 2 & 1 \end{bmatrix}$$

The detailed process of deriving the traditional intra prediction mode from the BV-based prediction values by using Sobel for gradient analysis is described below.

The input of this process is the prediction values p[x][y] in the BV-based prediction mode, where x = 0.. nTbW-1, and y = 0.. nTbH-1. Here, nTbW represents the width of the current transform block acquired through BV-based prediction, and nTbH represents the height of the current transform block acquired through BV-based prediction.

The output of this process is the traditional intra prediction mode IntraPredModeD, where IntraPredModeD is between [0, 66].

mapHgV = {{2, 1}, {1, 2}} and mapVgH = {{3, 4}, {4, 3}} are set.

angTable = {0, 2048, 4096, 6144, 8192, 12288, 16384, 20480, 24576, 28672, 32768, 36864, 40960, 47104, 53248, 59392, 65536} is set.

angOffset = {18, 18, 50, 50} is set.

HoG[67] is set to an array including the gradient strength of each traditional intra prediction mode. At the beginning of this process, all values in all HOG arrays are initialized to 0.

For each prediction sample p[x][y], with x=1...nTbW-2 and y=1...nTbH-2, the calculation process is as follows.

The horizontal gradient gHor[x][y]=p[x-1][y-1]+2p[x-1][y]+p[x-1][y+1]-p[x+1][y-1]-2p[x+1][y]-p[x+1][y+1] is calculated.

The vertical gradient gVer[x][y]=p[x-1][y-1]+2p[x][y-1]+p[x+1][y-1]-p[x-1][y+1]-2p[x][y+1]-p[x+1][y+1] is calculated.

$$iAmp[x][y] = abs(gHor[x][y]) + abs(gVer[x][y])$$

is calculated.

$$signH[x][y] = gHor[x][y] < 0?\ 1 : 0$$

is calculated.

$$signV[x][y] = gVer[x][y] < 0?\ 1 : 0$$

is calculated.

$$HgV[x][y] = (abs(gHor[x][y]) > abs(gVer[x][y])?\ 1: 0)$$

is calculated.

$$region[x][y] = (HgV[x][y] == 1?\ mapHgV[signH[x][y]][signV[x][y]]:$$

$$mapVgH[signH[x][y]][signV[x][y]])$$

is calculated.

grad[x][y]=(HgV[x][y]==1? abs(gVer[x][y])/abs(gHor[x][y]): abs(gVer[x][y])/abs(gHor[x][y]) is calculated.

$$grad[x][y] = round(grad[x][y] \times (1<<16))$$

is calculated.

The index angIdx[x][y] = argmin_i(abs(angTable[i]-grad[x][y])) is calculated.

The intra mode ipm[x][y]=angOffset[region[x][y]]+angIdx[x][y] is calculated.

$$HOG[ipm[x][y]]=HOG[ipm[x][y]]+iAmp[x][y]$$

is set.

If the HOG has no non-zero amplitude:

IntraPredModeD is set to PLANAR

Otherwise:

$$\text{IntraPredModeD is set to } \text{argmax}_i(\text{HoG}[i])$$

Here, $\text{argmax}_i(L[i])$, where $i = 0,..., N$, returns an index between 0 and N that maximizes L (if there are multiple maximums, the smaller index is returned). $\text{argmin}_i(L[i])$, where $i = 0,..., N$, returns an index between 0 and N that minimizes L (if there are multiple maximums, the smaller index is returned).

Finally, IntraPredModeD is mapped to predModeIntra.

In operation S5, determining a transform block matrix:

The operation of determining the transform matrix includes three steps: determining the transform set, determining the transform matrix group, and determining the transform matrix size.

When determining the transform set, the mapped intra prediction mode predModeIntra may be used for performing a selection among four transform sets (set0, set1, set2, set3), to determine the corresponding transform set, as shown in the following table.

Table 4. LFNST Transform Set Selection

| predModeIntra | SetIdx |
|---|---|
| predModeIntra < 0 | 1 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 80 | 1 |

When determining the transform matrix group, which of the two of transform matrix groups in the transform set is selected is determined based on lfnst_idx transmitted from the encoding side. The first transform matrix group is selected when lfnst_idx is 1, and the second transform matrix group is selected when lfnst_idx is 2.

When selecting the transform matrix size, each transform matrix group includes two base transform matrix sizes, and the base transform matrix sizes used at the decoding side are $16 \times 16$ and $48 \times 16$. The selection is performed based on nLfnstOutSzie; if nLfnstOutSzie is 16, a base transform matrix of $16 \times 16$ is selected; and if nLfnstOutSzie is 48, a base transform matrix of $48 \times 16$ is selected. When nonZeroSize is 8, only the first 8 rows of the transform matrix are used for matrix multiplication calculation.

Here, nLfnstOutSzie may be used to represent the length of the primary transform coefficient vector.

In operation S6, performing inverse secondary transform:

The inverse secondary transform coefficient vector u[i], i = 0... nonZeroSize-1 is taken as input, and then multiplies by the transform matrix to acquire the inverse primary transform coefficient vector v[j], j = 0... nLfnstOutSze-1.

In operation S7, performing inverse primary transform:

A two-dimensional inverse primary transform coefficient matrix d'[x][y] (herein, x = 0... nLfnstSize-1, and y = 0... nLfnstSize-1) of the current transform block is constructed by using a one-dimensional inverse primary transform coefficient vector v[j], herein, j = 0... nLfnstOutSzie-1. Depending on the intra prediction mode, there are two scanning orders for filling: horizontal scanning mode and vertical scanning mode. Then, the inverse primary transform is performed by using the inverse primary transform coefficient matrix, to generate the prediction residual.

In operation S8, generating reconstructed values:

The picture reconstruction process for the specified colour component specified in the decoding standard is invoked. In order to implement the reconstruction operation, for the mode with residuals, a sum operation for the prediction signal and the residual signal is required to be performed.

Common BV-based prediction technologies, such as Intra TMP technology or IBC technology, use the best matching reconstructed block (Ref Block) as the prediction block for the current coding block (Cur Block), and use Decoder-side Intra Mode Derivation (DIMD) technology to derive the intra direction prediction mode on the basis of the final generated prediction block, to determine the LFNST transform set. Herein, when acquiring the prediction value in the BV-based prediction mode, sub-pixel processing, filtering or fusion processing is often required, and the processed values are used to derive the LFNST transform set.

However, the processed prediction value acquired after data processing such as sub-pixel processing or filtering or fusion processing may lose part of the texture edge information. Consequently, the most accurate prediction direction cannot be acquired in the subsequent derivation process, which affects the accuracy of the subsequent LFNST transform set derivation to a certain extent, that is, the derived LFNST transform set may not necessarily be the best match, result in a reduced encoding and decoding performance.

Further, at the decoder side, the residual is inversely quantized, subjected to the LFNST inverse transform guided by the direction derived from the DIMD, and then is added to the prediction value to generate a reconstructed value. This leads to the fact that after generating the prediction value, it is required to wait for the direction derived by DIMD to perform inverse LFNST transform, perform another inverse transform, and then send it to the reconstructed value generation module together, result in a long critical path and low efficiency. That is to say, the prediction process of sequentially performing prediction block processing, LFNST transform set derivation and inverse transform processing also has the problem of high complexity, which reduces the encoding and decoding efficiency.

It can be seen that the common BV-based prediction technologies have the problems of low efficiency and poor performance of encoding and decoding.

In order to solve the above problems, embodiments of the present disclosure proposes an encoding method, a decoding method, a bitstream, an encoder, a decoder, and a storage medium. Herein, the encoder/decoder determines a prediction parameter for a current block; determines a first reference block for the current block based on the prediction parameter for the current block; determines a first transform parameter for the current block based on the first reference block for the current block; determines a prediction block for the current block based on the first reference block for the current block; and determines a reconstructed block for the current block based on the prediction block and the first transform parameter for the current block. That is, in the embodiment of the present disclosure, after determining the first reference block for the current block based on the prediction parameter, it can select to directly use the first reference block before data processing to determine the transform parameter for the current block, and then use the determined transform parameter in combination with the prediction block for the current block acquired after data processing of the first reference block, to complete the reconstruction of the current block. Herein, the data processing process may, to a certain extent, result in the loss of the texture edge information of the prediction block; and thus, compared with the final prediction values after data processing (i.e., the prediction block), the initial prediction values before data processing (i.e., the first reference block) has richer texture edge information. By using the first reference block to derive the prediction direction, it can acquire more accurate transform parameters, thereby effectively improving the encoding and decoding performance. Meanwhile, after determining the first reference block directly indicated by the prediction parameter, the operations of generating the prediction block, generating the transform parameter and the residual can be performed in parallel, which shortens the length of critical path for encoding and decoding, and solves the problem of high complexity, thereby improving encoding and decoding efficiency. Therefore, the encoding and decoding method proposed in the embodiments of the present disclosure can improve encoding and decoding efficiency and performance.

Hereinafter, embodiments of the present disclosure will be described in detail with reference to the accompanying drawings.

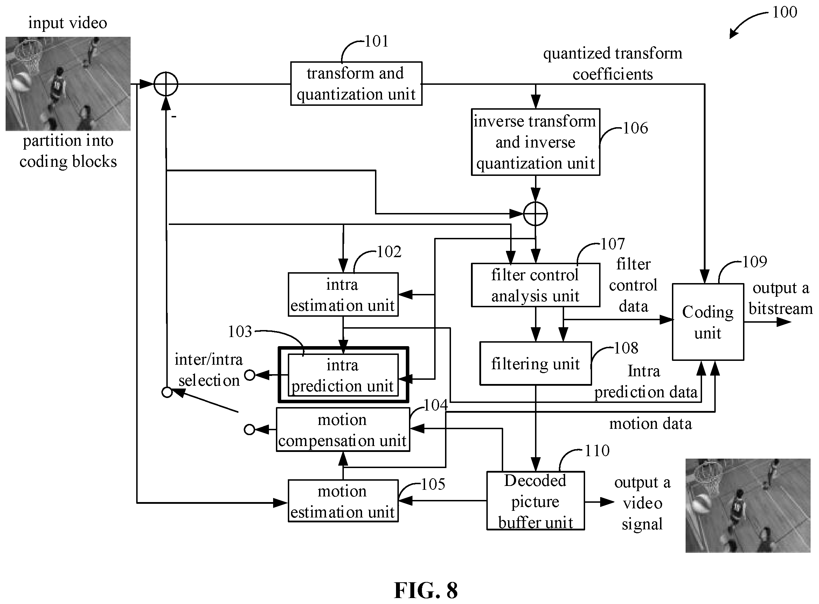

With reference to FIG. 8, a schematic block diagram of a composition of an encoder according to an embodiment of the present disclosure is illustrated. As shown in FIG. 8, the encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control analysis unit 107, a filtering unit 108, a coding unit 109, and a decoded picture buffer unit 110, etc. The filtering unit 108 may implement de-blocking filtering and Sample Adaptive Offset (SAO) filtering, and the coding unit 109 may implement header information encoding and Context-based Adaptive Binary Arithmetic Coding (CABAC). For an input original video signal, a video coding block may be obtained through partition of a Coding Tree Unit (CTU), and then residual sample information obtained after intra or inter prediction is processed through the transform and quantization unit 101 to perform the transformation of the video coding block, which includes transforming the residual information from a sample domain to a transform domain, and quantizing the obtained transform coefficients, to further reduce a bit rate. The intra estimation unit 102 and the intra prediction unit 103 are configured to perform intra prediction on the video coding block. Specifically, the intra estimation unit 102 and the intra prediction unit 103 are configured to determine an intra prediction mode to be used to encode the video coding block. The motion compensation unit 104 and the motion estimation unit 105 are configured to perform inter prediction encoding of the received video coding block relative to one or more blocks in one or more reference pictures, to provide temporal prediction information. Motion estimation performed by the motion estimation unit 105 is a process of generating a Motion Vector (MV), the motion vector may be used to estimate motion of the video coding block.

Then motion compensation is performed by the motion compensation unit 104 based on the motion vector determined by the motion estimation unit 105. After determining the intra prediction mode, the intra prediction unit 103 is further configured to provide the selected intra prediction data to the coding unit 109, and the motion estimation unit 105 also sends the calculated motion vector data to the coding unit 109. Furthermore, the inverse transform and inverse quantization unit 106 is configured to reconstruct the video coding block and reconstruct a residual block in the sample domain, blocking artifacts are removed from the reconstructed residual block by the filter control analysis unit 107 and the filtering unit 108, and then the reconstructed residual block is added to a prediction block in a picture of the decoded picture buffer unit 110, to generate a reconstructed video coding block. The coding unit 109 is configured to encode various encoding parameters and quantized transform coefficients. In a CABAC-based encoding algorithm, a context content may be based on neighbouring coding blocks, and may be used to encode information indicating the determined intra prediction mode and output a bitstream of the video signal. The decoded picture buffer unit 110 is configured to store the reconstructed video coding block for reference of prediction. As encoding of the video picture proceeds, new reconstructed video coding blocks may be generated continuously, and these reconstructed video coding blocks may be stored in the decoded picture buffer unit 110.

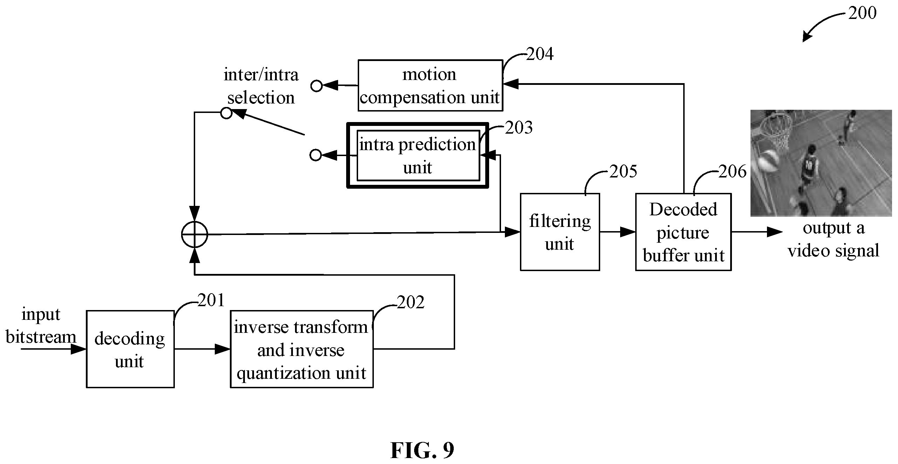

With reference to FIG. 9, a schematic block diagram of a composition of a decoder according to an embodiment of the disclosure is illustrated. As illustrated in FIG. 9, the decoder (specifically, a "video decoder") 200 includes a decoding unit 201, an inverse transform and inverse quantization unit 202, an intra prediction unit 203, a motion compensation unit 204, a filtering unit 205, and a decoded picture buffer unit 206, etc. The decoding unit 201 may implement header information decoding and CABAC decoding, and the filtering unit 205 may implement de-blocking filtering and SAO filtering. After the input video signal is encoded through the processes of FIG. 8, a bitstream of the video signal is output. The bitstream is input to the decoder 30, and passes through the decoding unit 201 first to obtain the decoded transform coefficients. The transform coefficients are processed by the inverse transform and inverse quantization unit 202, to generate a residual block in the sample domain. The intra prediction unit 203 may be configured to generate prediction data for a current video coding block based on the determined intra prediction mode and data from a previously decoded block of the current frame or picture. The motion compensation unit 204 is configured to determine prediction information for the video coding block by analyzing the motion vector and other associated syntax elements, and use the prediction information to generate a prediction block for the video coding block being decoded. A decoded video block is formed by summing the residual block from the inverse transform and inverse quantization unit 202 and the corresponding prediction block generated by the intra prediction unit 203 or the motion compensation unit 204. The decoded video signal passes through the filtering unit 205 to remove blocking artifacts therefrom, which can improve video quality. Then the decoded video block is stored in the decoded picture buffer unit 206, the decoded picture buffer unit 206 stores reference pictures used for subsequent intra prediction or motion compensation, and is also used for outputting the video signal, that is, the restored original video signal is obtained.

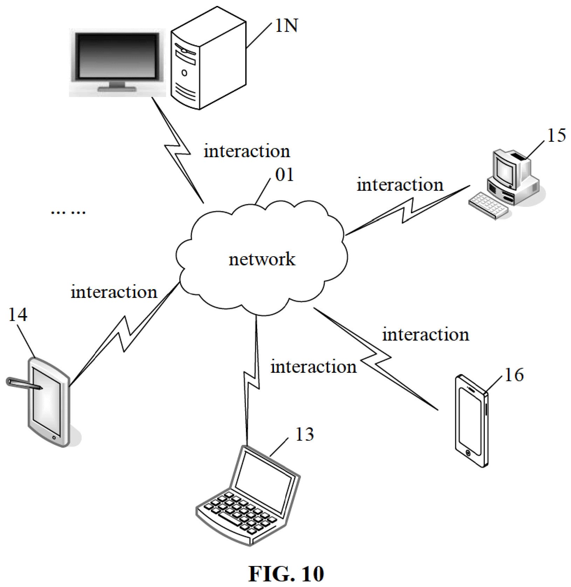

Further, an embodiment of the disclosure further provides a network architecture of an encoding and decoding system including an encoder and a decoder, here FIG. 10 illustrates a schematic diagram of a network architecture of an encoding and decoding system according to an embodiment of the disclosure. As illustrated in FIG. 10, the network architecture includes one or more electronic devices 13 to 1N and a communication network 01. Here, the electronic devices 13 to 1N may perform video interaction through the communication network 01. The electronic devices may be various types of devices with video encoding and decoding functions during implementation. For example, the electronic devices may include a smart phone, a tablet computer, a personal computer, a personal digital assistant, a navigator, a digital phone, a video phone, a television, a sensor device, a server, or the like, which is not specifically limited in the embodiments of the present disclosure. Here, the decoder or the encoder described in the embodiments of the disclosure may be the above electronic devices.

It should be noted that methods of the embodiments of the present disclosure are mainly applied to the intra prediction unit 103 illustrated in FIG. 8 and the intra prediction unit 203 illustrated in FIG. 9. That is, the embodiments of the present disclosure may be applied to the encoder, or may be applied to the decoder, or may even be applied to both the encoder and the decoder, which is not specifically limited in the embodiments of the present disclosure.

It should also be noted that when the methods are applied to the intra prediction unit 103, "current block" specifically refers to a coding block for which the intra prediction is to be preformed currently; when the methods are applied to the intra prediction unit 203, "current block" specifically refers to a decoding block for which the intra prediction is to be performed currently.

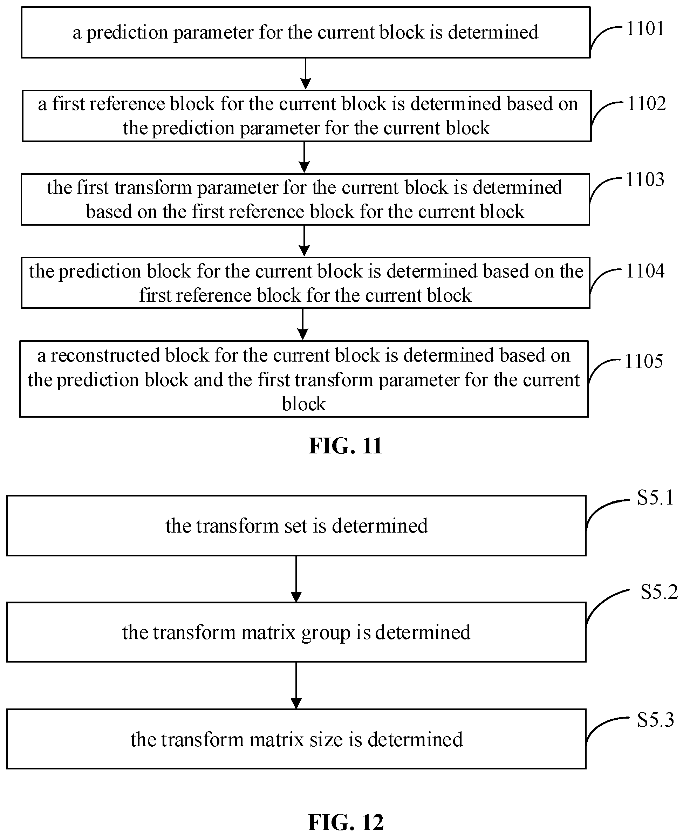

An embodiment of the present disclosure proposes a decoding method, the decoding method is applied to a decoder. FIG. 11 is a schematic flowchart of a decoding method according to an embodiment of the disclosure. As illustrated in FIG. 11, the method for the decoder to perform a decoding process may include the following operations 1101 to 1105.

In operation 1101, a prediction parameter for the current block is determined.

In an embodiment of the present disclosure, the prediction parameter for the current block may be determined first.

It should be noted that the decoding method according to the embodiment of the present disclosure is applied to a decoder. Furthermore, the decoding method may include an intra prediction method, more specifically, a colour component prediction method. A video picture may be partitioned into multiple coding blocks, each coding block may include a first colour component, a second colour component and a third colour component. The current block in the embodiment of the present disclosure refers to a coding block, for which the intra prediction is to be performed currently, in the video picture.

Here, when the first colour component needs to be predicted, a to-be-predicted component is the first colour component; when the second colour component needs to be predicted, the to-be-predicted component is the second colour component; when the third colour component needs to be predicted, the to-be-predicted component is the third colour component. Furthermore, assuming that the first colour component is predicted for the current block, and the first colour component is a luma component, that is, the to-be-predicted component is the luma component, the current block may also be referred to as a luma block. Alternatively, assuming that the second colour component is predicted for the current block, and the second colour component is a chroma component, that is, the to-be-predicted component is the chroma component, the current block may also be referred to as a chroma block.

It should be noted that in an embodiment of the present disclosure, the prediction parameter for the current block may include a block vector of the current block.

It should be noted that in the embodiment of the present disclosure, the first reference block and the current block are in the same picture. Correspondingly, the block vector represents the positional offset between the current block and the first reference block.

It should be understood that in the embodiment of the present disclosure, for the intra prediction mode, the first reference block for the current block may be determined based on the block vector of the current block.

It should be noted that in the embodiment of the present disclosure, the prediction parameter for the current block may include a motion vector of the current block and a reference picture index.

It should be noted that in the embodiment of the present disclosure, the first reference block is located in the reference picture indicated by the reference picture index. Correspondingly, the motion vector represents the positional offset between the current block and the first reference block.

It should be understood that in the embodiment of the present disclosure, for the inter prediction mode, the first reference block for the current block may be determined based on the motion vector of the current block.

It should be noted that in the embodiment of the present disclosure, the prediction parameter for the current block takes the block vector (BV) as an example, and the transform manner takes the LFNST as an example to illustrate the decoding method proposed in the embodiment of the present disclosure.

Further, in the embodiment of the present disclosure, when determining the block vector of the current block, the first template for the current block may be determined first, and the preset search region may be determined; the block vector of the current block is determined by performing a search in a preset search region.

Further, in the embodiment of the present disclosure, when determining the block vector of the current block, the first template for the current block may be determined first, and the preset search region may be determined; a search is performed in a preset search region, and a block vector candidate list for the current block is constructed; and the block vector of the current block is determined based on the block vector candidate list.

Further, in the embodiment of the present disclosure, when determining the block vector of the current block, the block vectors of the neighbouring blocks for the current block may be determined first; a block vector candidate list for the current block is constructed based on the block vectors of the neighbouring blocks; and the block vector of the current block is determined based on the block vector candidate list.

For example, in some embodiments, in the IntraTMP mode, when acquiring the first template, the template type for the current block may be determined first, and then the first template for the current block may be further determined based on the template type. Herein, the template type for the current block may be determined based on the indication information in the bitstream; the template type for the current block may also be determined based on the size of the current block; or, the template type for the current block may also be determined based on the reference samples of the current block.

It may be understood that in the embodiment of the present disclosure, the reference samples of the current block may include neighbouring reconstructed samples of the current block, that is, the neighbouring reconstructed samples of the current block may be selected and used as a template to search for a matching template within a predefined search region.

It should be noted that in the embodiment of the present disclosure, the reference samples of the current block, that is, the neighbouring reconstructed samples of the current block may include top reference samples, top-left reference samples, top-right reference samples, left reference samples, and bottom-left reference samples of the current block.

It may be understood that in the embodiment of the present disclosure, when determining the template type for the current block by using the reference samples of the current block, the template type may be classified and determined based on the availability of neighbouring reference samples.

That is, in the embodiment of the present disclosure, the template type may be determined based on the availability information of the reference samples of the current block, the template type may also be determined based on the information indicated in the bitstream; or, the template type may also be determined based on the availability information of the reference samples and the information indicated in the bitstream, which is not specifically limited in the present disclosure.

It should be noted that in the embodiment of the present disclosure, when determining the first template for the current block based on the template type, the template reference samples of the current block may be first determined based on the template type and the template size corresponding to the template type, and then the first template for the current block may be determined based on the template reference samples.

It should be noted that in the embodiment of the present disclosure, the template size corresponding to the template type may be preset, may be indicated by a syntax element in a bitstream, or may be adaptively selected based on the block size or other information. For example, when acquiring the left template, the template width templateW_size may be set to 4; and when acquiring the top template, the template height templateH_size may be set to 4.

It should be noted that in the embodiment of the present disclosure, a search process for the block vector may include the following operations: an initialization process; determining a search region (preset search region) for the first template in the current picture, and searching in the search region to determine one or more best block vectors.

It should be noted that in the embodiment of the present disclosure, as illustrated in FIG. 3, a region filled with dark colour represents a reconstructed region, a block filled with grid lines is the current block, and a neighbouring region of the current block is a first template (T); a block filled with diagonal lines is a reference block, and a neighbouring region of the reference block is a second template (that is, a best matching template T_BEST); an offset of the second template relative to the first template is a best block vector (BV_BEST).

In the embodiment of the present disclosure, the preset cost function may be an Sum of Absolute Differences (SAD), Sum of Absolute Transformed Differences (SATD), Mean Square Error (MSE), Sum of Squared Differences (SSD), Mean Absolute Deviation (MAD), Mean Squared Differences (MSD), Normalized Correlation Coefficient (NCC), etc., which is not specifically limited herein.

It should be noted that in the embodiment of the present disclosure, the matching cost values between the matching templates corresponding to the search points in the preset search region and the first template are determined based on the preset matching criterion; then, one or more block vectors are determined based on the matching cost values. Herein, for multiple block vectors, a BV candidate list may be constructed, and the list stores multiple BV candidates in ascending order of cost, and then, which BV candidate or BV candidates is/are finally selected is determined based on the corresponding syntax elements in the bitstream.

For example, in some embodiments, in the IBC mode, there are various ways to acquire BVs, thus, the bitstream may contain the mode information for BV acquisition manner and corresponding parameter information. For example, if the IBC MEGRE mode is acquired from the syntax element, the decoder constructs the MEGRE list, parses the MEGRE list option index, and then acquires the specific information of the BV from the corresponding option in the MEGRE list based on the index. Another example is the normal IBC mode, the decoder acquires specific information of the BV by decoding the value of the syntax element describing the BV or the BV prediction difference value in the bitstream.

For example, in some embodiments, in the IBC mode, the specific process of deriving the BV is as follows:

(1) Luma:

Inputs: luma position (xCb, yCb), specifying the top-left sample of the current coding block relative to the top-left luma sample of the current picture; a variable cbWidth, specifying the width of the current coding block in the luma sample; and a variable cbHeight, specifying the height of the current coding block in the luma sample.

Output: block vector of luma, BVL (Block Vector Luma).

IBC mode is classified into IBCMEGRE and IBCAMVP (Advanced Motion Vector Prediction). When deriving BVL, it is required to construct an IBC block vector candidate list BVCandList. The process of constructing the list for IBC MEGRE is described below. The process of constructing the list for IBCAMVP is consistent with the process of constructing the list for IBCMEGRE, but the maximum number of candidates for the two is inconsistent.

Operation 1: When IsGt4by4 is equal to TRUE (the variable IsGt4by4 is the product of luma width and height, and the variable IsGt4by4 is TRUE when the IsGt4by4 is greater than 16), the derivation process of spatial block vector candidates from neighbouring coding units specified in the decoding standard is invoked by using the luma coding block position (xCb, yCb), the luma coding block width cbWidth and the height cbHeight as inputs; and the outputs are availability flags (availableFlagA1 and availableFlagB1), and block vectors (BVA1 and BVB1). Here, A1 and B1 are neighbouring blocks. As illustrated in FIG. 6, the relative positions of the neighbouring blocks where A1 and B1 are located with respect to the current coding block are the bottom-left and top-right, respectively.

Operation 2: when IsGt4by4 is equal to TRUE, the block vector candidate list BVCandList is constructed as follows: i=0if(availableFlagA1)BVCandList[i++]=BVA1if(availableFlagB1)BVCandList[i++]=BVB1

Operation 3: The variable numCurrCand represents the number of candidates that have been acquired currently, and the process of deriving numCurrCand is as follows:

if IsGt4by4 is equal to TRUE, numCurrCand is set equal to the number of candidates in BVCandList; otherwise, numCurrCand is set to 0.

Operation 4: when numCurrCand is less than MaxNumIbcMEGRECand (the maximum number of candidates in the MEGRE mode) and NumHmvpIbcCand (representing the maximum number of candidates for the historical-based optimal block vector (Hmvp) in the IBC mode) is greater than 0, BVCandList and numCurrCand are taken as inputs, and modified BVCandList and numCurrCand are taken as outputs, and the derivation process of history-based IBC block vector candidates, as specified in the decoding standard, is invoked.

Operation 5:

when numCurrCand is less than MaxNumIbcMEGRECand, the following applies until numCurrCand is equal to MaxNumIbcMEGRECand:

BVCandList[numCurrCand][0] (i.e., the horizontal component of BV) is set equal to 0.
BVCandList[numCurrCand][1] (i.e., the vertical component of BV) is set equal to 0.
numCurrCand increases by 1.

In this way, the construction of the block vector candidate list BVCandList is completed, and the general_MEGRE_flag is used to indicate whether it is in the IBCMEGRE mode, and the candidate index BVIdx is derived in the following manner.

BVIdx=general_MEGRE_flag[xCb][yCb] ? MEGRE_idx[xCb][yCb]: mvp_l0_flag[xCb][yCb]

In this way, the specific BVL may be acquired based on the index BVIdx and the block vector candidate list BVCandList:

$$BVL[0]=BVCandList[BVIdx][0]BVL[1]=BVCandList[BVIdx][1]$$

For the IBCAMVP mo25de, the specific BVL acquired based on the index BVIdx and the block vector candidate list BVCandList is the prediction BVL. The actual BVL further needs to add the Block Vector Difference (BVD). The specific process is as follows:

Operation 1: the horizontal and vertical components of the BVD are acquired, herein, MvdL0 represents the forward motion vector difference.

$$BVd[0]=MvdL0[xCb][yCb][0]BVd[1]=MvdL0[xCb][yCb][1]$$

Operation 2: a rounding operation for the acquired prediction BVL is performed, herein, a right shift operation for parameter AmvrShift is used for rounding, and a left shift operation for parameter AmvrShift is used for improving the resolution.

offset=(AmvrShift ==0)? 0:((1<<(AmvrShift-1))-1) BVL[0]=Sign(BVL[0])×(((Abs(BVL[0])+offset)>>AmvrShift)<< AmvrShift)

BVL[1] = Sign (BVL[1]) × (((Abs(BVL[1]) + offset) > > AmvrShift) << AmvrShift) Operation 3: the actual BVL is derived as follows, and its range needs to be controlled between -217 and 217-1: u[0]=(BVL[0]+BVd[0]+218)% 218BVL[0] =(u[0] > = 217)? (u[0] - 218): u[0]u[1] = (BVL[1] + BVd[1] + 218)% 218BVL[1] = (u[1] > = 217)? (u[1] - 218): u[1]

(2) Chroma: if a dual-tree partitioning is used, the IBC is not performed for chroma; if a single-tree partitioning is used, the BV of chroma needs to be derived.

Input: BVL of luma (1/16 sample precision)
Output: BVC (Block Vector chroma) of chroma (1/32 sample precision)

The derivation process is as follows: BVC[0] = ((BVL[0] > > (3 + SubWidthC)) × 32)BVC[1] = ((BVL[1] > > (3 + SubHeightC)) × 32)

Here, the specific process of deriving prediction samples by using BV is as follows:

Inputs: luma position (xCb, yCb), specifying the top-left sample of the current coding block relative to the top-left luma sample of the current picture; a variable cbWidth, specifying the width of the current coding block in the luma sample; and a variable cbHeight, specifying the height of the current coding block in the luma sample; a block vector BV; a variable cIdx, specifying the colour component index of the current block.

Output: an array of prediction samples, predSamples.

The derivation process is as follows:

When cIdx is equal to 0, i.e., indicating the luma component, for x = xCb.. xCb + cbWidth-1 and y = yCb.. yCb + cbHeight-1: xVb = (x+ (BV[0] >> 4)) & (IbcBufWidthY -1)yVb = (y+ (BV[1] >> 4)) & (CtbSizeY-1)

$$predSamples[x][y] = ibcVirBuf[0][xVb][yVb]$$

IbcBufWidthY is a width of a luma sample in the reconstructed buffer stored for IBC, CtbSizeY is the size of the Coding Tree Unit (CTU), and ibcVirBuf is a reconstructed sample stored for the IBC.

When cIdx is not equal to 0, i.e., indicating the chroma component, for x = xCb/SubWidthC.. xCb/SubWidthC + cbWidth/SubWidthC-1 and y = yCb/SubHeightC.. yCb/SubHeightC + cbHeight/SubHeightC-1: xVb = (x + (BV[0] >> 5)) & (IbcBufWidthC - 1)yVb = (y + (BV[1] >> 5)) & ((CtbSizeY/subHeightC) - 1)

$$predSamples[x][y] = ibcVirBuf[cIdx][xVb][yVb]$$

The variables SubWidthC and SubHeightC depend on the chroma format sampling structure specified by sps_chroma_format_idc, and the specific correspondences is shown in Table 1.

Further, in the embodiment of the present disclosure, the bitstream may be decoded first, to determine prediction mode identifier information for the current block. Then, when the prediction mode identifier information indicates that a prediction mode based on the prediction parameter is used for the current block, the process of determining the prediction parameter may be performed, that is, the above-described operation 1101 may be performed.

It may be understood that in the embodiment of the present disclosure, after receiving the bitstream of the video, the prediction mode identifier information for the current block may be determined first. Herein, the prediction mode identifier information indicates a coding mode for the current block and parameters related to the mode.

It should be note that in the implementation of the present disclosure, the prediction mode generally includes a traditional intra prediction mode and a non-traditional intra prediction mode; and the traditional intra prediction mode may include a DC mode, a PLANAR mode, an angular mode, and the like; and the non-traditional intra prediction mode may include a MIP mode, a CCLM mode, an IBC mode, a PLT mode, an IntraTMP mode, and the like.

It may be understood that in the embodiment of the present disclosure, at the encoder side, prediction encoding is performed for the current block, and in this process, the prediction mode for the current block may be determined, and the corresponding prediction mode identifier information may be signalled into the bitstream and then transmitted by the encoder to the decoder.

Correspondingly, in the present disclosure, at the decoder side, prediction mode identifier information for the current block may be acquired by decoding the bitstream, and then, the coding mode (the decoding mode) for the current block may be determined based on the prediction mode identifier information.

It should be noted that in the embodiment of the present disclosure, the prediction mode identifier information may be used to indicate whether a prediction mode based on a prediction parameter is used for the current block.

For example, in some embodiments, whether a block vector-based prediction mode (such as an IBC mode or an IntraTMP mode) is used for the current block may be determined based on the prediction mode identifier information.

For example, in some embodiments, when the value of the prediction mode identifier information is a first value, it is determined that the prediction mode identifier information indicates that the prediction mode based on the prediction parameter is used for the current block. When the value of the prediction mode identifier information is the second value, it is determined that the prediction mode identifier information indicates that the prediction mode based on the prediction parameter is not used for the current block.

It should also be noted that in the embodiment of the present disclosure, the first value is different from the second value, and the first value and the second value may be in parameter form or digital form. Specifically, the first prediction mode identifier information and the second prediction mode identifier information may be parameters written in a profile, or may be values of a flag, which are not specifically limited here. Further, for the first value and the second value, the first value may be set to 1 and the second value may be set to 0. Alternatively, the first value may be set to 0 and the second value may be set to 1. Alternatively, the first value may be set to true and the second value may be set to false. Alternatively, the first value may be set to false and the second value may be set to true. In the embodiment of the present disclosure, the first value is set to 0 and the second value is set to 1, which are not specifically limited here.

In operation 1102, a first reference block for the current block is determined based on the prediction parameter for the current block.

In the embodiment of the present disclosure, after determining the prediction parameter for the current block, the first reference block for the current block may be further determined based on the prediction parameter for the current block.

It should be noted that in the embodiment of the present disclosure, at least one reference block for the current block may be determined based on the block vector of the current block.

It should be noted that in the embodiment of the present disclosure, at least one reference block for the current block may be determined based on the motion vector of the current block. It should be noted that in the embodiment of the present disclosure, the first reference block for the current block may be an initial prediction block directly acquired based on the prediction parameter. For example, the first reference block may be an initial prediction block directly derived by using the block vector of the current block, or may be an initial prediction block directly derived based on the motion vector of the current block.

For example, in some embodiments, in the IntraTMP mode, the determined block vector of the current block may be an best block vector BV_BEST (pX_BEST, pY_BEST); where pX_BEST and pY_BEST are the horizontal offset and the vertical offset, respectively, of the best matching template with respect to the current block template, and are also the horizontal offset and the vertical offset, respectively, of the best matching reconstructed block with respect to the current block.

Further, in the embodiment of the present disclosure, when determining the first reference block for the current block based on the determined block vector, it may be implemented through simple translation and copying. The specific operation is as follows:

For x = 0... nTbW-1, and y = 0... nTbH-1: predSamples[x][y] = recSamples[x+pX_BEST][y+pY_BEST] (7)

Here, recSamples represents the reconstructed samples of the current picture.

For example, in some embodiments, in IBC mode, inputs: luma position (xCb, yCb), specifying the top-left sample of the current coding block relative to the top-left luma sample of the current picture; a variable cbWidth, specifying the width of the current coding block in the luma sample; a variable cbHeight, specifying the height of the current coding block in the luma sample; a block vector BV; a variable cIdx, specifying the colour component index of the current block. Output: an array of prediction samples, predSamples.

When cIdx is equal to 0, i.e., indicating the luma component, for x = xCb.. xCb + cbWidth - 1 and y = yCb.. yCb + cbHeight - 1: xVb = (x + (BVL[0] >> 4)) & (IbcBufWidthY - 1)yVb = (y + (BVL[1] >> 4)) & (CtbSizeY - 1) predSamples[x][y] = ibcVirBuf[0][xVb][yVb]

IbcBufWidthY is a width of a luma sample in the reconstructed buffer stored for IBC, CtbSizeY is the size of the Coding Tree Unit (CTU), and ibcVirBuf is a reconstructed sample stored for the IBC.

When cIdx is not equal to 0, i.e., indicating the chroma component, for x = xCb/SubWidthC.. xCb/SubWidthC + cbWidth/SubWidthC - 1 and y = yCb/SubHeightC.. yCb/SubHeightC + cbHeight/SubHeightC - 1: xVb = (x + (BVC[0] >> 4)) & (IbcBufWidthC - 1)yVb = (y + (BVC[1] >> 4)) & ((CtbSizeY/subHeightC) - 1)predSamples[x][y] = ibcVirBuf[cIdx][xVb][yVb].

In operation 1103, the first transform parameter for the current block is determined based on the first reference block for the current block.

In the embodiment of the present disclosure, after determining the first reference block for the current block based on the prediction parameter for the current block, the first transform parameter for the current block may be further determined based on the first reference block for the current block.

It should be noted that in the embodiment of the present disclosure, the transform parameter for the current block, such as the first transform parameter, may include an index reference (such as LFNST) for indicating the used transform matrix, or may be the transform matrix itself.

Further, in the embodiment of the present disclosure, when determining the first transform parameter for the current block based on the first reference block for the current block, the statistical characteristic parameter of the first reference block may be determined first. Then, a first transform parameter is determined based on the statistical characteristic parameter.

It should be noted that, in the embodiment of the present disclosure, the statistical characteristic parameter includes a covariance matrix.

Further, in the embodiment of the present disclosure, when determining the first transform parameter for the current block based on the first reference block for the current block, the intra mode information for the current block may be first determined based on the first reference block for the current block; then the first transform parameter is determined based on the intra mode information.

It may be understood that in the present disclosure, the intra mode information for the current block may include indication information of the traditional intra prediction mode determined after the intra prediction mode mapping.

It should be noted that in the embodiment of the present disclosure, when determining the intra mode information for the current block based on the first reference block for the current block, the horizontal gradient and the vertical gradient corresponding to the first reference block for the current block may be determined first; then, the intra mode information for the current block is determined based on the horizontal gradient and the vertical gradient.

It should be noted that in the embodiment of the present disclosure, when determining the horizontal gradient and the vertical gradient corresponding to the first reference block for the current block, the horizontal gradient and the vertical gradient corresponding to the first reference block may be determined based on a preset operator.

For example, in some embodiments, a preset operator may be used for determining gradient information, for example, the preset operator may be a Sobel operator. Here, the calculation of horizontal gradient and vertical gradient for the first reference block may be performed by using the Sobel operator.

For example, in some embodiments, the Sobel operator includes $G_x$ and $G_y$, $G_x$ is used to calculate the horizontal gradient, and $G_y$ is used to calculate the vertical gradient.

$$G_x = \begin{bmatrix} -1 & 0 & 1 \\ -2 & 0 & 2 \\ -1 & 0 & 1 \end{bmatrix} \tag{8}$$

$$G_y = \begin{bmatrix} -1 & -2 & -1 \\ 0 & 0 & 0 \\ 1 & 2 & 1 \end{bmatrix} \tag{9}$$

Further, in the embodiment of the present disclosure, when determining the intra mode information for the current block based on the horizontal gradient and the vertical gradient, the first prediction histogram may be first determined based on the horizontal gradient and the vertical gradient; when there is no non-zero amplitude in the first prediction histogram, it is determined that intra mode information for the current block is a PLANAR mode; when there is a non-zero amplitude in the first prediction histogram, intra mode information for the current block is determined based on a gradient direction with the maximum amplitude in the first prediction histogram.

It should be noted that in the embodiment of the present disclosure, the intra mode information for the current block which is determined based on the gradient direction with the maximum amplitude in the first prediction histogram may be a traditional intra prediction mode predModeIntra, where predModeIntra is between [0, 66].

For example, in some embodiments, based on the first reference block directly acquired through the prediction parameter, the vertical gradients and the horizontal gradients of all prediction samples of the first reference block may be calculated, and then the direction with the maximum gradient may be mapped to a traditional intra prediction mode, that is, the intra mode information predModeIntra for the current block is determined.

That is, in the embodiment of the present disclosure, gradient information between samples in the first reference block may be used to derive a dominant prediction direction, thereby completing the intra prediction mode mapping based on the first reference block, and acquiring corresponding intra mode information predModeIntra.

For example, in some embodiments, the horizontal gradients and the vertical gradients of the first reference block under the Intra TMP may be calculated through a Sobel operator, and then the gradient analysis may be completed and the traditional intra prediction mode may be derived based on the first reference block, that is, the corresponding intra mode information predModeIntra may be determined. Here, $G_x$ is used to calculate the horizontal gradient and $G_y$ is used to calculate the vertical gradient.

For example, in some embodiments, the input is a first reference block in the BV-based mode, i.e. an initial prediction value p[x][y], where x = 0.. nTbW -1 and y = 0.. nTbH -1, where nTbW represents the width of the current transform block acquired through BV-based prediction mode, and nTbH represents the height of the current transform block acquired through BV-based prediction mode.

For example, in some embodiments, the output is intra mode information for the current block, a traditional intra prediction mode predModeIntra, where predModeIntra is between [0, 66].

For example, in some embodiments, in the process of performing intra prediction mode mapping based on the first reference block, the following operations may be sequentially performed.

$$\text{mapHgV} = \{\{2, 1\}, \{1, 2\}\} \text{ and mapVgH} = \{\{3, 4\}, \{4, 3\}\}$$

are set.

angTable = {0, 2048, 4096, 6144, 8192, 12288, 16384, 20480, 24576, 28672, 32768, 36864, 40960, 47104, 53248, 59392, 65536} is set.

$$angOffset = \{18, 18, 50, 50\}$$

is set.

HoG[67] is set to an array including the gradient strength of each traditional intra prediction mode. At the beginning of this process, all values in all HOG arrays are initialized to 0. Gradient histogram

For each prediction sample p[x][y], with x = 1... nTbW-2, and y = 1... nTbH-2, the calculation process is as follows:

The horizontal gradient gHor[x][y] = p[x-1][y-1] + 2.p[x-1][y] + p[x-1][y+1]-p[x+1][y-1]-2.p[x+1][y]-p[x+1][y+1] is calculated.

The vertical gradient gVer[x][y] = p[x-1][y-1] + 2.p[x][y-1] + p[x+1][y-1]-p[x-1][y+1] - 2.p[x][y+1]-p[x+1][y+1] is calculated.

$$iAmp[x][y] = abs(gHor[x][y]) + abs(gVer[x][y])$$

is calculated.

$$signH[x][y] = gHor[x][y] < 0?\ 1:0$$

is calculated.

$$signV[x][y] = gVer[x][y] < 0?\ 1:0$$

is calculated.

$$HgV[x][y] = (abs(gHor[x][y]) > abs(gVer[x][y]))?\ 1:0)$$

is calculated.

region[x][y] = (HgV[x][y] == 1? mapHgV[signH[x][y]][signV[x][y]]: mapVgH[signH[x][y]][signV[x][y]]) is calculated.

grad[x][y] = (HgV[x][y] == 1? abs(gVer[x][y])/abs(gHor[x][y]): abs(gVer[x][y])/abs(gHor[x][y]) is calculated.

$$grad[x][y] = round\ (grad[x][y] \times (1 << 16))$$

is calculated.

The index angIdx[x][y] = argmin$_i$(abs(angTable[i]-grad[x][y])), i.e., angle index is calculated.

The intra mode ipm[x][y] = angOffset[region[x][y]] + angIdx[x][y], i.e., intra prediction mode is calculated.

$$HOG[ipm[x][y]] = HOG[ipm[x][y]] + iAmp[x][y]$$

is set.

If the HOG has no non-zero amplitude:
predModeIntra is set to PLANAR

Otherwise:

predModeIntra is set to argmax$_i$(HoG[i])

Here, argmax$_i$(L[i]), where i = 0,..., N, returns an index between 0 and N that maximizes L (if there are multiple maximums, the smaller index is returned). argmin$_i$(L[i]), where i = 0,..., N, returns an index between 0 and N that minimizes L (if there are multiple maximums, the smaller index is returned).

Finally, the mapping of the intra prediction mode predModeIntra is completed.

It should be noted that in the embodiment of the present disclosure, compared with the final prediction values acquired after data processing processes such as filtering, fusion, and sub-pixel processing, the initial prediction value directly acquired based on the prediction parameter, for example, the first reference block directly indicated by the BV, has richer texture edge information. This is because data processing (such as filtering, fusion, and sub-pixel processing, e.g.,

low-pass filtering,) performed based on the initial prediction value is equivalent to a smoothing operation, resulting in the loss of some texture edge information in the acquired processed final prediction value.

Correspondingly, in the embodiment of the present disclosure, in the process of performing the mapping of the intra prediction mode based on the prediction value, since the initial prediction value has richer texture edge information, compared with the process of performing the mapping of the intra prediction mode by using the final prediction value, more accurate gradient direction, prediction angle, and angular amplitude can be derived by using the initial prediction value, so that a more matching traditional intra prediction mode can be determined.

Further, in the embodiment of the present disclosure, when determining the first transform parameter based on the intra mode information, the transform kernel candidate set may be first determined based on the intra mode information for the current block; herein, the transform kernel candidate set includes any number of transform kernels; the transform kernel candidate set includes any one of an LFNST transform kernel candidate set, an NSPT transform kernel candidate set, or a transform kernel candidate set determined based on the prediction direction; then a first transform kernel is determined from the transform kernel candidate set; finally, the first transform parameter may be determined based on the first transform kernel.

It should be noted that in the embodiment of the present disclosure, the first transform parameter may be understood as a first transform kernel or a first transform matrix, that is, the first transform kernel may be a first transform matrix.

It should be noted that in the embodiment of the present disclosure, the size of the matrix corresponding to the first transform parameter may be determined based on the size of the current block, that is, the size of the first transform matrix may be determined based on the size of the current block.

That is to say, in the embodiment of the present disclosure, the transform kernel candidate set determined based on the intra mode information for the current block may be any one of transform kernel candidate sets determined based on the prediction direction, for example, the transform kernel candidate set may be an LFNST transform kernel candidate set or an NSPT transform kernel candidate set, which is not specifically limited in the present disclosure.

It should be noted that in the embodiment of the present disclosure, when determining the LFNST transform kernel candidate set based on the intra mode information for the current block, the LFNST transform kernel candidate set corresponding to the intra mode information may be determined based on the mapping relationships between the intra modes and the transform kernel candidate sets.

For example, in some embodiments, after determining that the current block may use the LFNST technology, it is necessary to determine the LFNST transform kernel (which may be represented by kernel) used for the current block. Here, there are four transform kernel candidate sets in LFNST, and the four transform kernel candidate sets may include set0, set1, set2 and set3. The selected transform kernel candidate set may be implicitly derived based on the coding parameters for the current block or the coding block where the current block is located. For example, based on the intra prediction mode for the current block, it may be determined which of the four transform kernel candidate sets is used.

It may be understood that in the embodiment of the present disclosure, the value of the LFNST index number (which may be represented by SetIdx) may be determined based on the value of the intra mode information predModeIntra for the current block. Specifically, the value of the LFNST index number is set to indicate that LFNST is used for the current block and to indicate the index number of the LFNST transform kernel in the LFNST transform kernel candidate set. Generally, the LFNST transform set includes four transform kernel candidate sets (set0, set1, set2, and set3), which correspond to SetIdx values of 0, 1, 2, and 3, respectively.

For example, in some embodiments, the mapping relationships between the intra modes and the transform kernel candidate sets may be as shown in Table 4, and the corresponding LFNST transform kernel candidate set may be determined based on the value of predModeIntra and Table 4.

Furthermore, in the embodiment of the present disclosure, the bitstream may be decoded to determine the transform kernel index number; and the first transform kernel may then be determined from the LFNST transform kernel candidate set based on the transform kernel index number to determine the first transform parameter.

It should be noted that in the embodiment of the present disclosure, since the LFNST transform kernel candidate set includes two preset transform kernels, after acquiring the transform kernel index number by decoding the bitstream, the transform kernel indicated by the transform kernel index number may be selected from the LFNST transform kernel candidate set based on the value of the acquired transform kernel index number. For example, when the value of the transform kernel index number is 1, the first LFNST transform kernel group (i.e., the first transform matrix group) in the LFNST transform kernel candidate set will be selected. Alternatively, when the value of the transform kernel index number is 2, the second LFNST transform kernel group (i.e., the second transform matrix group) in the LFNST transform kernel candidate set will be selected.

Furthermore, in the embodiment of the present disclosure, for the value of the transform kernel index number (i.e., LFNST_idx), when the value of the transform kernel index number is equal to 0, LFNST is not used; when the value of the transform kernel index number is greater than 0, LFNST is used, and the index of the transform kernel is equal to the value of the transform kernel index number, or the index of the transform kernel is equal to the value of the transform kernel index number minus 1. Subsequently, the LFNST transform kernel used for the current block, that is, the first transform kernel, may be further determined based on the transform kernel index number.

Furthermore, in the embodiment of the present disclosure, the primary transform coefficient length parameter and the secondary transform coefficient length parameter may be configured.

It may be understood that in the embodiment of the present disclosure, it is also necessary to configure the core parameters. Here, for configuring core parameters, it is necessary to first configure the length (which may be represented by nonZeroSize) of the input secondary transform coefficient vector for LFNST calculation, that is, configure the secondary transform coefficient length parameter, and further configure the length (which may be represented by nLfnstOutSzie) of the output primary transform coefficient vector, that is, the primary transform coefficient length parameter.

Furthermore, in the embodiment of the present disclosure, when determining the first transform parameter based on the first transform kernel, the size of the transform matrix is determined based on the primary transform coefficient length parameter and/or the secondary transform coefficient length parameter. Thus, the first transform parameter may be determined based on the first transform kernel and the size of the transform matrix.

It may be understood that in the embodiment of the present disclosure, the first transform parameter may be a transform matrix for the current block.

It should be noted that in the embodiment of the present disclosure, compared with the final prediction values acquired after data processing processes such as filtering, fusion, and sub-pixel processing, the initial prediction value directly acquired based on the prediction parameter, for example, the first reference block directly indicated by the BV, has more texture edge information. Therefore, in the process of performing the intra prediction mode mapping based on the prediction values, more accurate gradient directions, prediction angles, and angular amplitudes can be derived by using the initial prediction values, thereby determining a more matching traditional intra prediction mode.

Correspondingly, in the embodiment of the present disclosure, after determining the corresponding intra prediction mode by using the initial prediction value directly acquired based on the prediction parameter, for example, the first reference block directly indicated by the BV, an LFNST transform kernel with higher accuracy can be further acquired, thereby determining a more matching transform matrix.

For example, in some embodiments, FIG. 12 is a schematic diagram of a transform matrix selection process according to the embodiment of the present disclosure. As illustrated in FIG. 12, when deriving a transform parameter, that is, a transform matrix, the following operations may be specifically included.

In operation S5.1, determining the transform set:
when determining the transform set, the mapped intra prediction mode predModeIntra may be used for performing a selection among four transform sets (set0, set1, set2, set3), to determine the corresponding transform set, that is, the corresponding LFNST transform kernel candidate set is determined.

In operation S5.2, determining the transform matrix group:
when determining the transform matrix group, that is, determining the corresponding transform kernel, which of the two of transform matrix groups in the transform set is selected is determined based on lfnst_idx transmitted from the encoding side. The first transform matrix group is selected when lfnst_idx is 1, and the second transform matrix group is selected when lfnst_idx is 2.

In operation S5.3, selecting the transform matrix size.
when selecting the transform matrix size, each transform matrix group includes two base transform matrix sizes, and the base transform matrix sizes used at the decoding side are 16×16 and 48×16. The selection is performed based on nLfnstOutSzie; if nLfnstOutSzie is 16, a base transform matrix of 16×16 is selected; and if nLfnstOutSzie is 48, a base transform matrix of 48×16 is selected. When nonZeroSize is 8, only the first 8 rows of the transform matrix are used for matrix multiplication calculation.

In operation 1104, the prediction block for the current block is determined based on the first reference block for the current block.

In the embodiment of the present disclosure, after determining the first reference block for the current block based on the prediction parameter for the current block, the prediction block for the current block may be further determined based on the first reference block for the current block.

Furthermore, in the embodiment of the present disclosure, when determining the prediction block for the current block based on the first reference block for the current block, a refinement process may be performed on the first reference block based on a preset processing strategy to determine the prediction block for the current block.

It should be noted that in the embodiment of the present disclosure, the preset processing strategy includes at least one of multiple processes: fusion processing, filtering processing, sub-pixel processing, and sample flipping processing.

For example, in some embodiments, in the IntraTMP mode, when determining the prediction block for the current block based on the first reference block for the current block, a method of acquiring the prediction values by using the positions corresponding to multiple BVs for fusion, a method of copying after filtering the reference block corresponding to the BV, and a method of performing sub-pixel processing on the BVs to interpolate their corresponding reference blocks and then copy them may be used.

For example, in a region search process at the decoding side, after acquiring the BV candidate list through template matching, the first N entries (for example, N = 3) of the BV candidate list are selected for weighted fusion. This method may be referred to as an IntraTMP Fusion mode.

Alternatively, after acquiring a best BV, multiple points around the BV are selected, and the weighted fusion is performed on prediction values for the multiple points, to acquire the prediction values. This method may be referred to as an IntraTMP FLM mode.

Alternatively, after acquiring a best BV, the template is sorted with sub-pixel precision, to select the best direction and precision, and a prediction value is calculated by using an interpolation filter. This method may be referred to as IntraTMP SubPel mode.

For example, in some embodiments, in the IBC mode, in addition to the above basic copying method for acquiring the prediction values, there is also a method, in IBC flip mode, where the prediction region is horizontally or vertically flipped before being used as the prediction value. For example, a syntax element indicates whether to flip, and if flipped, whether to flip horizontally or vertically. The decoding side performs horizontal or vertical inverse rearrangement for the reference region samples based on the indication of the syntax, to acquire the prediction sample values of the coding block.

Alternatively, the template is used to establish a model between the current block and the prediction region, and the prediction value of the current block is acquired by processing the prediction block based on the model. For example, IBC LIC mode, applied to IBC MEGRE and IBC ABVP, uses linear equation to compensate for local illumination variations. Similar to the LIC of inter prediction in VVC, the parameters of the linear equation may be represented by a scaling parameter $\alpha$ and an offset parameter $\beta$, i.e., $\alpha \times p[x] + \beta$, to compensate for illumination variation, where p[x] is the reference sample pointed to by the BV at the position x in the current picture. The least squares method is used to derive the linear model parameters.

Based on the above method for acquiring the prediction values, there is also FIBC mode, which establishes a linear model between the template of the reference block corresponding to the BV and the template for the current block, acquires filter coefficients, and then applies the linear filtering model to the current block to acquire a final prediction value. Similar to the IntraTMP Fusion mode, there is also a prediction mode that fuses multiple IBC prediction blocks determined based on the relationships between the multiple prediction blocks and the current block template.

On the basis of the prediction value acquisition above, weighted prediction with other intra prediction manners may be performed, and the result obtained through the weighted prediction may be used as the final prediction result.

The weighted prediction manner includes: a combined inter and intra prediction (CIIP) manner in VVC, that is, at each sample position, the weighted prediction is performed on the results acquired from the above prediction process and the prediction results acquired from the ordinary intra directional prediction mode; the inter geometric prediction mode GPM (Geometric Partitioning Mode) in VVC, that is, based on wedge partitioning, different prediction modes are used in different wedge regions to acquire results, and the weighted fusion complying with certain rules is performed near the wedge partitioning line.

For example, in some embodiments, in the Intra TMP technology, there are different prediction manner for the different prediction mode. For example, in the Intra TMP Fusion technology, after acquiring block vectors BVs for N candidate templates, N candidate reconstructed blocks are acquired through the BVs, and then the weighted fusion is performed on the N candidate reconstructed blocks to acquire a prediction block for the current coding block. Specifically, the final prediction values are generated through the following operations: acquiring N candidate reconstructed blocks, determining weighted fusion weights, and generating the prediction values through weighted fusion.

Herein, when acquiring N candidate reconstructed blocks, block vectors BVs for N candidate templates are acquired, and candidate reconstructed blocks $RefBlock_n$ are directly acquired in the current picture based on $BV_n$, herein, the horizontal offset of $BV_n$ is $pX_n$ and the vertical offset of $BV_n$ is $pY_n$, where n = 0, 1..., N-1.

This is implemented through a simple translation and copying. The specific operation is as follows, for x = 0... nTbW-1, and y = 0... nTbH-1:

$$RefBlock_n[x][y] = recSamples[x + pX_n][y + pY_n]$$

Here, recSamples represents the reconstructed samples of the current picture.

When determining the weighted fusion weights, after acquiring the N candidate reconstructed blocks RefBlock, the weighted fusion weights W for the N candidate reconstructed blocks are required to be calculated. The weights may be predefined determination values, or may be values adaptively calculated by using cost values, sample values, or the like.

For example, in some embodiments, in an embodiment of the Intra TMP Fusion technology, the weighted fusion weights are derived by minimizing the MSE between the reconstructed values of the candidate template ($refT_n$) and the sample values of the template ($refpredT_n$) to be predicted.

Specifically, the MSE minimization process takes the autocorrelation matrix of the first P matching reference samples refT, the cross-correlation vector between the first P matching reference samples refT and the neighbouring template samples curT of the current coding block as inputs, and outputs the weight of the reconstructed block for each matching reference entry.

When generating prediction values through weighted fusion, a prediction block is calculated based on each candidate reconstructed blocks and a weighted fusion weight for the each candidate reconstructed block. Specifically, the value of each candidate reconstructed block is multiplied by its corresponding weight, and then a sum operation is performed to acquire the current prediction block (i.e., weighted prediction).

For x = 0 ... nTbW-1 and y = 0 ... nTbH-1, the prediction values are calculated as shown in formula (2). Each prediction value predSamples$_{x, y}$ is stored spatially, to generate the output prediction block for Intra TMP Fusion.

For example, in some embodiments, in the IntraTMP FLM mode, a linear filtering model is established by using the best matching template acquired from the previous search process and the template of the current coding block. It mainly includes the following two processes: determining the reconstructed region for calculating the filter coefficients, and calculating the filter coefficients. For example, as illustrated in FIG. 7, assuming that the number of filter taps, nTap, is 5, the shape of the filter is as illustrated in the left figure, $c_0$ to $c_4$ are respective tap coefficients of the filter, and a corresponding point of the tap coefficient $C_0$ is the reconstructed sample *ref*[i][j] at the corresponding position of the current sample to be predicted, Y$^{pred}$[i][j], in the best matching block; the remaining points are reconstructed samples, neighbouring to the current spatial position, in the best matching reconstructed block. The point in the right figure is the acquired prediction sample Y$^{pred}$[i][j].

For each current sample (i, j) to be predicted, a sample position in the filter template is defined as (k, l), then the corresponding reconstructed sample in the best matching block during filtering is defined as ref[i + k][j + l], and each filter coefficient at the position (k, l) in the filter template is defined as $c_{k, l}$, and the specific calculation process is shown in formulas (3) to (6).

For example, in some embodiments, in the Intra TMP SubPel mode, for the best BV, the 1/4, 1/2, 3/4, as well as the eight directions of top, bottom, left, right, top-left, top-right, bottom-left, and bottom-right, are traversed. A sort is performed based on template cost; and for the reference block corresponding to the BV with the minimum template cost, an interpolation filter is used to calculate the prediction values.

For example, in some embodiments, in the IBC technology, in the IBC flip mode, an acquisition method is needed, which the prediction region is horizontally or vertically flipped before being used as the prediction value. For example, a syntax element indicates whether to flip, and if flipped, whether to flip horizontally or vertically. The decoding side performs horizontal or vertical inverse rearrangement for the reference region samples based on the indication of the syntax, to acquire the prediction sample values of the coding block.

For example, in some embodiments, in the IBC LIC mode, the template is used to establish a model between the current block and the prediction region, and the prediction value for the current block is acquired by processing the prediction block based on the model. IBC LIC mode, applied to IBC MEGRE and IBC ABVP, uses linear equation to compensate for local illumination variations. Same to the LIC of inter prediction in VVC, the parameters of the linear equation may be represented by a scaling parameter $\alpha$ and an offset parameter $\beta$, i.e., $\alpha \times p[x] + \beta$, to compensate for illumination variation, where p[x] is the reference sample pointed to by the BV at the position x in the current picture. The least squares method is used to derive the linear model parameters.

For example, in some embodiments, in the filter IBC mode, a linear model is established by using the template of the current block and the template of the reference block corresponding to the BV, and the filter coefficients are acquired and used for the current block, to acquire the final prediction value. For each current sample (i, j) to be predicted, a sample position in the filter template is defined as (k, l), then the corresponding reconstructed sample in the best matching block during filtering is defined as ref[i + k][j + l], and each filter coefficient at the position (k, l) in the filter template is defined as $c_{k, l}$, and the specific calculation process is shown in formulas (3) to (5).

On the basis of the prediction value acquisition above, weighted prediction with other intra prediction manners may be performed, and the result obtained through the weighted prediction may be used as the final prediction result.

The weighted prediction manner includes: a combined inter and intra prediction (CIIP) manner in VVC, that is, at each sample position, the weighted prediction is performed on the results acquired from the above prediction process and the prediction results acquired from the ordinary intra directional prediction mode; the inter geometric prediction mode GPM (Geometric Partitioning Mode) in VVC, that is, based on wedge partitioning, different prediction modes are used in different wedge regions to acquire results, and the weighted fusion complying with certain rules is performed near the wedge partitioning line.

An example of the operation process in the BV-based CIIP mode is that: weighted fusion for the BV-based prediction value for the current block and the prediction value in a certain intra mode is performed, and the BV-based prediction part may be acquired by adopting traditional MEGRE, TM MEGRE, MBVD, and ABVP modes.

For the case where the BV-based prediction parts adopts different modes, different weights may be set. For example, when the BV-based prediction part adopts the traditional IBC MEGRE, TM MEGRE and MBVD modes, the weight ratio of the BV-based prediction and the intra prediction is 13: 3, the intra mode includes the TIMD mode of the current block and the intra prediction mode at the candidate BV position, if the second prediction mode and the first prediction mode in the intra mode are the same, it is determined whether the first prediction mode is the PLANAR mode, if yes, the second prediction mode is replaced with the horizontal prediction mode; otherwise, the second prediction mode is replaced with the PLANAR mode. When the BV-based prediction part adopts an ABVP mode, a weight ratio of the BV-based prediction and the intra prediction is 1: 1, the TIMD mode is obtained as the first prediction mode for the intra prediction mode. If the derived prediction mode is the horizontal prediction mode, the PLANAR mode is obtained as the second prediction mode for the intra prediction mode; otherwise, the horizontal prediction mode is obtained as the second prediction mode for the intra prediction mode.

An example of the operation process in the BV-based GPM mode: the BV-based prediction part may adopt traditional MEGRE and TM MEGRE.

For example, one partition is BV-based prediction mode and one partition is INTRA mode may be implemented, an intra prediction mode (IPM) candidate list is constructed by using the same method as inter GPM, and the IPM candidate list size is predefined as 3.

In the specific implementation, a total of 48 geometric partitioning modes may be classified into two geometric partitioning mode sets, as shown in Table 2 and Table 3.

When using a BV-based GPM, a flag for geometric partitioning mode sets of a BV-based GPM (e.g., IBC-GPM) is transmitted to indicate whether a first set or second set of geometric partitioning modes is selected, and then a geometric partitioning mode index is transmitted; a partition flag for the picture in the BV-based GPM (or IBC-GPM) is transmitted to indicate whether intra prediction is used for the first sub-partition. Herein, for the intra prediction part, an intra prediction mode index is required to be transmitted; and for the IBC prediction part, the MEGRE index is required to be transmitted.

In operation 1105, a reconstructed block for the current block is determined based on the prediction block and the first transform parameter for the current block.

In an embodiment of the present disclosure, after determining the first reference block and the prediction block for the current block based on the prediction parameter for the current block, the reconstructed block for the current block may be further determined based on the prediction block and the first transform parameter for the current block.

Furthermore, in the embodiment of the present disclosure, the bitstream may be decoded, and the first transform coefficient corresponding to the prediction residual may be determined.

Further, in the embodiment of the present disclosure, when determining the reconstructed block for the current block based on the prediction block and the first transform parameter for the current block, the prediction residual may be determined based on the first transform parameter and the first transform coefficient. Then, the reconstructed block for the current block may be determined based on the prediction block and the prediction residual for the current block.

It should be noted that in the embodiment of the present disclosure, when determining the prediction residual based on the first transform parameter and the first transform coefficient, the second transform coefficient may be determined by performing an inverse secondary transform based on the first transform coefficient and the first transform parameter; and then the prediction residual may be determined by performing inverse primary transform based on the second transform coefficient.

It may be understood that in the embodiment of the present disclosure, the first transform coefficient may be an inverse secondary transform coefficient vector u[i], and the second transform coefficient may be an inverse primary transform coefficient vector v[j].

That is, in the embodiment of the present disclosure, after determining the first transform parameter, that is, the transform matrix, the inverse secondary transform coefficient vector u[i], where i = 0... nonZeroSize-1, may be taken as an input, and multiplied by the transform matrix to acquire the inverse primary transform coefficient vector v[j], where j = 0... nLfnstOutSzie-1. Then, the one-dimensional inverse primary transform coefficient vector v[j], where j = 0...nLfnstOutSzie-1, may be used to construct a two-dimensional inverse primary transform coefficient matrix d'[x][y] for the current transform block, where x = 0...nLfnstSize-1 and y = 0...nLfnstSize-1. Based on different intra prediction modes, there are two scanning orders for filling: horizontal and vertical scanning modes. After that, the inverse primary transform coefficient matrix is used to perform the inverse primary transform to generate the prediction residual.

Further, in the embodiment of the present disclosure, the secondary transform coefficient vector u[i] is taken as an input, and is multiplied by the transform matrix to acquire the primary transform coefficient vector v[j], here i = 0, 1,..., nonZeroSize-1, and j = 0, 1,..., nLfnstOutSize-1. Assuming that the transform matrix acquired in the previous operation is lowFreqTransMatrix, the specific calculation process of v[j] is as follows.

$$v[j] = \mathrm{Clip3}(\mathrm{CoeffMin}, \mathrm{CoeffMax}, (\sum_{j=0}^{nonZeroSize-1} \mathrm{lowFreqTransMatrix}[j][i] \times u[i] + 64) >> 7)$$

(10)

Herein, Clip3 is a clipping operation that restricts the value of the coefficient between the following two numbers, as shown below:

$$\mathrm{CoeffMin} = -(1 << 15)\,(11)\,\mathrm{CoeffMax} = (1 << 15) - 1 \quad (12)$$

Furthermore, after the above matrix calculation, the transform processing of the transform coefficients may be implemented. Here, for $4 \times 4$ LFNST, on the decoder side, 16 or 8 coefficients will be input and 16 coefficients will be output; for $8 \times 8$ LFNST, on the decoder side, 16 or 8 coefficients will be input and 48 coefficients will be output, to realize LFNST transform processing of the transform coefficients.

Furthermore, in the embodiment of the present disclosure, after determining the prediction residual corresponding to the current block and the prediction block for the current block, the picture reconstruction process for the specified colour component specified in the decoding standard may be invoked. In order to realize the reconstruction operation, for the modes with residual, a sum operation for the prediction signal and the residual signal is performed.

In summary, through the decoding method proposed in the above operations 1101 to 1105, the initial prediction value based on the BV is selected, that is, the prediction direction is directly derived by using the first reference block directly indicated by the BV, so as to guide the selection of the direction-related transform set. On the one hand, compared with the final prediction value acquired after data processing processes such as filtering, fusion, and sub-pixel processing, the initial prediction value has richer texture edge information; more accurate gradient direction, prediction angle, and angular amplitude can be derived by using the initial prediction value, so that a more matching traditional intra prediction mode can be determined, a more accurate LFNST transform kernel can be further acquired, and a more matching transform matrix can be determined, thereby effectively improving encoding and decoding performance. On the other hand, after determining the first reference block directly indicated by the BV, the operations of generating the prediction block, generating the transform parameter and the residual can be performed in parallel, thereby shortening the length of critical path for encoding and decoding, solving the problem of high complexity, improving the encoding and decoding efficiency, and facilitating hardware design and implementation.

Further, in the embodiment of the present disclosure, after determining the first reference block for the current block, the prediction block for the current block may be determined based on the first reference block for the current block; then a second transform parameter for the current block may be determined based on the prediction block for the current block; and a reconstructed block for the current block may be determined based on the prediction block for the current block and the second transform parameter for the current block.

It should be noted that in the embodiment of the present disclosure, the transform parameter for the current block, such as the second transform parameter, may include an index reference (such as LFNST) for indicating the transform matrix to be used, or may be the transform matrix itself.

Further, in the embodiment of the present disclosure, the bitstream may be decoded to determine the first identifier information; when the value of the first identifier information is a first value, it is determined to use the first transform parameter; when the value of the first identifier information is a second value, it is determined to use the second transform parameter.

That is, in the embodiment of the present disclosure, whether to use the first transform parameter determined based on the first reference block or the second transform parameter determined based on the prediction block may be determined based on the first identifier information transmitted in the bitstream.

It may be understood that in the embodiment of the present disclosure, the initial prediction value (that is, the first transform parameter generated through the first reference block for the current block) and the final prediction value (that is, the second transform parameter generated through the prediction block for the current block) may be mixed and used. Herein, a determination may be made, according to certain conditions, as to which set of data the prediction direction (or gradient direction) is derived from. For example, whether to use the first transform parameter or the second transform parameter may be determined based on the first identifier information determined by decoding bitstream.

It should also be noted that in the embodiment of the present disclosure, the first value is different from the second value, and the first value and the second value may be in parameter form or digital form. Specifically, the first prediction mode identifier information and the second prediction mode identifier information may be parameters written in a profile, or may be values of a flag, which are not specifically limited here. Further, for the first value and the second value, the first value may be set to 1 and the second value may be set to 0. Alternatively, the first value may be set to 0 and the second value may be set to 1. Alternatively, the first value may be set to true and the second value may be set to false. Alternatively, the first value may be set to false and the second value may be set to true. In the embodiment of the present disclosure, the first value is set to 0 and the second value is set to 1, which are not specifically limited here.

For example, in some embodiments, at the encoding side, based on whether the prediction direction derived from the initial prediction value is consistent with the prediction direction derived from the final prediction value, it may be determined whether to directly adopt the prediction direction derived from one of the prediction data; or to use the first identifier information in the bitstream to indicate which prediction data is used to derive the prediction direction.

Further, in an embodiment of the present disclosure, the first prediction histogram corresponding to the first reference block and the second prediction histogram corresponding to the prediction block may be determined, respectively.

Correspondingly, in an embodiment of the present disclosure, the first gradient direction and the second gradient direction in the first prediction histogram may be determined; when an amplitude difference between the first gradient direction and the second gradient direction is less than or equal to a preset threshold, a reconstructed block for the current block is determined based on the first transform parameter; when an amplitude difference between the first gradient direction and the second gradient direction is greater than a preset threshold, a reconstructed block for the current block is determined based on the second transform parameter.

It should be noted that in the embodiment of the present disclosure, the first gradient direction may be a gradient direction with the highest (maximum) amplitude in the first prediction histogram, and the second gradient direction may be a gradient direction with the second-highest amplitude in the first prediction histogram.

Correspondingly, in an embodiment of the present disclosure, the first gradient direction and the second gradient direction in the second prediction histogram may be determined; when an amplitude difference between the first gradient direction and the second gradient direction is less than or equal to a preset threshold, a reconstructed block for the current block is determined based on the first transform parameter; when an amplitude difference between the first gradient direction and the second gradient direction is greater than a preset threshold, a reconstructed block for the current block is determined based on the second transform parameter.

It should be noted that in the embodiment of the present disclosure, the first gradient direction may be a gradient direction with the highest (maximum) amplitude in the second prediction histogram, and the second gradient direction may be a gradient direction with the second-highest amplitude in the second prediction histogram.

It may be understood that in the embodiment of the present disclosure, the initial prediction value (that is, the first transform parameter generated through the first reference block for the current block) and the final prediction value (that is, the second transform parameter generated through the prediction block for the current block) may be mixed and used. Herein, the determination may be made based on the mode histogram (first prediction histogram or second prediction histogram). If there is a large difference between the highest amplitude and the second-highest amplitude, for example, exceeding a preset threshold, it may be considered that there is a peak value, and then the prediction value (initial prediction value) before data processing is used for direction derivation; otherwise, the prediction value (final prediction value) acquired after data processing is used for direction derivation.

Further, in the embodiment of the present disclosure, a template direction corresponding to the first template may be determined; a first correlation parameter between the gradient direction with the maximum amplitude in the first prediction histogram and the template direction is determined; at the same time, a second correlation parameter between the gradient direction with the maximum amplitude in the second prediction histogram and the template direction; when the first correlation parameter is greater than or equal to the second correlation parameter, a reconstructed block for the current block is determined based on the first transform parameter; when the first correlation parameter is smaller than the second correlation parameter, the reconstructed block for the current block is determined based on the second transform parameter.

It may be understood that in the embodiment of the present disclosure, the initial prediction value (that is, the first transform parameter generated through the first reference block for the current block) and the final prediction value (that is, the second transform parameter generated through the prediction block for the current block) may be mixed. Herein, the template direction (the template direction of the first template) may be used as a criterion, to compare the gradient direction derived from the reference block (the initial prediction value) before data processing and the gradient direction derived from the prediction block (the final prediction value) acquired after data processing; and the gradient direction close to the template direction may be selected as the finally used gradient direction.

Further, in the embodiment of the present disclosure, when determining the first transform parameter, the horizontal gradient and the vertical gradient corresponding to the first reference block may be determined based on part or all samples in the first reference block.

Further, in the embodiment of the present disclosure, when determining the second transform parameter, the horizontal gradient and the vertical gradient corresponding to the prediction block may be determined based on part samples or all samples in the prediction block.

That is, in the embodiment of the present disclosure, all or part sample values may be selected to derive the direction. For example, it may be analogous to the CCLM point selection manner, where 4 points are selected from the top and left sides respectively for direction derivation.

Further, in the embodiment of the present disclosure, a refinement process may be performed on the first reference block for the current block based on the first processing strategy, and the first prediction block for the first reference block may be determined; then, a refinement process may be performed on the first prediction block based on the second processing strategy, to determine the prediction block for the current block.

Correspondingly, in the embodiment of the present disclosure, the third transform parameter for the current block may be determined based on the first prediction block; then, the reconstructed block for the current block is determined based on the prediction block for the current block and the third transform parameter for the current block,.

It should be noted that in the embodiment of the present disclosure, the transform parameter for the current block, such as the third transform parameter, may include an index reference (such as LFNST) for indicating the transform matrix to be used, or may be the transform matrix itself.

It may be understood that in the embodiment of the present disclosure, if multi-operations processing between the final prediction value and the initial prediction value is required, an intermediate prediction value (i.e., a first prediction block) in the middle of the multi-operations may be selected as an input for determining the prediction direction. For example, when the BV-based prediction value is filtered first and then fused to acquire the final prediction value, the filtered intermediate prediction information may be used as an input to determine a corresponding transform matrix, such as a third transform parameter.

It should be noted that in the embodiment of the present disclosure, the first processing strategy and the second processing strategy may include at least one of multiple processes: fusion processing, filtering processing, sub-pixel processing, or sample flipping processing.

It can be seen that the decoding method proposed in the embodiments of the present disclosure is a reconstructed value acquisition method based on the BV prediction mode. It focuses on prediction value generation and residual secondary transform selection method depending on the prediction value, a direction derivation is performed on the initial prediction value acquired through BV based on a technology similar to DIMD technology, and the derived direction can be used to guide the selection of a transform matrix related to directionality for performing inverse transform to generate the residual. On the one hand, compared with the final prediction value acquired after data processing processes such as filtering, fusion, and sub-pixel processing, the initial prediction value has richer texture edge information; more accurate gradient direction, prediction angle, and angular amplitude can be derived by using the initial prediction value, so that a more matching traditional intra prediction mode can be determined, a more accurate LFNST transform kernel can be further acquired, and a more matching transform matrix can be determined, thereby effectively improving encoding and decoding performance. On the other hand, after determining the first reference block directly indicated by the BV, the operations of generating the prediction block, generating the transform parameter and the residual can be performed in parallel, thereby shortening the length of critical path for encoding and decoding, solving the problem of high complexity, improving the encoding and decoding efficiency, and facilitating hardware design and implementation.

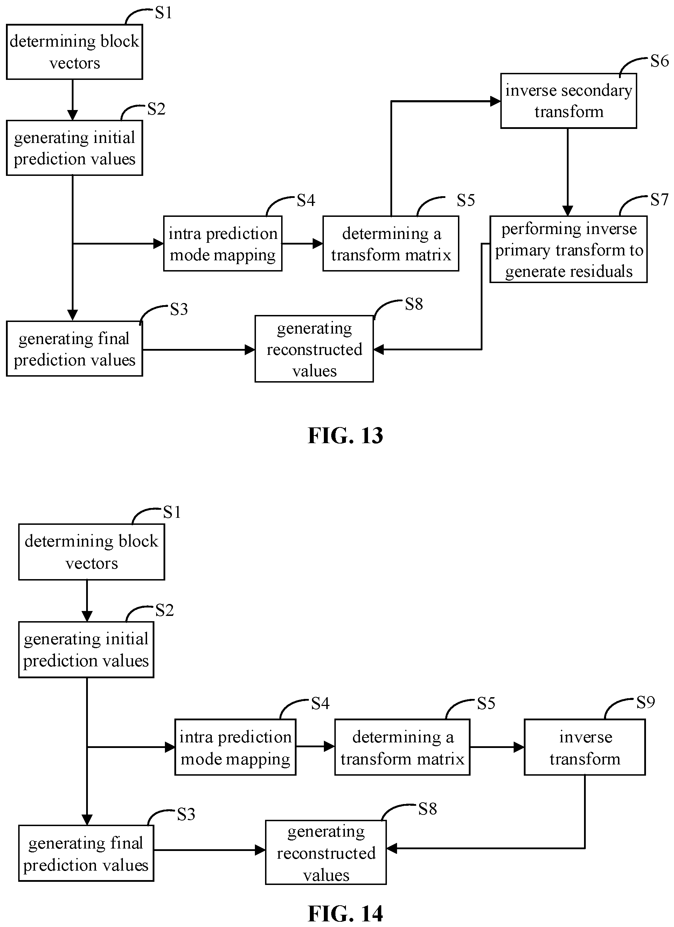

For example, in some embodiments, FIG. 13 is a first schematic diagram of acquiring reconstructed sample values based on the BV prediction mode according to the embodiment of the present disclosure. As illustrated in FIG. 13, the process of reconstructing sample values mainly includes following operations: S1, determining block vectors; S2, generating initial prediction values; S3, generating final prediction values; S4, performing intra prediction mode mapping; S5, determining a transform block matrix; S6, performing inverse secondary transform; S7, performing inverse primary transform; and S8, generating reconstructed values.

Herein, for the operation of the intra prediction mode mapping, the input is no longer the final prediction value for the current block, but the initial prediction value for the current block, that is, the first reference block of the current block, which is directly indicated by BV.

It should be noted that, in the embodiment of the present disclosure, compared with the final prediction values acquired after data processing processes such as filtering, fusion, and sub-pixel processing, the initial prediction value directly acquired based on the prediction parameter, for example, the first reference block directly indicated by the BV, has richer texture edge information. This is because data processing (such as filtering, fusion, and sub-pixel processing, e.g., low-pass filtering,) performed based on the initial prediction value is equivalent to a smoothing operation, resulting in the loss of some texture edge information in the acquired processed final prediction value.

Correspondingly, in the embodiment of the present disclosure, in the process of performing the mapping of the intra prediction mode based on the prediction value, since the initial prediction value has richer texture edge information, compared with the process of performing the mapping of the intra prediction mode by using the final prediction value, more accurate gradient direction, prediction angle, and angular amplitude can be derived by using the initial prediction value, so that a more matching traditional intra prediction mode can be determined.

Correspondingly, in the embodiment of the present disclosure, after determining the corresponding intra prediction mode by using the initial prediction value directly acquired through the prediction parameter, such as the first reference block directly indicated by the BV, an LFNST transform kernel with higher accuracy can be further acquired, so that a more matching transform matrix can be determined, and the encoding and decoding performance can be effectively improved.

For example, in some embodiments, FIG. 14 is a second schematic diagram of acquiring reconstructed sample values based on the BV prediction mode according to the embodiment of the present disclosure. As illustrated in FIG. 14, the process of reconstructing sample values mainly includes following operations: S1, determining block vectors; S2, generating initial prediction values; S3, generating final prediction values; S4, performing intra prediction mode mapping; S5, determining a transform block matrix; S9, performing inverse transform; and S8, generating reconstructed values.

Herein, for the operation of the intra prediction mode mapping, the input is no longer the final prediction value for the current block, but the initial prediction value for the current block, that is, the first reference block of the current block, which is directly indicated by BV.

It should be noted that, in the embodiment of the present disclosure, compared with the final prediction values acquired after data processing processes such as filtering, fusion, and sub-pixel processing, the initial prediction value directly acquired based on the prediction parameter, for example, the first reference block directly indicated by the BV, has richer texture edge information. This is because data processing (such as filtering, fusion, and sub-pixel processing, e.g., low-pass filtering,) performed based on the initial prediction value is equivalent to a smoothing operation, resulting in the loss of some texture edge information in the acquired processed final prediction value.

Correspondingly, in the embodiment of the present disclosure, the transform manner of performing inverse transform in operation S9 may also use other transform manner other than LFNST. For example, when a Non-separable primary transform (NSPT) is adopted, the transform matrix may be determined by using the initial prediction value (directly indicated by the BV) corresponding to the current block.

It should be noted that in the embodiment of the present disclosure, in the above solutions, the prediction parameter for the current block is exemplified by the block vector BV, and the transform manner is exemplified by LFNST to illustrate the decoding method according to the embodiments of the present disclosure, but the prediction parameter and the transform manner are not limited, that is, the solutions proposed in the embodiments of the present disclosure may also be applied to other prediction parameters, transform parameters, and transform manners.

Embodiments of the present disclosure provides a decoding method. Herein, the decoder determines a prediction parameter for a current block; determines a first reference block for the current block based on the prediction parameter for the current block; determines a first transform parameter for the current block based on the first reference block for the current block; determines a prediction block for the current block based on the first reference block for the current block; and determines a reconstructed block for the current block based on the prediction block and the first transform parameter for the current block. That is, in the embodiment of the present disclosure, after determining the first reference block for the current block based on the prediction parameter, it can select to directly use the first reference block before data processing to determine the transform parameter for the current block, and then use the determined transform parameter in combination with the prediction block for the current block acquired after data processing of the first reference block, to complete the reconstruction of the current block. Herein, the data processing process may, to a certain extent, result in the loss of the texture edge information of the prediction block, and thus, compared with the final prediction values after data processing (i.e., the prediction block), the initial prediction values before data processing (i.e., the first reference block) has richer texture edge information. By using the first reference block to derive the prediction direction, it can acquire more accurate transform parameters, thereby effectively improving the encoding and decoding performance. Meanwhile, after determining the first reference block directly indicated by the prediction parameter, the operations of generating the prediction block, generating the transform parameter and the residual can be performed in parallel, which shortens the length of critical path for encoding and decoding, and solves the problem of high complexity, thereby improving encoding and decoding efficiency. Therefore, the encoding and decoding method proposed in the embodiments of the present disclosure can improve encoding and decoding efficiency and performance.

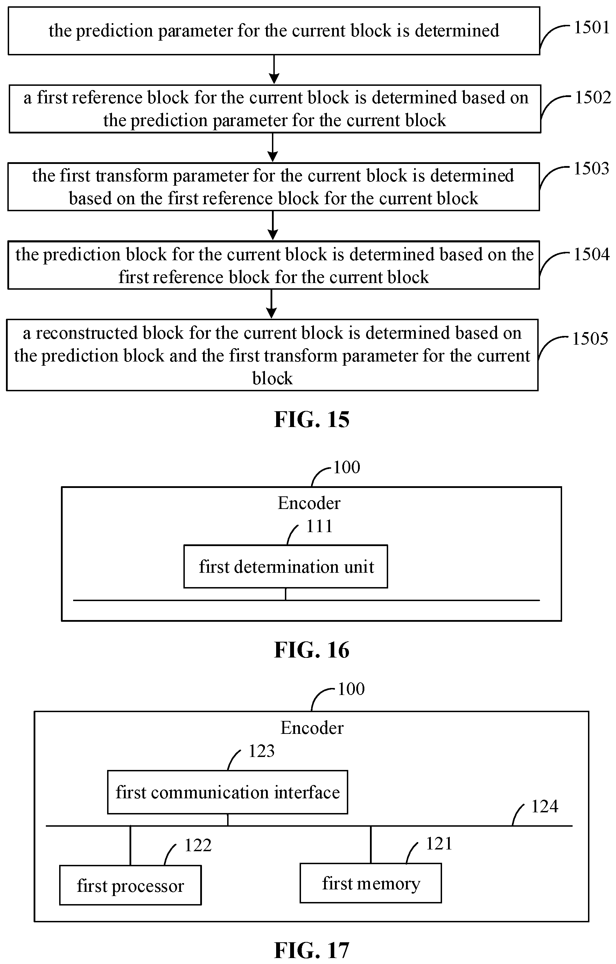

An embodiment of the present disclosure provides an encoding method, and the encoding method is applied to an encoder. FIG. 15 is a schematic flowchart of the encoding method according to the embodiment of the present disclosure. As illustrated in FIG. 15, a method in which the encoder performs encoding processing may include the following operations 1501 to 1505.

In operation 1501, a prediction parameter for the current block is determined.

In an embodiment of the present disclosure, the prediction parameter for the current block may be determined first.

It should be noted that the encoding method according to the embodiment of the present disclosure is applied to an encoder. Further, the encoding method may include an intra prediction method, more specifically, a colour component prediction method. A video picture may be partitioned into multiple coding blocks, each coding block may include a first colour component, a second colour component and a third colour component. The current block in the embodiment of the present disclosure refers to a coding block, for which the intra prediction is to be performed currently, in the video picture.

Here, when the first colour component needs to be predicted, a to-be-predicted component is the first colour component; when the second colour component needs to be predicted, the to-be-predicted component is the second colour component; when the third colour component needs to be predicted, the to-be-predicted component is the third colour component. Furthermore, assuming that the first colour component is predicted for the current block, and the first colour component is a luma component, that is, the to-be-predicted component is the luma component, the current block may also be referred to as a luma block. Alternatively, assuming that the second colour component is predicted for the current block, and the second colour component is a chroma component, that is, the to-be-predicted component is the chroma component, the current block may also be referred to as a chroma block.

It should be noted that in an embodiment of the present disclosure, the prediction parameter for the current block may include a block vector of the current block.

It should be noted that in the embodiment of the present disclosure, the first reference block and the current block are in the same picture. Correspondingly, the block vector represents the positional offset between the current block and the first reference block.

It should be understood that in the embodiment of the present disclosure, for the intra prediction mode, the first reference block for the current block may be determined based on the block vector of the current block.

It should be noted that in the embodiment of the present disclosure, the prediction parameter for the current block may include a motion vector of the current block and a reference picture index.

It should be noted that in the embodiment of the present disclosure, the first reference block is located in the reference picture indicated by the reference picture index. Correspondingly, the motion vector represents the positional offset between the current block and the first reference block.

It should be understood that in the embodiment of the present disclosure, for the inter prediction mode, the first reference block for the current block may be determined based on the motion vector of the current block.

It should be noted that in the embodiment of the present disclosure, the prediction parameter for the current block takes the block vector BV as an example, and the transform manner takes the LFNST as an example to illustrate the encoding method proposed in the embodiment of the present disclosure.

Further, in the embodiment of the present disclosure, when determining the block vector of the current block, the first template for the current block may be determined first, and the preset search region may be determined; the block vector of the current block is determined by performing a search in a preset search region.

Further, in the embodiment of the present disclosure, when determining the block vector of the current block, the first template for the current block may be determined first, and the preset search region may be determined; a search is performed in a preset search region, and a block vector candidate list for the current block is constructed; and the block vector of the current block is determined based on the block vector candidate list.

Further, in the embodiment of the present disclosure, when determining the block vector of the current block, the block vectors of the neighbouring blocks for the current block may be determined first; a block vector candidate list for the current block is constructed based on the block vectors of the neighboring blocks; and the block vector of the current block is determined based on the block vector candidate list.

For example, in some embodiments, in the IntraTMP mode, when acquiring the first template, the template type for the current block may be determined first, and then the first template for the current block may be further determined based on the template type. Herein, the template type for the current block may be determined based on the indication information in the bitstream; the template type for the current block may also be determined based on the size of the current block; or, the template type for the current block may also be determined based on the reference samples of the current block.

It may be understood that in the embodiment of the present disclosure, the reference samples of the current block may include neighbouring reconstructed samples of the current block, that is, the neighbouring reconstructed samples of the current block may be selected and used as a template to search for a matching template within a predefined search region.

It should be noted that in the embodiment of the present disclosure, the reference samples of the current block, that is, the neighbouring reconstructed samples of the current block may include top reference samples, top-left reference samples, top-right reference samples, left reference samples, and bottom-left reference samples of the current block.

It may be understood that in the embodiment of the present disclosure, when determining the template type for the current block by using the reference samples of the current block, the template type may be classified and determined based on the availability of neighbouring reference samples.

That is, in the embodiment of the present disclosure, the template type may be determined based on the availability information of the reference samples of the current block, the template type may also be determined based on the information indicated in the bitstream; or, the template type may also be determined based on the availability information of the reference samples and the information indicated in the bitstream, which is not specifically limited in the present disclosure.

It should be noted that in the embodiment of the present disclosure, when determining the first template for the current block based on the template type, the template reference samples of the current block may be first determined based on the template type and the template size corresponding to the template type, and then the first template for the current block may be determined based on the template reference samples.

It should be noted that in the embodiment of the present disclosure, the template size corresponding to the template type may be preset, may be indicated by a syntax element in a bitstream, or may be adaptively selected based on the block size or other information. For example, when acquiring the left template, the template width templateW_size may be set to 4; and when acquiring the top template, the template height templateH_size may be set to 4.

It should be noted that in the embodiment of the present disclosure, a search process for the block vector may include the following operations: an initialization process; determining a search region (preset search region) for the first template in the current picture, and searching in the search region to determine one or more best block vectors.

It should be noted that in the embodiment of the present disclosure, as illustrated in FIG. 3, a region filled with dark colour represents a reconstructed region, a block filled with grid lines is the current block, and a neighbouring region of the current block is a first template (T); a block filled with diagonal lines is a reference block, and a neighbouring region of the reference block is a second template (that is, a best matching template T_BEST); an offset of the second template relative to the first template is a best block vector (BV_BEST).

In the embodiment of the present disclosure, the preset cost function may be an Sum of Absolute Differences (SAD), Sum of Absolute Transformed Differences (SATD), Mean Square Error (MSE), Sum of Squared Differences (SSD), Mean Absolute Deviation (MAD), Mean Squared Differences (MSD), Normalized Correlation Coefficient (NCC), etc., which is not specifically limited herein.

It should be noted that in the embodiment of the present disclosure, the matching cost values between the matching templates corresponding to the search points in the preset search region and the first template are determined based on the preset matching criterion; then, one or more block vectors are determined based on the matching cost values. Herein, for multiple block vectors, a BV candidate list may be constructed, and the list stores multiple BV candidates in ascending order of cost, and then, which BV candidate or BV candidates is/are finally selected is determined based on the corresponding syntax elements in the bitstream.

For example, in some embodiments, in IBC mode, there are various ways to acquire the BV. For example, if it is in the IBC MEGRE mode, the encoder constructs the MEGRE list, determines the MEGRE list option index, and then acquires the specific information of the BV from the corresponding option in the MEGRE list based on the index. Another example is the normal IBC mode, the encoder acquires specific information of the BV based on the BV or the BV prediction difference value.

For example, in some embodiments, in the IBC mode, the specific process of deriving the BV is as follows:

(1) Luma:

Inputs: luma position (xCb, yCb), specifying the top-left sample of the current coding block relative to the top-left luma sample of the current picture; a variable cbWidth, specifying the width of the current coding block in the luma sample; and a variable cbHeight, specifying the height of the current coding block in the luma sample.

Output: block vector of luma, BVL (Block Vector Luma).

IBC mode is classified into IBCMEGRE and IBCAMVP. When deriving BVL, it is required to construct an IBC block vector candidate list BVCandList. The process of constructing the list for IBC MEGRE is described below. The process of constructing the list for IBCAMVP is consistent with the process of constructing the list for IBCMEGRE, but the maximum number of candidates for the two is inconsistent.

Operation 1: When IsGt4by4 is equal to TRUE (the variable IsGt4by4 is the product of luma width and height, and the variable IsGt4by4 is TRUE when the IsGt4by4 is greater than 16), the derivation process of spatial block vector candidates from neighbouring coding units specified in the decoding standard is invoked by using the luma coding block position (xCb, yCb), the luma coding block width cbWidth and the height cbHeight as inputs; and the outputs are availability flags (availableFlagA1 and availableFlagB1), and block vectors (BVA1 and BVB1). Here, A1 and B1 are neighbouring blocks. As illustrated in FIG. 6, the relative positions of the neighbouring blocks where A1 and B1 are located with respect to the current coding block are the bottom-left and top-right, respectively.

Operation 2: when IsGt4by4 is equal to TRUE, the block vector candidate list BVCandList is constructed as follows: i=0if(availableFlagA1)BVCandList[i++]=BVA1if(availableFlagB1)BVCandList[i++]=BVB1

Operation 3: The variable numCurrCand represents the number of candidates that have been acquired currently, and the process of deriving numCurrCand is as follows:

if IsGt4by4 is equal to TRUE, numCurrCand is set equal to the number of candidates in BVCandList; otherwise, numCurrCand is set to 0.

Operation 4: when numCurrCand is less than MaxNumIbcMEGRECand (the maximum number of candidates in the MEGRE mode) and NumHmvpIbcCand (representing the maximum number of candidates for the historical-based optimal block vector (Hmvp) in the IBC mode) is greater than 0, BVCandList and numCurrCand are taken as inputs, and modified BVCandList and numCurrCand are taken as outputs, and the derivation process of history-based IBC block vector candidates, as specified in the decoding standard, is invoked.

Operation 5:

when numCurrCand is less than MaxNumIbcMEGRECand, the following applies until numCurrCand is equal to MaxNumIbcMEGRECand:

BVCandList[numCurrCand][0] (i.e., the horizontal component of BV) is set equal to 0.
BVCandList[numCurrCand][1] (i.e., the vertical component of BV) is set equal to 0.
numCurrCand increases by 1.

In this way, the construction of the block vector candidate list BVCandList is completed, and the general_MEGRE_flag is used to indicate whether it is in the IBCMEGRE mode, and the candidate index BVIdx is derived in the following manner.

BVIdx=general_MEGRE_flag[xCb][yCb] ? MEGRE_idx[xCb][yCb]: mvp_l0_flag[xCb][yCb]

In this way, the specific BVL may be acquired based on the index BVIdx and the block vector candidate list BVCandList:

For the IBCAMVP mode, the specific BVL acquired based on the index BVIdx and the block vector candidate list BVCandList is the prediction BVL. The actual BVL further needs to add the Block Vector Difference (BVD). The specific process is as follows:

$$BVL[0]=BVCandList[BVIdx][0] \quad BVL[1]=BVCandList[BVIdx][1]$$

Operation 1: the horizontal and vertical components of the BVD are acquired, herein, MvdL0 represents the forward motion vector difference. BVd[0]=MvdL0[xCb][yCb][0] BVd[1]=MvdL0[xCb][yCb][1]

Operation 2: a rounding operation for the acquired prediction BVL is performed, herein, a right shift operation for parameter AmvrShift is used for rounding, and a left shift operation for parameter AmvrShift is used for improving the resolution. offset=(AmvrShift ==0)? 0: ((1<<(AmvrShift-1))-1) BVL[0] = Sign(BVL[0]) $\times$ (((Abs(BVL[0]) + offset) >> AmvrShift)<< AmvrShift)

BVL[1] = Sign (BVL[1]) $\times$ (((Abs(BVL[1]) + offset) > > AmvrShift) << AmvrShift) Operation 3: the actual BVL is derived as follows, and its range needs to be controlled between -217 and 217-1: u[0]=(BVL[0]+BVd[0]+218)% 218 BVL[0]=(u[0] > = 217)? (u[0] - 218): u[0] u[1] = (BVL[1]+BVd[1] + 218)% 218 BVL[1] = (u[1] >= 217)? (u[1] - 218): u[1]

(2) Chroma: if a dual-tree partitioning is used, the IBC is not performed for chroma; if a single-tree partitioning is used, the BV of chroma needs to be derived.

Input: BVL of luma (1/16 sample precision)
Output: BVC (Block Vector chroma) of chroma (1/32 sample precision)

The derivation process is as follows: BVC[0] = ((BVL[0] > > (3 + SubWidthC)) $\times$ 32) BVC[1] = ((BVL[1] > > (3 + SubHeightC)) $\times$ 32)

Here, the specific process of deriving prediction samples by using BV is as follows:

Inputs: luma position (xCb, yCb), specifying the top-left sample of the current coding block relative to the top-left luma sample of the current picture; a variable cbWidth, specifying the width of the current coding block in the luma sample; and a variable cbHeight, specifying the height of the current coding block in the luma sample; a block vector BV; a variable cIdx, specifying the colour component index of the current block.

Output: an array of prediction samples, predSamples.

The derivation process is as follows:

When cIdx is equal to 0, i.e., indicating the luma component, for x = xCb.. xCb + cbWidth-1 and y = yCb.. yCb + cbHeight-1: xVb = (x+ (BV[0] >> 4)) & (IbcBufWidthY -1) yVb = (y+ (BV[1] >> 4)) & (CtbSizeY-1) predSamples[x][y] = ibcVirBuf[0][xVb][yVb]

IbcBufWidthY is a width of a luma sample in the reconstructed buffer stored for IBC, CtbSizeY is the size of the Coding Tree Unit (CTU), and ibcVirBuf is a reconstructed sample stored for the IBC.

When cIdx is not equal to 0, i.e., indicating the chroma component, for x = xCb/SubWidthC.. xCb/SubWidthC + cbWidth/SubWidthC-1 and y = yCb/SubHeightC.. yCb/SubHeightC + cbHeight/SubHeightC-1: xVb = (x + (BV[0] >> 5)) & (IbcBufWidthC - 1) yVb = (y + (BV[1] >> 5)) & ((CtbSizeY/subHeightC) - 1) predSamples[x][y] = ibcVirBuf[cIdx][xVb][yVb]

The variables SubWidthC and SubHeightC depend on the chroma format sampling structure specified by sps_chroma_format_idc, and the specific correspondences is shown in Table 1.

Further, in the embodiment of the present disclosure, the prediction mode for the current block may be determined first, and when it is determined that the prediction mode based on the prediction parameter is used for the current block, the prediction parameter determination process may be performed, that is, the above operation 1501 may be performed. At the same time, prediction mode identifier information for the current block may be determined, and the prediction mode identifier information may be signalled into the bitstream.

It may be understood that, in the embodiment of the present disclosure, at the decoding side, after receiving the bitstream of the video, the prediction mode identifier information for the current block may be determined first. Herein, the prediction mode identifier information indicates a coding mode for the current block and parameters related to the mode.

It should be note that in the implementation of the present disclosure, the prediction mode generally includes a traditional intra prediction mode and a non-traditional intra prediction mode; and the traditional intra prediction mode may include a DC mode, a PLANAR mode, an angular mode, and the like; and the non-traditional intra prediction mode may include a MIP mode, a CCLM mode, an IBC mode, a PLT mode, an IntraTMP mode, and the like.

It may be understood that in the embodiment of the present disclosure, at the encoder side, prediction encoding is performed for the current block, and in this process, the prediction mode for the current block may be determined, and the corresponding prediction mode identifier information may be signalled into the bitstream and then transmitted by the encoder to the decoder.

Correspondingly, in the present disclosure, at the decoder side, prediction mode identifier information for the current block may be acquired by decoding the bitstream, and then, the coding mode (the decoding mode) for the current block may be determined based on the prediction mode identifier information.

It should be noted that in the embodiment of the present disclosure, the prediction mode identifier information may be used to indicate whether a prediction mode based on a prediction parameter is used for the current block.

For example, in some embodiments, whether a block vector-based prediction mode (such as an IBC mode or an IntraTMP mode) is used for the current block may be determined based on the prediction mode identifier information.

For example, in some embodiments, when it is determined that a prediction mode based on a prediction parameter is used for the current block, it is determined that the value of the prediction mode identifier information is a first value; when it is determined that the prediction mode based on the prediction parameter is not used for the current block, it is determined that the value of the prediction mode identifier information is the second value.

It should also be noted that in the embodiment of the present disclosure, the first value is different from the second value, and the first value and the second value may be in parameter form or digital form. Specifically, the first prediction mode identifier information and the second prediction mode identifier information may be parameters written in a profile, or may be values of a flag, which are not specifically limited here. Further, for the first value and the second value, the first value may be set to 1 and the second value may be set to 0. Alternatively, the first value may be set to 0 and the second value may be set to 1. Alternatively, the first value may be set to true and the second value may be set to false. Alternatively, the first value may be set to false and the second value may be set to true. In the embodiment of the present disclosure, the first value is set to 0 and the second value is set to 1, which are not specifically limited here.

In operation 1502, a first reference block for the current block is determined based on the prediction parameter for the current block.

In an embodiment of the present disclosure, after determining the prediction parameter for the current block, the first reference block for the current block may be further determined based on the prediction parameter for the current block.

It should be noted that in an embodiment of the present disclosure, at least one reference block for the current block may be determined based on the block vector of the current block.

It should be noted that in the embodiment of the present disclosure, at least one reference block for the current block may be determined based on the motion vector of the current block. It should be noted that in the embodiment of the present disclosure, the first reference block for the current block may be an initial prediction block directly acquired based on the prediction parameter. For example, the first reference block may be an initial prediction block directly derived by using the block vector of the current block, or may be an initial prediction block directly derived based on the motion vector of the current block.

For example, in some embodiments, in the IntraTMP mode, the determined block vector of the current block may be an best block vector

BV_BEST (pX_BEST, pY_BEST); where pX_BEST and pY_BEST are the horizontal offset and the vertical offset, respectively, of the best matching template with respect to the current block template, and are also the horizontal offset and the vertical offset, respectively, of the best matching reconstructed block with respect to the current block.

Further, in the embodiment of the present disclosure, when determining the first reference block for the current block based on the determined block vector, it may be implemented through simple translation and copying. The specific operation is as follows:

For x = 0... nTbW-1, and y = 0... nTbH-1: predSamples[x][y] = recSamples[x+pX_BEST][y+pY_BEST] (7)

Here, recSamples represents the reconstructed samples of the current picture.

For example, in some embodiments, in IBC mode, inputs: luma position (xCb, yCb), specifying the top-left sample of the current coding block relative to the top-left luma sample of the current picture; a variable cbWidth, specifying the width of the current coding block in the luma sample; a variable cbHeight, specifying the height of the current coding block in the luma sample; a block vector BV; a variable cIdx, specifying the colour component index of the current block. Output: an array of prediction samples, predSamples.

When cIdx is equal to 0, i.e., indicating the luma component, for x = xCb.. xCb + cbWidth - 1 and y = yCb.. yCb + cbHeight - 1: xVb = (x + (BVL[0] >> 4)) & (IbcBufWidthY - 1)yVb = (y + (BVL[1] >> 4)) & (CtbSizeY - 1) predSamples[x][y] = ibcVirBuf[0][xVb][yVb]

IbcBufWidthY is a width of a luma sample in the reconstructed buffer stored for IBC, CtbSizeY is the size of the Coding Tree Unit (CTU), and ibcVirBuf is a reconstructed sample stored for the IBC.

When cldx is not equal to 0, i.e., indicating the chroma component, for x = xCb/SubWidthC.. xCb/SubWidthC + cbWidth/SubWidthC - 1 and y = yCb/SubHeightC.. yCb/SubHeightC + cbHeight/SubHeightC - 1: xVb = (x + (BVC[0] >> 4)) & (IbcBufWidthC - 1)yVb = (y + (BVC[1] >> 4)) & ((CtbSizeY/subHeightC) - 1)predSamples[x][y] = ibcVirBuf[cldx][xVb][yVb].

In operation 1503, the first transform parameter for the current block is determined based on the first reference block for the current block.

In the embodiment of the present disclosure, after determining the first reference block for the current block based on the prediction parameter for the current block, the first transform parameter for the current block may be further determined based on the first reference block for the current block.

It should be noted that in the embodiment of the present disclosure, the transform parameter for the current block, such as the first transform parameter, may include an index reference (such as LFNST) for indicating the used transform matrix, or may be the transform matrix itself.

Further, in the embodiment of the present disclosure, when determining the first transform parameter for the current block based on the first reference block for the current block, the statistical characteristic parameter of the first reference block may be determined first. Then, a first transform parameter is determined based on the statistical characteristic parameter.

It should be noted that, in the embodiment of the present disclosure, the statistical characteristic parameter includes a covariance matrix.

Further, in the embodiment of the present disclosure, when determining the first transform parameter for the current block based on the first reference block for the current block, the intra mode information for the current block may be first determined based on the first reference block for the current block; then the first transform parameter is determined based on the intra mode information.

It may be understood that in the present disclosure, the intra mode information for the current block may include indication information of the traditional intra prediction mode determined after the intra prediction mode mapping.

It should be noted that in the embodiment of the present disclosure, when determining the intra mode information for the current block based on the first reference block for the current block, the horizontal gradient and the vertical gradient corresponding to the first reference block for the current block may be determined first; then, the intra mode information for the current block is determined based on the horizontal gradient and the vertical gradient.

It should be noted that in the embodiment of the present disclosure, when determining the horizontal gradient and the vertical gradient corresponding to the first reference block for the current block, the horizontal gradient and the vertical gradient corresponding to the first reference block may be determined based on a preset operator.

For example, in some embodiments, a preset operator may be used for determining gradient information, for example, the preset operator may be a Sobel operator. Here, the calculation of horizontal gradient and vertical gradient for the first reference block may be performed by using the Sobel operator.

For example, in some embodiments, the Sobel operator includes $G_x$ and $G_y$, $G_x$ is used to calculate the horizontal gradient, and $G_y$ is used to calculate the vertical gradient.

$$G_x = \begin{bmatrix} -1 & 0 & 1 \\ -2 & 0 & 2 \\ -1 & 0 & 1 \end{bmatrix} \quad (8)$$

$$G_y = \begin{bmatrix} -1 & -2 & -1 \\ 0 & 0 & 0 \\ 1 & 2 & 1 \end{bmatrix} \quad (9)$$

Further, in the embodiment of the present disclosure, when determining the intra mode information for the current block based on the horizontal gradient and the vertical gradient, the first prediction histogram may be first determined based on the horizontal gradient and the vertical gradient; when there is no non-zero amplitude in the first prediction histogram, it is determined that intra mode information for the current block is a PLANAR mode; when there is a non-zero amplitude in the first prediction histogram, intra mode information for the current block is determined based on a gradient direction with the maximum amplitude in the first prediction histogram.

It should be noted that in the embodiment of the present disclosure, the intra mode information for the current block which is determined based on the gradient direction with the maximum amplitude in the first prediction histogram may be a traditional intra prediction mode predModeIntra, where predModeIntra is between [0, 66].

For example, in some embodiments, based on the first reference block directly acquired through the prediction parameter, the vertical gradients and the horizontal gradients of all prediction samples of the first reference block may be calculated, and then the direction with the maximum gradient may be mapped to a traditional intra prediction mode, that is, the intra mode information predModeIntra for the current block is determined.

That is, in the embodiment of the present disclosure, gradient information between samples in the first reference block may be used to derive a dominant prediction direction, thereby completing the intra prediction mode mapping based on the first reference block, and acquiring corresponding intra mode information predModeIntra.

For example, in some embodiments, the horizontal gradients and the vertical gradients of the first reference block under the Intra TMP may be calculated through a Sobel operator, and then the gradient analysis may be completed and the traditional intra prediction mode may be derived based on the first reference block, that is, the corresponding intra mode information predModeIntra may be determined. Here, $G_x$ is used to calculate the horizontal gradient and $G_y$ is used to calculate the vertical gradient.

For example, in some embodiments, the input is a first reference block in the BV-based mode, i.e. an initial prediction value p[x][y], where x = 0.. nTbW -1 and y = 0.. nTbH -1, where nTbW represents the width of the current transform block acquired through BV-based prediction mode, and nTbH represents the height of the current transform block acquired through BV-based prediction mode.

For example, in some embodiments, the output is intra mode information for the current block, a traditional intra prediction mode predModeIntra, where predModeIntra is between [0, 66].

For example, in some embodiments, in the process of performing intra prediction mode mapping based on the first reference block, the following operations may be sequentially performed.

$$mapHgV = \{\{2, 1\}, \{1, 2\}\} \text{ and } mapVgH = \{\{3, 4\}, \{4, 3\}\}$$

are set.

angTable = {0, 2048, 4096, 6144, 8192, 12288, 16384, 20480, 24576, 28672, 32768, 36864, 40960, 47104, 53248, 59392, 65536} is set.

$$angOffset = \{18, 18, 50, 50\}$$

is set.

HoG[67] is set to an array including the gradient strength of each traditional intra prediction mode. At the beginning of this process, all values in all HOG arrays are initialized to 0. Gradient histogram

For each prediction sample p[x][y], with x = 1... nTbW-2, and y = 1... nTbH-2, the calculation process is as follows:

The horizontal gradient gHor[x][y] = p[x-1][y-1] + 2.p[x-1][y] + p[x-1][y+1]-p[x+1][y-1]-2.p[x+1][y]-p[x+1][y+1] is calculated.

The vertical gradient gVer[x][y] = p[x-1][y-1] + 2.p[x][y-1] + p[x+1][y-1]-p[x-1][y+1] - 2.p[x][y+1]-p[x+1][y+1] is calculated.

$$iAmp[x][y] = abs(gHor[x][y]) + abs(gVer[x][y])$$

is calculated.

$$signH[x][y] = gHor[x][y] < 0? \ 1 : 0$$

is calculated.

$$signV[x][y] = gVer[x][y] < 0? \ 1 : 0$$

is calculated.

$$HgV[x][y] = (abs(gHor[x][y]) > abs(gVer[x][y])? \ 1 : 0)$$

is calculated.

region[x][y] = (HgV[x][y] == 1? mapHgV[signH[x][y]][signV[x][y]]: mapVgH[signH[x][y]][signV[x][y]]) is calculated.

grad[x][y] = (HgV[x][y] == 1? abs(gVer[x][y])/abs(gHor[x][y]): abs(gVer[x][y])/abs(gHor[x][y]) is calculated.

$$grad[x][y] = round \ (grad[x][y] \times (1 << 16))$$

is calculated.

The index angIdx[x][y] = argmin$_i$(abs(angTable[i]-grad[x][y])), i.e., angle index is calculated.

The intra mode ipm[x][y] = angOffset[region[x][y]] + angIdx[x][y], i.e., intra prediction mode is calculated.

$$HOG[ipm[x][y]] = HOG[ipm[x][y]] + iAmp[x][y]$$

is set.

If the HOG has no non-zero amplitude:
predModeIntra is set to PLANAR

Otherwise:

predModeIntra is set to argmax$_i$(HoG[i])

Here, argmax$_i$(L[i]), where i = 0,..., N, returns an index between 0 and N that maximizes L (if there are multiple maximums, the smaller index is returned). argmin$_i$(L[i]), where i = 0,..., N, returns an index between 0 and N that minimizes L (if there are multiple maximums, the smaller index is returned).

Finally, the mapping of the intra prediction mode predModeIntra is completed.

It should be noted that in the embodiment of the present disclosure, compared with the final prediction values acquired after data processing processes such as filtering, fusion, and sub-pixel processing, the initial prediction value directly acquired based on the prediction parameter, for example, the first reference block directly indicated by the BV, has richer texture edge information. This is because data processing (such as filtering, fusion, and sub-pixel processing, e.g., low-pass filtering,) performed based on the initial prediction value is equivalent to a smoothing operation, resulting in the loss of some texture edge information in the acquired processed final prediction value.

Correspondingly, in the embodiment of the present disclosure, in the process of performing the mapping of the intra prediction mode based on the prediction value, since the initial prediction value has richer texture edge information, compared with the process of performing the mapping of the intra prediction mode by using the final prediction value, more accurate gradient direction, prediction angle, and angular amplitude can be derived by using the initial prediction value, so that a more matching traditional intra prediction mode can be determined.

Further, in the embodiment of the present disclosure, when determining the first transform parameter based on the intra mode information, the transform kernel candidate set may be first determined based on the intra mode information for the current block; herein, the transform kernel candidate set includes any number of transform kernels; the transform kernel candidate set includes any one of an LFNST transform kernel candidate set, an NSPT transform kernel candidate set, or a transform kernel candidate set determined based on the prediction direction; then a first transform kernel is determined from the transform kernel candidate set; finally, the first transform parameter may be determined based on the first transform kernel.

It should be noted that in the embodiment of the present disclosure, the first transform parameter may be understood as a first transform kernel or a first transform matrix, that is, the first transform kernel may be a first transform matrix.

It should be noted that in the embodiment of the present disclosure, the size of the matrix corresponding to the first transform parameter may be determined based on the size of the current block, that is, the size of the first transform matrix may be determined based on the size of the current block.

That is to say, in the embodiment of the present disclosure, the transform kernel candidate set determined based on the intra mode information for the current block may be any one of transform kernel candidate sets determined based on the prediction direction, for example, the transform kernel candidate set may be an LFNST transform kernel candidate set or an NSPT transform kernel candidate set, which is not specifically limited in the present disclosure.

It should be noted that in the embodiment of the present disclosure, when determining the LFNST transform kernel candidate set based on the intra mode information for the current block, the LFNST transform kernel candidate set corresponding to the intra mode information may be determined based on the mapping relationships between the intra modes and the transform kernel candidate sets.

For example, in some embodiments, after determining that the current block may use the LFNST technology, it is necessary to determine the LFNST transform kernel (which may be represented by kernel) used for the current block. Here, there are four transform kernel candidate sets in LFNST, and the four transform kernel candidate sets may include set0, set1, set2 and set3. The selected transform kernel candidate set may be implicitly derived based on the coding parameters for the current block or the coding block where the current block is located. For example, based on the intra prediction mode for the current block, it may be determined which of the four transform kernel candidate sets is used.

It may be understood that in the embodiment of the present disclosure, the value of the LFNST index number (which may be represented by SetIdx) may be determined based on the value of the intra mode information predModeIntra for the current block. Specifically, the value of the LFNST index number is set to indicate that LFNST is used for the current block and to indicate the index number of the LFNST transform kernel in the LFNST transform kernel candidate set.

Generally, the LFNST transform set includes four transform kernel candidate sets (set0, set1, set2, and set3), which correspond to SetIdx values of 0, 1, 2, and 3, respectively.

For example, in some embodiments, the mapping relationships between the intra modes and the transform kernel candidate sets may be as shown in Table 4, and the corresponding LFNST transform kernel candidate set may be determined based on the value of predModeIntra and Table 4.

Further, in an embodiment of the present disclosure, the first transform kernel may be determined from the LFNST transform kernel candidate set, to determine the first transform parameter; then, the transform kernel index number is determined based on the first transform kernel, and the transform kernel index number is signalled into the bitstream.

It should be noted that, in the embodiment of the present disclosure, since the LFNST transform kernel candidate set includes two preset transform kernels, by setting the transform kernel index number, the transform kernel indicated by the transform kernel index number may be selected from the LFNST transform kernel candidate set based on the value of the acquired transform kernel index number. For example, when the value of the transform kernel index number is 1, the first LFNST transform kernel group (i.e., the first transform matrix group) in the LFNST transform kernel candidate set will be selected. Alternatively, when the value of the transform kernel index number is 2, the second LFNST transform kernel group (i.e., the second transform matrix group) in the LFNST transform kernel candidate set will be selected.

Furthermore, in the embodiment of the present disclosure, for the value of the transform kernel index number (i.e., LFNST_idx), when the value of the transform kernel index number is equal to 0, LFNST is not used; when the value of the transform kernel index number is greater than 0, LFNST is used, and the index of the transform kernel is equal to the value of the transform kernel index number, or the index of the transform kernel is equal to the value of the transform kernel index number minus 1. Subsequently, the LFNST transform kernel used for the current block, that is, the first transform kernel, may be further determined based on the transform kernel index number.

Furthermore, in the embodiment of the present disclosure, the primary transform coefficient length parameter and the secondary transform coefficient length parameter may be configured.

It may be understood that in the embodiment of the present disclosure, it is also necessary to configure the core parameters. Here, for configuring core parameters, it is necessary to first configure the length (which may be represented by nonZeroSize) of the input secondary transform coefficient vector for LFNST calculation, that is, configure the secondary transform coefficient length parameter, and further configure the length (which may be represented by nLfnstOutSzie) of the output primary transform coefficient vector, that is, the primary transform coefficient length parameter.

Furthermore, in the embodiment of the present disclosure, when determining the first transform parameter based on the first transform kernel, the size of the transform matrix is determined based on the primary transform coefficient length parameter and/or the secondary transform coefficient length parameter. Thus, the first transform parameter may be determined based on the first transform kernel and the size of the transform matrix.

It may be understood that in the embodiment of the present disclosure, the first transform parameter may be a transform matrix for the current block.

It should be noted that in the embodiment of the present disclosure, compared with the final prediction values acquired after data processing processes such as filtering, fusion, and sub-pixel processing, the initial prediction value directly acquired based on the prediction parameter, for example, the first reference block directly indicated by the BV, has more texture edge information. Therefore, in the process of performing the intra prediction mode mapping based on the prediction values, more accurate gradient directions, prediction angles, and angular amplitudes can be derived by using the initial prediction values, thereby determining a more matching traditional intra prediction mode.

Correspondingly, in the embodiment of the present disclosure, after determining the corresponding intra prediction mode by using the initial prediction value directly acquired based on the prediction parameter, for example, the first reference block directly indicated by the BV, an LFNST transform kernel with higher accuracy can be further acquired, thereby determining a more matching transform matrix.

For example, in some embodiments, as illustrated in FIG. 12, when deriving a transform parameter, that is, a transform matrix, the following operations may be specifically included.

In operation S5.1, determining the transform set:
when determining the transform set, the mapped intra prediction mode predModeIntra may be used for performing a selection among four transform sets (set0, set1, set2, set3), to determine the corresponding transform set, that is, the corresponding LFNST transform kernel candidate set is determined.

In operation S5.2, determining the transform matrix group:
when determining the transform matrix group, that is, determining the corresponding transform kernel, which of the two of transform matrix groups in the transform set is selected is determined based on lfnst_idx transmitted from the encoding side. The first transform matrix group is selected when lfnst_idx is 1, and the second transform matrix group is selected when lfnst_idx is 2.

In operation S5.3, selecting the transform matrix size.
when selecting the transform matrix size, each transform matrix group includes two base transform matrix sizes, and the base transform matrix sizes used are 16×16 and 48×16. The selection is performed based on nLfnstOutSzie; if nLfnstOutSzie is 16, a base transform matrix of 16×16 is selected; and if nLfnstOutSzie is 48, a base transform matrix of 48×16 is selected. When nonZeroSize is 8, only the first 8 rows of the transform matrix are used for matrix multiplication calculation.

In operation 1504, the prediction block for the current block is determined based on the first reference block for the current block.

In the embodiment of the present disclosure, after determining the first reference block for the current block based on the prediction parameter for the current block, the prediction block for the current block may be further determined based on the first reference block for the current block.

Furthermore, in the embodiment of the present disclosure, when determining the prediction block for the current block based on the first reference block for the current block, a refinement process may be performed on the first reference block based on a preset processing strategy to determine the prediction block for the current block.

It should be noted that in the embodiment of the present disclosure, the preset processing strategy includes at least one of multiple processes: fusion processing, filtering processing, sub-pixel processing, or sample flipping processing.

For example, in some embodiments, in the IntraTMP mode, when determining the prediction block for the current block based on the first reference block for the current block, a method of acquiring the prediction values by using the positions corresponding to multiple BVs for fusion, a method of copying after filtering the reference block corresponding to the BV, and a method of performing sub-pixel processing on the BVs to interpolate their corresponding reference blocks and then copy them may be used.

For example, in a region search process, after acquiring the BV candidate list through template matching, the first N entries (for example, N = 3) of the BV candidate list are selected for weighted fusion. This method may be referred to as an IntraTMP Fusion mode.

Alternatively, after acquiring a best BV, multiple points around the BV are selected, and the weighted fusion is performed on prediction values for the multiple points, to acquire the prediction values. This method may be referred to as an IntraTMP FLM mode.

Alternatively, after acquiring a best BV, the template is sorted with sub-pixel precision, to select the best direction and precision, and a prediction value is calculated by using an interpolation filter. This method may be referred to as IntraTMP SubPel mode.

For example, in some embodiments, in the IBC mode, in addition to the above basic copying method for acquiring the prediction values, there is also a method, in IBC flip mode, where the prediction region is horizontally or vertically flipped before being used as the prediction value. For example, a syntax element indicates whether to flip, and if flipped, whether to flip horizontally or vertically. The horizontal or vertical inverse rearrangement for the reference region samples is performed based on the indication of the syntax, to acquire the prediction sample values of the coding block.

Alternatively, the template is used to establish a model between the current block and the prediction region, and the prediction value of the current block is acquired by processing the prediction block based on the model. For example, IBC LIC mode, applied to IBC MEGRE and IBC ABVP, uses linear equation to compensate for local illumination variations. Similar to the LIC of inter prediction in VVC, the parameters of the linear equation may be represented by a scaling parameter $\alpha$ and an offset parameter $\beta$, i.e., $\alpha \times p[x] + \beta$, to compensate for illumination variation, where p[x] is the reference sample pointed to by the BV at the position x in the current picture. The least squares method is used to derive the linear model parameters.

Based on the above method for acquiring the prediction values, there is also FIBC mode, which establishes a linear model between the template of the reference block corresponding to the BV and the template for the current block, acquires filter coefficients, and then applies the linear filtering model to the current block to acquire a final prediction value. Similar to the IntraTMP Fusion mode, there is also a prediction mode that fuses multiple IBC prediction blocks determined based on the relationships between the multiple prediction blocks and the current block template.

On the basis of the prediction value acquisition above, weighted prediction with other intra prediction manners may be performed, and the result obtained through the weighted prediction may be used as the final prediction result.

The weighted prediction manner includes: a combined inter and intra prediction (CIIP) manner in VVC, that is, at each sample position, the weighted prediction is performed on the results acquired from the above prediction process and the prediction results acquired from the ordinary intra directional prediction mode; the inter geometric prediction mode GPM (Geometric Partitioning Mode) in VVC, that is, based on wedge partitioning, different prediction modes are used in different wedge regions to acquire results, and the weighted fusion complying with certain rules is performed near the wedge partitioning line.

For example, in some embodiments, in the Intra TMP technology, there are different prediction manner for the different prediction mode. For example, in the Intra TMP Fusion technology, after acquiring block vectors BVs for N candidate templates, N candidate reconstructed blocks are acquired through the BVs, and then the weighted fusion is performed on the N candidate reconstructed blocks to acquire a prediction block for the current coding block. Specifically, the final prediction values are generated through the following operations: acquiring N candidate reconstructed blocks, determining weighted fusion weights, and generating the prediction values through weighted fusion.

Herein, when acquiring N candidate reconstructed blocks, block vectors BVs for N candidate templates are acquired, and candidate reconstructed blocks $RefBlock_n$ are directly acquired in the current picture based on $BV_n$, herein, the horizontal offset of $BV_n$ is $pX_n$ and the vertical offset of $BV_n$ is $pY_n$, where n = 0, 1..., N-1.

This is implemented through a simple translation and copying. The specific operation is as follows, for x = 0... nTbW-1, and y = 0... nTbH-1: $RefBlock_n[x][y] = recSamples[x + pX_n][y + pY_n]$.

Here, recSamples represents the reconstructed samples of the current picture.

When determining the weighted fusion weights, after acquiring the N candidate reconstructed blocks RefBlock, the weighted fusion weights W for the N candidate reconstructed blocks are required to be calculated. The weights may be predefined determination values, or may be values adaptively calculated by using cost values, sample values, or the like.

For example, in some embodiments, in an embodiment of the Intra TMP Fusion technology, the weighted fusion weights are derived by minimizing the MSE between the reconstructed values of the candidate template ($refT_n$) and the sample values of the template ($refpredT_n$) to be predicted.

Specifically, the MSE minimization process takes the autocorrelation matrix of the first P matching reference samples refT, the cross-correlation vector between the first P matching reference samples refT and the neighbouring template samples curT of the current coding block as inputs, and outputs the weight of the reconstructed block for each matching reference entry.

When generating prediction values through weighted fusion, a prediction block is calculated based on each candidate reconstructed blocks and a weighted fusion weight for the each candidate reconstructed block. Specifically, the value of each candidate reconstructed block is multiplied by its corresponding weight, and then a sum operation is performed to acquire the current prediction block (i.e., weighted prediction).

For x = 0 ... nTbW-1 and y = 0 ... nTbH-1, the prediction values are calculated as shown in formula (2). Each prediction value $predSamples_{x, y}$ is stored spatially, to generate the output prediction block for Intra TMP Fusion.

For example, in some embodiments, in the IntraTMP FLM mode, a linear filtering model is established by using the best matching template acquired from the previous search process and the template of the current coding block. It mainly includes the following two processes: determining the reconstructed region for calculating the filter coefficients, and calculating the filter coefficients. For example, as illustrated in FIG. 7, assuming that the number of filter taps, nTap, is 5, the shape of the filter is as illustrated in the left figure, $c_0$ to $c_4$ are respective tap coefficients of the filter, and a corresponding point of the tap coefficient $C_0$ is the reconstructed sample $ref$[i][j] at the corresponding position of the current sample to be predicted, $Y^{pred}$[i][j], in the best matching block; the remaining points are reconstructed samples, neighbouring to the current spatial position, in the best matching reconstructed block. The point in the right figure is the acquired prediction sample $Y^{pred}$[i][j].

For each current sample (i, j) to be predicted, a sample position in the filter template is defined as (k, l), then the corresponding reconstructed sample in the best matching block during filtering is defined as ref[i + k][j + l], and each filter coefficient at the position (k, l) in the filter template is defined as $c_{k, l}$, and the specific calculation process is shown in formulas (3) to (6).

For example, in some embodiments, in the Intra TMP SubPel mode, for the best BV, the 1/4, 1/2, 3/4, as well as the eight directions of top, bottom, left, right, top-left, top-right, bottom-left, and bottom-right, are traversed. A sort is performed based on template cost; and for the reference block corresponding to the BV with the minimum template cost, an interpolation filter is used to calculate the prediction values.

For example, in some embodiments, in the IBC technology, in the IBC flip mode, an acquisition method is needed, which the prediction region is horizontally or vertically flipped before being used as the prediction value. For example, a syntax element indicates whether to flip, and if flipped, whether to flip horizontally or vertically. The horizontal or vertical inverse rearrangement for the reference region samples is performed based on the indication of the syntax, to acquire the prediction sample values of the coding block.

For example, in some embodiments, in the IBC LIC mode, the template is used to establish a model between the current block and the prediction region, and the prediction value for the current block is acquired by processing the prediction block based on the model. IBC LIC mode, applied to IBC MEGRE and IBC ABVP, uses linear equation to compensate for local illumination variations. Same to the LIC of inter prediction in VVC, the parameters of the linear equation may be represented by a scaling parameter $\alpha$ and an offset parameter $\beta$, i.e., $\alpha \times p[x] + \beta$, to compensate for illumination variation, where p[x] is the reference sample pointed to by the BV at the position x in the current picture. The least squares method is used to derive the linear model parameters.

For example, in some embodiments, in the filter IBC mode, a linear model is established by using the template of the current block and the template of the reference block corresponding to the BV, and the filter coefficients are acquired and used for the current block, to acquire the final prediction value. For each current sample (i, j) to be predicted, a sample position in the filter template is defined as (k, l), then the corresponding reconstructed sample in the best matching block during filtering is defined as ref[i + k][j + l], and each filter coefficient at the position (k, l) in the filter template is defined as $c_{k, l}$,

and the specific calculation process is shown in formulas (3) to (5).

On the basis of the prediction value acquisition above, weighted prediction with other intra prediction manners may be performed, and the result obtained through the weighted prediction may be used as the final prediction result.

The weighted prediction manner includes: a combined inter and intra prediction (CIIP) manner in VVC, that is, at each sample position, the weighted prediction is performed on the results acquired from the above prediction process and the prediction results acquired from the ordinary intra directional prediction mode; the inter geometric prediction mode GPM (Geometric Partitioning Mode) in VVC, that is, based on wedge partitioning, different prediction modes are used in different wedge regions to acquire results, and the weighted fusion complying with certain rules is performed near the wedge partitioning line.

An example of the operation process in the BV-based CIIP mode is that: weighted fusion for the BV-based prediction value for the current block and the prediction value in a certain intra mode is performed, and the BV-based prediction part may be acquired by adopting traditional MEGRE, TM MEGRE, MBVD, and ABVP modes.

For the case where the BV-based prediction parts adopts different modes, different weights may be set. For example, when the BV-based prediction part adopts the traditional IBC MEGRE, TM MEGRE and MBVD modes, the weight ratio of the BV-based prediction and the intra prediction is 13: 3, the intra mode includes the TIMD mode of the current block and the intra prediction mode at the candidate BV position, if the second prediction mode and the first prediction mode in the intra mode are the same, it is determined whether the first prediction mode is the PLANAR mode, if yes, the second prediction mode is replaced with the horizontal prediction mode; otherwise, the second prediction mode is replaced with the PLANAR mode. When the BV-based prediction part adopts an ABVP mode, a weight ratio of the BV-based prediction and the intra prediction is 1: 1, the TIMD mode is obtained as the first prediction mode for the intra prediction mode. If the derived prediction mode is the horizontal prediction mode, the PLANAR mode is obtained as the second prediction mode for the intra prediction mode; otherwise, the horizontal prediction mode is obtained as the second prediction mode for the intra prediction mode.

An example of the operation process in the BV-based GPM mode: the BV-based prediction part may adopt traditional MEGRE and TM MEGRE.

For example, one partition is BV-based prediction mode and one partition is INTRA mode may be implemented, an intra prediction mode (IPM) candidate list is constructed by using the same method as inter GPM, and the IPM candidate list size is predefined as 3.

In the specific implementation, a total of 48 geometric partitioning modes may be classified into two geometric partitioning mode sets, as shown in Table 2 and Table 3.

When using a BV-based GPM, a flag for geometric partitioning mode sets of a BV-based GPM (e.g., IBC-GPM) is transmitted to indicate whether a first set or second set of geometric partitioning modes is selected, and then a geometric partitioning mode index is transmitted; a partition flag for the picture in the BV-based GPM (or IBC-GPM) is transmitted to indicate whether intra prediction is used for the first sub-partition. Herein, for the intra prediction part, an intra prediction mode index is required to be transmitted; and for the IBC prediction part, the MEGRE index is required to be transmitted.

In operation 1505, a reconstructed block for the current block is determined based on the prediction block and the first transform parameter for the current block.

In an embodiment of the present disclosure, after determining the first reference block and the prediction block for the current block based on the prediction parameter for the current block, the reconstructed block for the current block may be further determined based on the prediction block and the first transform parameter for the current block.

Furthermore, in the embodiment of the present disclosure, the first transform coefficient corresponding to the prediction residual may be determined.

Further, in the embodiment of the present disclosure, when determining the reconstructed block for the current block based on the prediction block and the first transform parameter for the current block, the prediction residual may be determined based on the first transform parameter and the first transform coefficient. Then, the reconstructed block for the current block may be determined based on the prediction block and the prediction residual for the current block.

It should be noted that in the embodiment of the present disclosure, when determining the prediction residual based on the first transform parameter and the first transform coefficient, the second transform coefficient may be determined by performing an inverse secondary transform based on the first transform coefficient and the first transform parameter; and then the prediction residual may be determined by performing inverse primary transform based on the second transform coefficient.

It may be understood that in the embodiment of the present disclosure, the first transform coefficient may be an inverse secondary transform coefficient vector u[i], and the second transform coefficient may be an inverse primary transform coefficient vector v[j].

That is, in the embodiment of the present disclosure, after determining the first transform parameter, that is, the transform matrix, the inverse secondary transform coefficient vector u[i], where i = 0... nonZeroSize-1, may be taken as an input, and multiplied by the transform matrix to acquire the inverse primary transform coefficient vector v[j], where j = 0... nLfnstOutSzie-1. Then, the one-dimensional inverse primary transform coefficient vector v[j], where j = 0...nLfnstOutSzie-1, may be used to construct a two-dimensional inverse primary transform coefficient matrix d'[x][y] for the current transform block, where x = 0...nLfnstSize-1 and y = 0...nLfnstSize-1. Based on different intra prediction modes, there are two scanning orders for filling: horizontal and vertical scanning modes. After that, the inverse primary transform coefficient matrix is used to perform the inverse primary transform to generate the prediction residual.

Further, in the embodiment of the present disclosure, the secondary transform coefficient vector u[i] is taken as an input, and is multiplied by the transform matrix to acquire the primary transform coefficient vector v[j], here i = 0, 1,..., nonZeroSize-1, and j = 0, 1,..., nLfnstOutSize-1. Assuming that the transform matrix acquired in the previous operation is lowFreqTransMatrix, the specific calculation process of v[j] is as follows.

$$v[j] = \text{Clip3}(\text{CoeffMin}, \text{CoeffMax}, (\sum_{j=0}^{\text{nonZeroSize-1}} \text{lowFreqTransMatrix}[j][i] \times u[i] + 64) >> 7) \qquad (10)$$

Herein, Clip3 is a clipping operation that restricts the value of the coefficient between the following two numbers, as shown below:

$$\text{CoeffMin} = -(1 << 15)\,(11)\,\text{CoeffMax} = (1 << 15) - 1 \quad (12)$$

Furthermore, after the above matrix calculation, the transform processing of the transform coefficients may be implemented. Here, for 4 × 4 LFNST, 16 or 8 coefficients will be input, and 16 coefficients will be output; for 8 × 8 LFNST, 16 or 8 coefficients will be input, and 48 coefficients will be output, to realize LFNST transform processing of the transform coefficients.

Furthermore, in the embodiment of the present disclosure, after determining the prediction residual corresponding to the current block and the prediction block for the current block, the picture reconstruction process for the specified colour component specified in the decoding standard may be invoked. In order to realize the reconstruction operation, for the modes with residual, a sum operation for the prediction signal and the residual signal is performed.

In summary, through the encoding method proposed in the above operations 1501 to 1505, the initial prediction value based on the BV is selected, that is, the prediction direction is directly derived by using the first reference block directly indicated by the BV, so as to guide the selection of the direction-related transform set. On the one hand, compared with the final prediction value acquired after data processing processes such as filtering, fusion, and sub-pixel processing, the initial prediction value has richer texture edge information; more accurate gradient direction, prediction angle, and angular amplitude can be derived by using the initial prediction value, so that a more matching traditional intra prediction mode can be determined, a more accurate LFNST transform kernel can be further acquired, and a more matching transform matrix can be determined, thereby effectively improving encoding and decoding performance. On the other hand, after determining the first reference block directly indicated by the BV, the operations of generating the prediction block, generating the transform parameter and the residual can be performed in parallel, thereby shortening the length of critical path for encoding and decoding, solving the problem of high complexity, improving the encoding and decoding efficiency, and facilitating hardware design and implementation.

Further, in the embodiment of the present disclosure, after determining the first reference block for the current block, the prediction block for the current block may be determined based on the first reference block for the current block; then a second transform parameter for the current block may be determined based on the prediction block for the current block; and a reconstructed block for the current block may be determined based on the prediction block for the current block and the second transform parameter for the current block.

It should be noted that in the embodiment of the present disclosure, the transform parameter for the current block, such as the second transform parameter, may include an index reference (such as LFNST) for indicating the transform matrix to be used, or may be the transform matrix itself.

Further, in the embodiment of the present disclosure, when it is determined to use the first transform parameter, the value of the first identifier information is a first value; when it is determined to use the second transform parameter, the value of the first identifier information is a second value; and the first identifier information is signaled into the bitstream.

That is, in the embodiment of the present disclosure, whether to use the first transform parameter determined based on the first reference block or the second transform parameter determined based on the prediction block may be determined based on the first identifier information transmitted in the bitstream.

It may be understood that in the embodiment of the present disclosure, the initial prediction value (that is, the first transform parameter generated through the first reference block for the current block) and the final prediction value (that is, the second transform parameter generated through the prediction block for the current block) may be mixed and used. Herein, a determination may be made, according to certain conditions, as to which set of data the prediction direction (or gradient direction) is derived from. For example, the decoding side may determine whether to use the first transform parameter or the second transform parameter based on the first identifier information determined by decoding bitstream.

It should also be noted that in the embodiment of the present disclosure, the first value is different from the second value, and the first value and the second value may be in parameter form or digital form. Specifically, the first prediction mode identifier information and the second prediction mode identifier information may be parameters written in a profile, or may be values of a flag, which are not specifically limited here. Further, for the first value and the second value, the first value may be set to 1 and the second value may be set to 0. Alternatively, the first value may be set to 0 and the second value may be set to 1. Alternatively, the first value may be set to true and the second value may be set to false. Alternatively, the first value may be set to false and the second value may be set to true. In the embodiment of the present disclosure, the first value is set to 0 and the second value is set to 1, which are not specifically limited here.

For example, in some embodiments, at the encoding side, based on whether the prediction direction derived from the initial prediction value is consistent with the prediction direction derived from the final prediction value, it may be determined whether to directly adopt the prediction direction derived from one of the prediction data; or to use the first identifier information in the bitstream to indicate which prediction data is used to derive the prediction direction.

Further, in an embodiment of the present disclosure, the first prediction histogram corresponding to the first reference block and the second prediction histogram corresponding to the prediction block may be determined, respectively.

Correspondingly, in an embodiment of the present disclosure, the first gradient direction and the second gradient direction in the first prediction histogram may be determined; when an amplitude difference between the first gradient direction and the second gradient direction is less than or equal to a preset threshold, a reconstructed block for the current block is determined based on the first transform parameter; when an amplitude difference between the first gradient direction and the second gradient direction is greater than a preset threshold, a reconstructed block for the current block is determined based on the second transform parameter.

It should be noted that in the embodiment of the present disclosure, the first gradient direction may be a gradient direction with the highest (maximum) amplitude in the first prediction histogram, and the second gradient direction may be a gradient direction with the second-highest amplitude in the first prediction histogram.

Correspondingly, in an embodiment of the present disclosure, the first gradient direction and the second gradient direction in the second prediction histogram may be determined; when an amplitude difference between the first gradient direction and the second gradient direction is less than or equal to a preset threshold, a reconstructed block for the current block is determined based on the first transform parameter; when an amplitude difference between the first gradient direction and the second gradient direction is greater than a preset threshold, a reconstructed block for the current block is determined based on the second transform parameter.

It should be noted that in the embodiment of the present disclosure, the first gradient direction may be a gradient direction with the highest (maximum) amplitude in the second prediction histogram, and the second gradient direction may be a gradient direction with the second-highest amplitude in the second prediction histogram.

It may be understood that in the embodiment of the present disclosure, the initial prediction value (that is, the first transform parameter generated through the first reference block for the current block) and the final prediction value (that is, the second transform parameter generated through the prediction block for the current block) may be mixed and used. Herein, the determination may be made based on the mode histogram (first prediction histogram or second prediction histogram). If there is a large difference between the highest amplitude and the second-highest amplitude, for example, exceeding a preset threshold, it may be considered that there is a peak value, and then the prediction value (initial prediction value) before data processing is used for direction derivation; otherwise, the prediction value (final prediction value) acquired after data processing is used for direction derivation.

Further, in the embodiment of the present disclosure, a template direction corresponding to the first template may be determined; a first correlation parameter between the gradient direction with the maximum amplitude in the first prediction histogram and the template direction is determined; at the same time, a second correlation parameter between the gradient direction with the maximum amplitude in the second prediction histogram and the template direction; when the first correlation parameter is greater than or equal to the second correlation parameter, a reconstructed block for the current block is determined based on the first transform parameter; when the first correlation parameter is smaller than the second correlation parameter, the reconstructed block for the current block is determined based on the second transform parameter.

It may be understood that in the embodiment of the present disclosure, the initial prediction value (that is, the first transform parameter generated through the first reference block for the current block) and the final prediction value (that is, the second transform parameter generated through the prediction block for the current block) may be mixed. Herein, the template direction (the template direction of the first template) may be used as a criterion, to compare the gradient direction derived from the reference block (the initial prediction value) before data processing and the gradient direction derived from the prediction block (the final prediction value) acquired after data processing; and the gradient direction close to the template direction may be selected as the finally used gradient direction.

Further, in the embodiment of the present disclosure, when determining the first transform parameter, the horizontal gradient and the vertical gradient corresponding to the first reference block may be determined based on part or all samples in the first reference block.

Further, in the embodiment of the present disclosure, when determining the second transform parameter, the horizontal gradient and the vertical gradient corresponding to the prediction block may be determined based on part samples or all samples in the prediction block.

That is, in the embodiment of the present disclosure, all or part sample values may be selected to derive the direction. For example, it may be analogous to the CCLM point selection manner, where 4 points are selected from the top and left sides respectively for direction derivation.

Further, in the embodiment of the present disclosure, a refinement process may be performed on the first reference block for the current block based on the first processing strategy, and the first prediction block for the first reference block may be determined; then, a refinement process may be performed on the first prediction block based on the second processing strategy, to determine the prediction block for the current block.

Correspondingly, in the embodiment of the present disclosure, the third transform parameter for the current block may be determined based on the first prediction block; then, the reconstructed block for the current block is determined based on the prediction block for the current block and the third transform parameter for the current block,.

It should be noted that in the embodiment of the present disclosure, the transform parameter for the current block, such as the third transform parameter, may include an index reference (such as LFNST) for indicating the transform matrix to be used, or may be the transform matrix itself.

It may be understood that in the embodiment of the present disclosure, if multi-operations processing between the final prediction value and the initial prediction value is required, an intermediate prediction value (i.e., a first prediction block) in the middle of the multi-operations may be selected as an input for determining the prediction direction. For example, when the BV-based prediction value is filtered first and then fused to acquire the final prediction value, the filtered intermediate prediction information may be used as an input to determine a corresponding transform matrix, such as a third transform parameter.

It should be noted that in the embodiment of the present disclosure, the first processing strategy and the second processing strategy may include at least one of multiple processes: fusion processing, filtering processing, sub-pixel processing, or sample flipping processing.

It can be seen that the encoding method proposed in the embodiments of the present disclosure is a reconstructed value acquisition method based on the BV prediction mode. It focuses on prediction value generation and residual secondary transform selection method depending on the prediction value, a direction derivation is performed on the initial prediction value acquired through BV based on a technology similar to DIMD technology, and the derived direction can be used to guide the selection of a transform matrix related to directionality for performing inverse transform to generate the residual. On the one hand, compared with the final prediction value acquired after data processing processes such as filtering, fusion, and sub-pixel processing, the initial prediction value has richer texture edge information; more accurate gradient direction, prediction angle, and angular amplitude can be derived by using the initial prediction value, so that a more matching traditional intra prediction mode can be determined, a more accurate LFNST transform kernel can be further acquired, and a more matching transform matrix can be determined, thereby effectively improving encoding and decoding performance. On the other hand, after determining the first reference block directly indicated by the BV, the operations of generating the prediction block, generating the transform parameter and the residual can be performed in parallel, thereby shortening the length of critical path for encoding and decoding, solving the problem of high complexity, improving the encoding and decoding efficiency, and facilitating hardware design and implementation.

For example, in some embodiments, as illustrated in FIG. 13, the process of reconstructing sample values mainly includes following operations: S1, determining block vectors; S2, generating initial prediction values; S3, generating final prediction values; S4, performing intra prediction mode mapping; S5, determining a transform block matrix; S6, performing inverse secondary transform; S7, performing inverse primary transform; and S8, generating reconstructed values.

Herein, for the operation of the intra prediction mode mapping, the input is no longer the final prediction value for the current block, but the initial prediction value for the current block, that is, the first reference block of the current block, which is directly indicated by BV.

It should be noted that, in the embodiment of the present disclosure, compared with the final prediction values acquired after data processing processes such as filtering, fusion, and sub-pixel processing, the initial prediction value directly acquired based on the prediction parameter, for example, the first reference block directly indicated by the BV, has richer texture edge information. This is because data processing (such as filtering, fusion, and sub-pixel processing, e.g., low-pass filtering,) performed based on the initial prediction value is equivalent to a smoothing operation, resulting in the loss of some texture edge information in the acquired processed final prediction value.

Correspondingly, in the embodiment of the present disclosure, in the process of performing the mapping of the intra prediction mode based on the prediction value, since the initial prediction value has richer texture edge information, compared with the process of performing the mapping of the intra prediction mode by using the final prediction value, more accurate gradient direction, prediction angle, and angular amplitude can be derived by using the initial prediction value, so that a more matching traditional intra prediction mode can be determined.

Correspondingly, in the embodiment of the present disclosure, after determining the corresponding intra prediction mode by using the initial prediction value directly acquired through the prediction parameter, such as the first reference block directly indicated by the BV, an LFNST transform kernel with higher accuracy can be further acquired, so that a more matching transform matrix can be determined, and the encoding and decoding performance can be effectively improved.

For example, in some embodiments, as illustrated in FIG. 14, the process of reconstructing sample values mainly includes following operations: S1, determining block vectors; S2, generating initial prediction values; S3, generating final prediction values; S4, performing intra prediction mode mapping; S5, determining a transform block matrix; S9, performing inverse transform; and S8, generating reconstructed values.

Herein, for the operation of the intra prediction mode mapping, the input is no longer the final prediction value for the current block, but the initial prediction value for the current block, that is, the first reference block of the current block, which is directly indicated by BV.

It should be noted that, in the embodiment of the present disclosure, compared with the final prediction values acquired after data processing processes such as filtering, fusion, and sub-pixel processing, the initial prediction value directly acquired based on the prediction parameter, for example, the first reference block directly indicated by the BV, has richer texture edge information. This is because data processing (such as filtering, fusion, and sub-pixel processing, e.g., low-pass filtering,) performed based on the initial prediction value is equivalent to a smoothing operation, resulting in the loss of some texture edge information in the acquired processed final prediction value.

Correspondingly, in the embodiment of the present disclosure, the transform manner of performing inverse transform in operation S9 may also use other transform manner other than LFNST. For example, when a Non-separable primary transform (NSPT) is adopted, the transform matrix may be determined by using the initial prediction value (directly indicated by the BV) corresponding to the current block.

It should be noted that in the embodiment of the present disclosure, in the above solutions, the prediction parameter for the current block is exemplified by the block vector BV, and the transform manner is exemplified by LFNST to illustrate the encoding method according to the embodiments of the present disclosure, but the prediction parameter and the transform manner are not limited, that is, the solutions proposed in the embodiments of the present disclosure may also be applied to other prediction parameters, transform parameters, and transform manners.

Embodiments of the present disclosure provides an encoding method. Herein, the encoder determines a prediction parameter for a current block; determines a first reference block for the current block based on the prediction parameter for the current block; determines a first transform parameter for the current block based on the first reference block for the current block; determines a prediction block for the current block based on the first reference block for the current block; and determines a reconstructed block for the current block based on the prediction block and the first transform parameter for the current block. That is, in the embodiment of the present disclosure, after determining the first reference block for the current block based on the prediction parameter, it can select to directly use the first reference block before data processing to determine the transform parameter for the current block, and then use the determined transform parameter in combination with the prediction block for the current block acquired after data processing of the first reference block, to complete the reconstruction of the current block. Herein, the data processing process may, to a certain extent, result in the loss of the texture edge information of the prediction block, and thus, compared with the final prediction values after data processing (i.e., the prediction block), the initial prediction values before data processing (i.e., the first reference block) has richer texture edge information. By using the first reference block to derive the prediction direction, it can acquire more accurate transform parameters, thereby effectively improving the encoding and decoding performance. Meanwhile, after determining the first reference block directly indicated by the prediction parameter, the operations of generating the prediction block, generating the transform parameter and the residual can be performed in parallel, which shortens the length of critical path for encoding and decoding, and solves the problem of high complexity, thereby improving encoding and decoding efficiency. Therefore, the encoding and decoding method proposed in the embodiments of the present disclosure can improve encoding and decoding efficiency and performance.

In still another embodiment of the present disclosure, based on the same inventive concept as the above embodiments, FIG. 16 is a first schematic diagram of a composition structure of the encoder according to the embodiment of the present disclosure. As illustrated in FIG. 16, the encoder 100 may include a first determination unit 111.

The first determination unit 111 is configured to: determine a prediction parameter for a current block; determine a first reference block for the current block based on a prediction parameter for the current block; determine a first transform parameter for the current block based on a first reference block for the current block; determine a prediction block for the current block from a first reference block for the current block; determine a reconstructed block for the current block based on the prediction block and the first transform parameter for the current block.

It should be noted that in the embodiment of the present disclosure, the encoder 100 may also be regarded as a data processing mode (or "entropy encoder"), and is configured for encoding the value of the syntax element to be encoded.

It may be understood that in the embodiment of the present disclosure, the "unit" may be a part of a circuit, a part of a processor, a part of a program or software, etc. Or, the "unit" may be a module, or may be non-modular. Furthermore, various components in the embodiment may be integrated into a processing unit, or each unit may physically exist separately, or two or more than two units may be integrated into a unit. The above integrated unit may be implemented in a form of hardware or in a form of software functional module.

If the integrated unit is implemented in a form of software functional module and is not sold or used as an independent product, the integrated unit may be stored in a computer-readable storage medium. Based on such understanding, the technical solutions in the embodiments, in essence or the part that contributes to the related art or all or part of the technical solutions may be embodied in the form of a software product. The computer software product is stored in a storage medium and includes several instructions to make a computer device (which may be a personal computer, a server, or a network device, etc.) or a processor to execute all or part of the operations of the method described in the embodiments. The foregoing storage medium includes various media capable of storing program codes, such as a U disk, a mobile hard disk, a Read Only Memory (ROM), a Random Access Memory (RAM), a magnetic disk, or an optical disk, etc.

Therefore, an embodiment of the present disclosure provides a computer-readable storage medium applied to the encoder 100, and the computer-readable storage medium stores a computer program that implements the encoding method according to any one of the foregoing embodiments when executed by a first processor.

Based on the composition of the encoder 100 and the computer-readable storage medium described above, FIG. 17 is a second schematic diagram of a composition structure of the encoder proposed in the embodiment of the present disclosure. As illustrated in FIG. 17, the encoder 100 may include a first memory 121 and a first processor 122, a first communication interface 123, and a first bus system 124. The first memory 121, the first processor 122, and the first communication interface 123 are coupled together via a first bus system 124. It should be understood that the first bus system 124 is used to achieve connection and communication between these components. The first bus system 124 includes a power bus, a control bus, and a status signal bus in addition to a data bus. However, for the sake of clarity of illustration, various buses are designated as first bus system 124 in FIG. 10.

The first communication interface 123 is configured to receive and transmit signals in the process of transmitting and receiving information with other external network elements.

The first memory 121 is configured to store a computer program executable on the first processor.

The first processor 122, when executing the computer program, is configured to: determine a prediction parameter for a current block; determine a first reference block for the current block based on a prediction parameter for the current block; determine a first transform parameter for the current block based on a first reference block for the current block; determine a prediction block for the current block from a first reference block for the current block; determine a reconstructed block for the current block based on the prediction block and the first transform parameter for the current block.

It may be understood that the first memory 121 in the embodiment of the disclosure may be a volatile memory or a non-volatile memory, or may include both volatile and non-volatile memories. The non-volatile memory may be a ROM, a Programmable ROM (PROM), an Erasable PROM (EPROM), an electrically EPROM (EEPROM), or a flash memory. The volatile memory may be a RAM, which is used as an external cache. Through an exemplary rather than limiting description, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The first memory 121 of the system and method described in the present disclosure is intended to include, but is not limited to these memories and any other suitable types of memories.

The first processor 122 may be an integrated circuit chip with a signal processing capability. During implementation, each operation of the above methods may be completed by an integrated logical circuit in a form of hardware in the first processor 122 or instructions in a form of software. The above first processor 122 may be a general purpose processor, a Digital Signal Processor (DSP), an Application Specific Integrated Circuit (ASIC), a Field Programmable Gate Array (FPGA) or other programmable logical devices, a discrete gate or transistor logical device, a discrete hardware component, etc. The methods, operations and logic block diagrams disclosed in the embodiments of the present disclosure may be implemented or performed. The general purpose processor may be a microprocessor, or the processor may be any conventional processor, etc. Operations in the methods disclosed according to the embodiments of the present disclosure may be directly embodied as being performed and completed by a hardware decoding processor, or performed and completed by a combination of hardware in the decoding processor and a software module. The software module may be located in a mature storage medium in this field such as a RAM, a flash memory, a ROM, a PROM or an EEPROM, a register, etc. The storage medium is located in the first memory 121, and the first processor 122 reads information in the first memory 121, and completes the operations in the above methods in combination with the hardware thereof.

It may be understood that these embodiments described in the present disclosure may be implemented in hardware, software, firmware, middleware, microcode or a combination thereof. For implementation in hardware, the processing unit may be implemented in one or more ASICs, DSPs, DSP Devices (DSPDs), Programmable Logic Devices (PLDs), FPGAs, general purpose processors, controllers, microcontrollers, microprocessors, other electronic units configured to perform functions described in the present disclosure, or combinations thereof. For implementation in software, technologies described in the present disclosure may be implemented by modules (such as processes, functions, etc.) performing the functions described in the present disclosure. Software codes may be stored in a memory and executed by a processor. The memory may be implemented in or out of the processor.

Optionally, as another embodiment, the first processor 122 is further configured to execute the computer program to perform the method described in any one of the foregoing embodiments.

The present embodiment provides an encoder. The encoder determines a prediction parameter for a current block; determines a first reference block for the current block based on the prediction parameter for the current block; determines a first transform parameter for the current block based on the first reference block for the current block; determines a prediction block for the current block based on the first reference block for the current block; and determines a reconstructed block for the current block based on the prediction block and the first transform parameter for the current block. That is, in the embodiment of the present disclosure, after determining the first reference block for the current block based on the prediction parameter, it can select to directly use the first reference block before data processing to determine the transform parameter for the current block, and then use the determined transform parameter in combination with the prediction block for the current block acquired after data processing of the first reference block, to complete the reconstruction of the current block. Herein, the data processing process may, to a certain extent, result in the loss of the texture edge information of the prediction block, and thus, compared with the final prediction values after data processing (i.e., the prediction block), the initial prediction values before data processing (i.e., the first reference block) has richer texture edge information. By using the first reference block to derive the prediction direction, it can acquire more accurate transform parameters, thereby effectively improving the encoding and decoding performance. Meanwhile, after determining the first reference block directly indicated by the prediction parameter, the operations of generating the prediction block, generating the transform parameter and the residual can be performed in parallel, which shortens the length of critical path for encoding and decoding, and solves the problem of high complexity, thereby improving encoding and decoding efficiency. Therefore, the encoding and decoding method proposed in the embodiments of the present disclosure can improve encoding and decoding efficiency and performance.

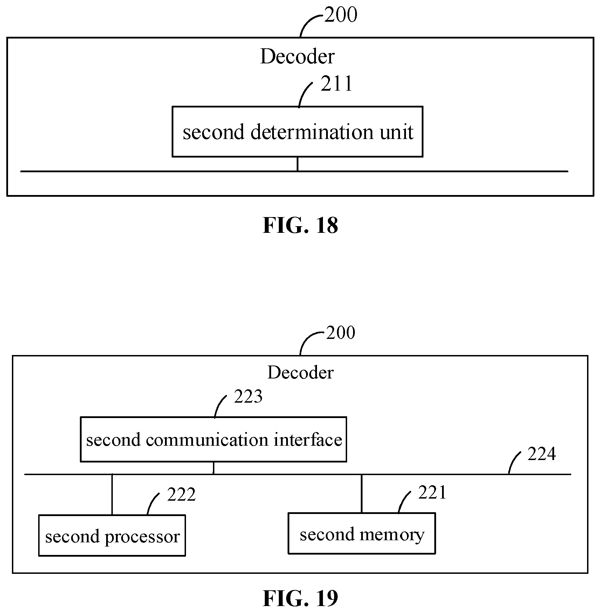

In still another embodiment of the present disclosure, based on the same inventive concept as the above embodiments, FIG. 18 is a first schematic diagram of a composition structure of the decoder according to the embodiment of the present disclosure. As illustrated in FIG. 18, the decoder 200 may include: a second determination unit 211.

The second determination unit 211 is configured to: determine a prediction parameter for a current block; determine a first reference block for the current block based on a prediction parameter for the current block; determine a first transform parameter for the current block based on a first reference block for the current block; determine a prediction block for the current block from a first reference block for the current block; determine a reconstructed block for the current block based on the prediction block and the first transform parameter for the current block.

It should be noted that, in the embodiment of the present disclosure, the decoder 200 may also be regarded as a data processing mode (or "entropy decoder"), and is configured for decoding the value of the syntax element to be decoded.

It may be understood that in the embodiment of the present disclosure, the "unit" may be a part of a circuit, a part of a processor, a part of a program or software, etc. Or, the "unit" may be a module, or may be non-modular. Furthermore, various components in the embodiment may be integrated into a processing unit, or each unit may physically exist separately, or two or more than two units may be integrated into a unit. The above integrated unit may be implemented in a form of hardware or in a form of software functional module.

If the integrated unit is implemented in a form of software functional module and is not sold or used as an independent product, the integrated unit may be stored in a computer-readable storage medium. Based on such understanding, the embodiment provides a computer-readable storage medium, the computer-readable storage medium is applied to the decoder 200. The computer-readable storage medium has stored thereon a computer program that when executed by a second processor, implements the method described in any one of the foregoing embodiments.

Based on the composition of the decoder 200 and the computer-readable storage medium, FIG. 19 is a second schematic diagram of a composition structure of the decoder according to an embodiment of the present disclosure is shown. As illustrated in FIG. 19, the decoder 200 may include a second memory 221, a second processor 222, a second communication interface 223, and a second bus system 224. The second memory 221, the second processor 222 and the second communication interface 223 are coupled together through the second bus system 224. It may be understood that the second bus system 224 is configured to achieve connection and communication between these components. The second bus system 224 includes a power bus, a control bus and a status signal bus in addition to a data bus. However, for the sake of clarity of illustration, various buses are designated as second bus system 224 in FIG. 12.

The second communication interface 223 is configured to receive and transmit signals during the process of transmitting and receiving information with other external network elements.

The second memory 221 is configured to store a computer program executable on the second processor.

The second processor 222, when executing the computer program, is configured to: determine a prediction parameter for a current block; determine a first reference block for the current block based on a prediction parameter for the current block; determine a first transform parameter for the current block based on a first reference block for the current block; determine a prediction block for the current block from a first reference block for the current block; determine a reconstructed block for the current block based on the prediction block and the first transform parameter for the current block.

It may be understood that the second memory 221 in the embodiment of the present disclosure may be a volatile memory or a non-volatile memory, or may include both volatile and non-volatile memories. The non-volatile memory may be a ROM, a Programmable ROM (PROM), an Erasable PROM (EPROM), an electrically EPROM (EEPROM), or a flash memory. The volatile memory may be a RAM, which is used as an external cache. Through an exemplary rather than limiting description, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The second memory 221 of the system and method described in the present disclosure is intended to include, but is not limited to these memories and any other suitable types of memories.

The second processor 222 may be an integrated circuit chip with a signal processing capability. During implementation, each operation of the above methods may be completed by an integrated logical circuit in a form of hardware in the second processor 222 or instructions in the form of software. The second processor 222 described above may be may be a general purpose processor, a Digital Signal Processor (DSP), an Application Specific Integrated Circuit (ASIC), a Field Programmable Gate Array (FPGA) or other programmable logical devices, a discrete gate or transistor logical device, a discrete hardware component, etc. The methods, operations and logic block diagrams disclosed in the embodiments of the present disclosure may be implemented or performed. The general purpose processor may be a microprocessor, or the processor may be any conventional processor, etc. Operations in the methods disclosed according to the embodiments of the present disclosure may be directly embodied as being performed and completed by a hardware decoding processor, or performed and completed by a combination of hardware in the decoding processor and a software module. The software module may be located in a mature storage medium in this field such as a RAM, a flash memory, a ROM, a PROM or an EEPROM, a register, etc. The storage medium is located in the second memory 221, and the second processor 222 reads the information in the second memory 221, and completes the operations in the above methods in combination with the hardware thereof.

It may be understood that these embodiments described in the present disclosure may be implemented in hardware, software, firmware, middleware, microcode or a combination thereof. For implementation in hardware, the processing unit may be implemented in one or more ASICs, DSPs, DSP Devices (DSPDs), Programmable Logic Devices (PLDs), FPGAs, general purpose processors, controllers, microcontrollers, microprocessors, other electronic units configured to perform functions described in the present disclosure, or combinations thereof. For implementation in software, technologies described in the present disclosure may be implemented by modules (such as processes, functions, etc.) performing the functions described in the present disclosure. Software codes may be stored in a memory and executed by a processor. The memory may be implemented in or out of the processor.

Optionally, as another embodiment, the second processor 222 is further configured to execute the computer program to perform the method described in any one of the foregoing embodiments.

The present embodiment provides a decoder. The decoder determines a prediction parameter for a current block; determines a first reference block for the current block based on the prediction parameter for the current block; determines a first transform parameter for the current block based on the first reference block for the current block; determines a prediction block for the current block based on the first reference block for the current block; and determines a reconstructed block for the current block based on the prediction block and the first transform parameter for the current block. That is, in the embodiment of the present disclosure, after determining the first reference block for the current block based on the prediction parameter, it can select to directly use the first reference block before data processing to determine the transform parameter for the current block, and then use the determined transform parameter in combination with the prediction block for the current block acquired after data processing of the first reference block, to complete the reconstruction of the current block. Herein, the data processing process may, to a certain extent, result in the loss of the texture edge information of the prediction block; and thus, compared with the final prediction values after data processing (i.e., the prediction block), the initial prediction values before data processing (i.e., the first reference block) has richer texture edge information. By using the first reference block to derive the prediction direction, it can acquire more accurate transform parameters, thereby effectively improving the encoding and decoding performance. Meanwhile, after determining the first reference block directly indicated by the prediction parameter, the operations of generating the prediction block, generating the transform parameter and the residual can be performed in parallel, which shortens the length of critical path for encoding and decoding, and solves the problem of high complexity, thereby improving encoding and decoding efficiency. Therefore, the encoding and decoding method proposed in the embodiments of the present disclosure can improve encoding and decoding efficiency and performance.

Further, an embodiment of the present disclosure further provides a bitstream. Herein, the bitstream is generated by bit encoding according to to-be-encoded information, here the to-be-encoded information at least includes: prediction mode identifier information for the current block, first identifier information, first transform coefficient corresponding to the prediction residual, or a transform kernel index number.

It should be noted that in the disclosure, terms "including", "include" or any other variants thereof are intended to encompass a non-exclusive inclusion, such that a process, method, article or apparatus including a series of elements includes not only those elements, but also other elements which are not explicitly listed, or elements inherent to such process, method, article or apparatus. Without further limitation, an element defined by a statement "including a..." does not preclude presence of additional identical elements in a process, method, article or apparatus including the element.

The above sequence numbers of the embodiments of the disclosure are only for the purpose of descriptions, and do not represent advantages and disadvantages of the embodiments.

The methods disclosed in several method embodiments provided in the present disclosure may be arbitrarily combined without conflict, to obtain new method embodiments.

The features disclosed in several product embodiments provided in the present disclosure may be arbitrarily combined without conflict, to obtain new product embodiments.

The features disclosed in several method or device embodiments provided in the disclosure may be arbitrarily combined without conflict, to obtain new method or device embodiments.

The above descriptions are only specific implementations of the present disclosure, but the scope of protection of the disclosure is not limited thereto. Variation or replacement easily conceived by any technician skilled in the art within the technical scope disclosed in the present disclosure, should fall within the scope of protection of the disclosure. Therefore, the scope of protection of the present disclosure should be subject to the scope of protection of the claims.

Industrial practicality

Embodiments of the present disclosure proposes an encoding method, a decoding method, a bitstream, an encoder, a decoder, and a storage medium. Herein, the encoder/decoder determines a prediction parameter for a current block; determines a first reference block for the current block based on the prediction parameter for the current block; determines a first transform parameter for the current block based on the first reference block for the current block; determines a prediction block for the current block based on the first reference block for the current block; and determines a reconstructed block for the current block based on the prediction block and the first transform parameter for the current block. That is, in the embodiment of the present disclosure, after determining the first reference block for the current block based on the prediction parameter, it can select to directly use the first reference block before data processing to determine the transform parameter for the current block, and then use the determined transform parameter in combination with the prediction block for the current block acquired after data processing of the first reference block, to complete the reconstruction of the current block. Herein, the data processing process may, to a certain extent, result in the loss of the texture edge information of the prediction block; and thus, compared with the final prediction values after data processing (i.e., the prediction block), the initial prediction values before data processing (i.e., the first reference block) has richer texture edge information. By using the first reference block to derive the prediction direction, it can acquire more accurate transform parameters, thereby effectively improving the encoding and decoding performance. Meanwhile, after determining the first reference block directly indicated by the prediction parameter, the operations of generating the prediction block, generating the transform parameter and the residual can be performed in parallel, which shortens the length of critical path for encoding and decoding, and solves the problem of high complexity, thereby improving encoding and decoding efficiency. Therefore, the encoding and decoding method proposed in the embodiments of the present disclosure can improve encoding and decoding efficiency and performance.

## Claims

1.   A decoding method, applied to a decoder, the method comprising:

   determining a prediction parameter for a current block;
   determining a first reference block for the current block based on the prediction parameter for the current block;
   determining a first transform parameter for the current block based on the first reference block for the current block;
   determining a prediction block for the current block based on the first reference block for the current block; and
   determining a reconstructed block for the current block based on the prediction block and the first transform parameter for the current block.

**2.** The method of claim 1, wherein,
the prediction parameter comprises a block vector of the current block.

**3.** The method of claim 2, wherein,

the first reference block and the current block are in a same picture;
and,
the block vector represents a positional offset between the current block and the first reference block.

**4.** The method of claim 1, wherein,
the prediction parameter comprises a motion vector of the current block and a reference picture index.

**5.** The method of claim 4, wherein,

the first reference block is located in a reference picture indicated by the reference picture index;
and,
the motion vector represents a positional offset between the current block and the first reference block.

**6.** The method of claim 1, wherein determining the first transform parameter for the current block based on the first reference block for the current block comprises:

determining a statistical characteristic parameter of the first reference block; and
determining the first transform parameter based on the statistical characteristic parameter.

**7.** The method of claim 6, wherein,
the statistical characteristic parameter comprises a covariance matrix.

**8.** The method of claim 1, wherein determining the first transform parameter for the current block based on the first reference block for the current block comprises:

determining intra mode information for the current block based on the first reference block for the current block; and
determining the first transform parameter based on the intra mode information.

**9.** The method of claim 8, wherein determining the intra mode information for the current block based on the first reference block for the current block comprises:

determining a horizontal gradient and a vertical gradient corresponding to the first reference block for the current block; and
determining the intra mode information for the current block based on the horizontal gradient and the vertical gradient.

**10.** The method of claim 9, wherein determining the horizontal gradient and the vertical gradient corresponding to the first reference block for the current block comprises:
determining the horizontal gradient and the vertical gradient corresponding to the first reference block based on a preset operator.

**11.** The method of claim 9, wherein determining the intra mode information for the current block based on the horizontal gradient and the vertical gradient comprises:

determining a first prediction histogram based on the horizontal gradient and the vertical gradient;
when there is no non-zero amplitude in the first prediction histogram, determining that the intra mode information for the current block is a PLANAR mode; and
when there is a non-zero amplitude in the first prediction histogram, determining the intra mode information for the current block based on a gradient direction with a maximum amplitude in the first prediction histogram.

**12.** The method of claim 9, wherein determining the first transform parameter based on the intra mode information comprises:

determining a transform kernel candidate set based on the intra mode information for the current block; wherein the transform kernel candidate set comprises any number of transform kernels;
determining a first transform kernel from the transform kernel candidate set; and
determining the first transform parameter based on the first transform kernel.

13. The method of claim 12, wherein the transform kernel candidate set comprises any one of an LFNST transform kernel candidate set, an NSPT transform kernel candidate set, and a transform kernel candidate set determined based on a prediction direction.

14. The method of claim 13, wherein determining the LFNST transform kernel candidate set based on the intra mode information for the current block comprises:
determining the transform kernel candidate set corresponding to the intra mode information based on mapping relationships between intra modes and transform kernel candidate sets.

15. The method of claim 13, wherein the method further comprises:

decoding a bitstream to determine a transform kernel index number; and
determining the first transform kernel from the transform kernel candidate set based on the transform kernel index number, to determine the first transform parameter.

16. The method of claim 13, wherein the method further comprises:
determining a matrix size corresponding to the first transform parameter based on a size of the current block.

17. The method of claim 1, wherein determining the prediction block for the current block based on the first reference block for the current block comprises:
performing a refinement process on the first reference block based on a preset processing strategy to determine the prediction block for the current block.

18. The method of claim 17, wherein,
the preset processing strategy comprises at least one of the following processing: a fusion processing, a filtering processing, a sub-pixel processing, or a sample flipping processing.

19. The method of any one of claims 1 to 18, wherein the method further comprises:
decoding a bitstream, and determining a first transform coefficient corresponding to a prediction residual.

20. The method of claim 19, wherein determining the reconstructed block for the current block based on the prediction block and the first transform parameter for the current block comprises:

determining the prediction residual based on the first transform parameter and the first transform coefficient; and
determining the reconstructed block for the current block based on the prediction block for the current block and the prediction residual.

21. The method of claim 20, wherein determining the prediction residual based on the first transform parameter and the first transform coefficient comprises:

determining a second transform coefficient by performing an inverse secondary transform based on the first transform coefficient and the first transform parameter; and
determining the prediction residual by performing an inverse primary transform based on the second transform coefficient.

22. The method of claim 2, wherein the method further comprises:

determining the prediction block for the current block based on the first reference block for the current block;
determining a second transform parameter for the current block based on the prediction block for the current block; and
determining the reconstructed block for the current block based on the prediction block for the current block and the second transform parameter for the current block.

23. The method of claim 22, wherein the method further comprises:

decoding a bitstream, and determining first identifier information;
when a value of the first identifier information is a first value, determining to use the first transform parameter; and
when the value of the first identifier information is a second value, determining to use the second transform parameter.

24. The method of claim 22, wherein the method further comprises:
determining a first prediction histogram corresponding to the first reference block and a second prediction histogram corresponding to the prediction block.

25. The method of claim 24, wherein the method further comprises:

determining a first gradient direction and a second gradient direction in the first prediction histogram;
when an amplitude difference between the first gradient direction and the second gradient direction is less than or equal to a preset threshold, determining the reconstructed block for the current block based on the first transform parameter; and
when the amplitude difference between the first gradient direction and the second gradient direction is greater than the preset threshold, determining the reconstructed block for the current block based on the second transform parameter.

26. The method of claim 24, wherein the method further comprises:

determining a first gradient direction and a second gradient direction in the second prediction histogram;
when an amplitude difference between the first gradient direction and the second gradient direction is less than or equal to a preset threshold, determining the reconstructed block for the current block based on the first transform parameter; and
when the amplitude difference between the first gradient direction and the second gradient direction is greater than the preset threshold, determining the reconstructed block for the current block based on the second transform parameter.

27. The method of claim 9, wherein the method further comprises:
determining the horizontal gradient and the vertical gradient based on part or all samples in the first reference block.

28. The method of claim 18, wherein the method further comprises:

performing the refinement process on the first reference block for the current block based on a first processing strategy, to determine a first prediction block for the first reference block; and
performing the refinement process on the first prediction block based on a second processing strategy, to determine the prediction block for the current block.

29. The method of claim 28, wherein the method further comprises:

determining a third transform parameter for the current block based on the first prediction block; and
determining the reconstructed block for the current block based on the prediction block for the current block and the third transform parameter for the current block.

30. The method of claim 24, wherein the method further comprises:

determining a first template for the current block, and determining a preset search region; and
determining the block vector of the current block by performing a search within the preset search region.

31. The method of claim 24, wherein the method further comprises:

determining a first template for the current block, and determining a preset search region;
constructing a block vector candidate list of the current block by performing a search within the preset search region; and
determining the block vector of the current block from the block vector candidate list.

**32.** The method of claim 24, wherein the method further comprises:

determining block vectors of neighboring blocks for the current block;
constructing a block vector candidate list of the current block based on the block vectors of the neighboring blocks; and
determining the block vector of the current block from the block vector candidate list.

**33.** The method of any one of claims 30 to 32, wherein the method further comprises:

determining a template direction corresponding to the first template;
determining a first correlation parameter between a gradient direction with a maximum amplitude in the first prediction histogram and the template direction;
determining a second correlation parameter between a gradient direction with a maximum amplitude in the second prediction histogram and the template direction;
when the first correlation parameter is greater than or equal to the second correlation parameter, determining the reconstructed block for the current block based on the first transform parameter; and
when the first correlation parameter is less than the second correlation parameter, determining the reconstructed block for the current block based on the second transform parameter.

**34.** The method of any one of claims 1 to 33, wherein the method further comprises:

decoding the bitstream and determining prediction mode identifier information for the current block; and
when the prediction mode identifier information indicates that a prediction mode based on the prediction parameter is used for the current block, performing a process of determining the prediction parameter.

**35.** An encoding method, applied to an encoder, the method comprising:

determining a prediction parameter for a current block;
determining a first reference block for the current block based on the prediction parameter for the current block;
determining a first transform parameter for the current block based on the first reference block for the current block;
determining a prediction block for the current block based on the first reference block for the current block; and
determining a reconstructed block for the current block based on the prediction block and the first transform parameter for the current block.

**36.** The method of claim 35, wherein,
the prediction parameter comprises a block vector of the current block.

**37.** The method of claim 36, wherein,

the first reference block and the current block are in a same picture;
and,
the block vector represents a positional offset between the current block and the first reference block.

**38.** The method of claim 35, wherein,
the prediction parameter comprises a motion vector of the current block and a reference picture index.

**39.** The method of claim 38, wherein

the first reference block is located in a reference picture indicated by the reference picture index;
and,
the motion vector represents a positional offset between the current block and the first reference block.

**40.** The method of claim 35, wherein determining the first transform parameter for the current block based on the first reference block for the current block comprises:

determining a statistical characteristic parameter of the first reference block; and
determining the first transform parameter based on the statistical characteristic parameter.

**41.** The method of claim 40, wherein,
the statistical characteristic parameter comprises a covariance matrix.

**42.** The method of claim 35, wherein determining the first transform parameter for the current block based on the first reference block for the current block comprises:

determining intra mode information for the current block based on the first reference block for the current block; and
determining the first transform parameter based on the intra mode information.

**43.** The method of claim 42, wherein determining the intra mode information for the current block based on the first reference block for the current block comprises:

determining a horizontal gradient and a vertical gradient corresponding to the first reference block for the current block; and
determining the intra mode information for the current block based on the horizontal gradient and the vertical gradient.

**44.** The method of claim 43, wherein determining the horizontal gradient and the vertical gradient corresponding to the first reference block for the current block comprises:
determining the horizontal gradient and the vertical gradient corresponding to the first reference block based on a preset operator.

**45.** The method of claim 43, wherein determining the intra mode information for the current block based on the horizontal gradient and the vertical gradient comprises:

determining a first prediction histogram based on the horizontal gradient and the vertical gradient;
when there is no non-zero amplitude in the first prediction histogram, determining that the intra mode information for the current block is a PLANAR mode; and
when there is a non-zero amplitude in the first prediction histogram, determining the intra mode information for the current block based on a gradient direction with a maximum amplitude in the first prediction histogram.

**46.** The method of claim 43, wherein determining the first transform parameter based on the intra mode information comprises:

determining a transform kernel candidate set based on the intra mode information for the current block; wherein the transform kernel candidate set comprises any number of transform kernels;
determining a first transform kernel from the transform kernel candidate set; and
determining the first transform parameter based on the first transform kernel.

**47.** The method of claim 46, wherein the transform kernel candidate set comprises any one of an LFNST transform kernel candidate set, an NSPT transform kernel candidate set, and a transform kernel candidate set determined based on a prediction direction.

**48.** The method of claim 47, wherein determining the LFNST transform kernel candidate set based on the intra mode information for the current block comprises:
determining the transform kernel candidate set corresponding to the intra mode information based on mapping relationships between intra modes and transform kernel candidate sets.

**49.** The method of claim 47, wherein the method further comprises:

determining a first transform kernel from the transform kernel candidate set, to determine the first transform parameter; and
determining a transform kernel index number based on the first transform kernel, and signalliing the transform kernel index number into a bitstream.

**50.** The method of claim 47, wherein the method further comprises:
determining a matrix size corresponding to the first transform parameter based on a size of the current block.

**51.** The method of claim 35, wherein determining the prediction block for the current block based on the first reference block for the current block comprises:
performing a refinement process on the first reference block based on a preset processing strategy to determine the prediction block for the current block.

**52.** The method of claim 51, wherein,
the preset processing strategy comprises at least one of the following processing: a fusion processing, a filtering processing, a sub-pixel processing, or a sample flipping processing.

**53.** The method of any one of claims 35 to 52, wherein the method further comprises:
determining a first transform coefficient corresponding to a prediction residual.

**54.** The method of claim 53, wherein determining the reconstructed block for the current block based on the prediction block and the first transform parameter for the current block comprises:

determining the prediction residual based on the first transform parameter and the first transform coefficient; and
determining the reconstructed block for the current block based on the prediction block for the current block and the prediction residual.

**55.** The method of claim 54, wherein determining the prediction residual based on the first transform parameter and the first transform coefficient comprises:

determining a second transform coefficient by performing an inverse secondary transform based on the first transform coefficient and the first transform parameter; and
determining the prediction residual by performing an inverse primary transform based on the second transform coefficient.

**56.** The method of claim 36, wherein the method further comprises:

determining the prediction block for the current block based on the first reference block for the current block;
determining a second transform parameter for the current block based on the prediction block for the current block; and
determining the reconstructed block for the current block based on the prediction block for the current block and the second transform parameter for the current block.

**57.** The method of claim 56, wherein the method further comprises:

when it is determined to use the first transform parameter, determining that a value of the first identifier information is a first value;
when it is determined to use the second transform parameter, determining that the value of the first identifier information is a second value; and
signalling the first identifier information into a bitstream.

**58.** The method of claim 56, wherein the method further comprises:
determining a first prediction histogram corresponding to the first reference block and a second prediction histogram corresponding to the prediction block.

**59.** The method of claim 58, wherein the method further comprises:

determining a first gradient direction and a second gradient direction in the first prediction histogram;
when an amplitude difference between the first gradient direction and the second gradient direction is less than or equal to a preset threshold, determining the reconstructed block for the current block based on the first transform parameter; and
when the amplitude difference between the first gradient direction and the second gradient direction is greater than the preset threshold, determining the reconstructed block for the current block based on the second transform parameter.

**60.** The method of claim 58, wherein the method further comprises:

determining a first gradient direction and a second gradient direction in the second prediction histogram;

when an amplitude difference between the first gradient direction and the second gradient direction is less than or equal to a preset threshold, determining the reconstructed block for the current block based on the first transform parameter; and

when the amplitude difference between the first gradient direction and the second gradient direction is greater than the preset threshold, determining the reconstructed block for the current block based on the second transform parameter.

61. The method of claim 43, wherein the method further comprises:
determining the horizontal gradient and the vertical gradient based on part or all samples in the first reference block.

62. The method of claim 52, wherein the method further comprises:

performing the refinement process on the first reference block for the current block based on a first processing strategy, to determine a first prediction block for the first reference block; and

performing the refinement process on the first prediction block based on a second processing strategy, to determine the prediction block for the current block.

63. The method of claim 62, wherein the method further comprises:

determining a third transform parameter for the current block based on the first prediction block; and

determining the reconstructed block for the current block based on the prediction block for the current block and the third transform parameter for the current block.

64. The method of claim 58, wherein the method further comprises:

determining a first template for the current block, and determining a preset search region; and

determining the block vector of the current block by performing a search within the preset search region.

65. The method of claim 58, wherein the method further comprises:

determining a first template for the current block, and determining a preset search region;

constructing a block vector candidate list of the current block by performing a search within the preset search region; and

determining the block vector of the current block from the block vector candidate list.

66. The method of claim 58, wherein the method further comprises:

determining block vectors of neighboring blocks for the current block;

constructing a block vector candidate list of the current block based on the block vectors of the neighboring blocks; and

determining the block vector of the current block from the block vector candidate list.

67. The method of any one of claims 64 to 66, wherein the method further comprises:

determining a template direction corresponding to the first template;

determining a first correlation parameter between a gradient direction with a maximum amplitude in the first prediction histogram and the template direction;

determining a second correlation parameter between a gradient direction with a maximum amplitude in the second prediction histogram and the template direction;

when the first correlation parameter is greater than or equal to the second correlation parameter, determining the reconstructed block for the current block based on the first transform parameter; and

when the first correlation parameter is less than the second correlation parameter, determining the reconstructed block for the current block based on the second transform parameter.

68. The method of any one of claims 35 to 67, wherein the method further comprises:
when a prediction mode based on the prediction parameter is used for the current block, performing a process of determining the prediction parameter; determining prediction mode identifier information for the current block; and signaling the prediction mode identifier information into a bitstream.

69. A bitstream generated by bit encoding based on to-be-encoded information; wherein the to-be-encoded information comprises at least one of:

prediction mode identifier information for a current block, first identifier information, first transform coefficient corresponding to a prediction residual, or a transform kernel index number.

70. An encoder, comprising: a first determination unit; wherein,

the first determination unit is configured to: determine a prediction parameter for a current block; determine a first reference block for the current block based on the prediction parameter for the current block; determine a first transform parameter for the current block based on the first reference block for the current block; determine a prediction block for the current block based on the first reference block for the current block; and determine a reconstructed block for the current block based on the prediction block and the first transform parameter for the current block.

71. An encoder, comprising a first memory and a first processor; wherein,

the first memory is configured to store a computer program executable on the first processor; and
the first processor is configured to, when executing the computer program, perform the method of any one of claims 35 to 68.

72. A decoder, comprising: a second determination unit; wherein,

the second determination unit is configured to: determine a prediction parameter for a current block; determine a first reference block for the current block based on the prediction parameter for the current block; determine a first transform parameter for the current block based on the first reference block for the current block; determine a prediction block for the current block based on the first reference block for the current block; and determine a reconstructed block for the current block based on the prediction block and the first transform parameter for the current block.

73. A decoder, comprising a second memory and a second processor; wherein,

the second memory is configured to store a computer program executable on the second processor; and
the second processor is configured to, when executing the computer program, perform the method of any one of claims 1 to 34.

74. A computer-readable storage medium having stored thereon a computer program that, when executed, implements the method of any one of claims 1 to 34 or implements the method of any one of claims 35 to 68.

for a 4×4 forward LFNST, input 16 coefficients
for a 8×8 forward LFNST, input 64 coefficients
for a 16×16 forward LFNST, input 96 coefficients

forward LFNST transform

11

encoder side:

forward
primary
transform unit

12

quantization
unit

bitstream

14

decoder side:

inverse
primary
transform unit

13

inverse
quantization
unit

inverse LFNST transform

for a 4×4 inverse LFNST, input 16 coefficients
for a 8×8 inverse LFNST, input 32 or 16 coefficients
for a 8×8 inverse LFNST, input 32 coefficients

**FIG. 1**

Acquiring prediction mode information from a bistream

S1 — determining block vectors

S2 — generating initial prediction values

S3 — generating final prediction values (directly using initial prediction values/sub-pel interpolation/filtering/fusion)

S4 — intra prediction mode mapping

S5 — determining a transform matrix

Acquiring the transform coefficients corresponding to the residuals from a bistream

S6 — inverse secondary transform

S7 — performing inverse primary transform to generate residuals

S8 — generating reconstructed values

**FIG. 2**

**FIG. 3**

(a) The template type takes a value of 1

(b) The template type takes a value of 2

(c) The template type takes a value of 3

(d) The template type takes a value of 4

(e) The template type takes a value of 5

(f) The template type takes a value of 6

**FIG. 4**

**FIG. 5**

**FIG. 6**

reference block                    prediction block

**FIG. 7**

FIG. 8

FIG. 9

**FIG. 10**

a prediction parameter for the current block is determined ⟋⎺1101

a first reference block for the current block is determined based on the prediction parameter for the current block ⟋⎺1102

the first transform parameter for the current block is determined based on the first reference block for the current block ⟋⎺1103

the prediction block for the current block is determined based on the first reference block for the current block ⟋⎺1104

a reconstructed block for the current block is determined based on the prediction block and the first transform parameter for the current block ⟋⎺1105

**FIG. 11**

the transform set is determined ⟋⎺S5.1

the transform matrix group is determined ⟋⎺S5.2

the transform matrix size is determined ⟋⎺S5.3

**FIG. 12**

**FIG. 13**

**FIG. 14**

the prediction parameter for the current block is determined    —1501

↓

a first reference block for the current block is determined based on the prediction parameter for the current block    —1502

↓

the first transform parameter for the current block is determined based on the first reference block for the current block    —1503

↓

the prediction block for the current block is determined based on the first reference block for the current block    —1504

↓

a reconstructed block for the current block is determined based on the prediction block and the first transform parameter for the current block    —1505

**FIG. 15**

—100

Encoder

—111

first determination unit

**FIG. 16**

—100

Encoder

—123

first communication interface

—124

—122

first processor

—121

first memory

**FIG. 17**

200

Decoder

211

second determination unit

**FIG. 18**

200

Decoder

223

second communication interface

224

222

second processor

221

second memory

**FIG. 19**

## INTERNATIONAL SEARCH REPORT

| | International application No. |
|---|---|
| | **PCT/CN2023/123010** |

**A. CLASSIFICATION OF SUBJECT MATTER**

H04N 19/176(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 参考块, 变换参数, 统计特性, 梯度, 协方差矩阵, 候选集, 索引, reference block, transform parameter, statistical, gradient, covariance matrix, set, idx

**C. DOCUMENTS CONSIDERED TO BE RELEVANT**

| Category* | Citation of document, with indication, where appropriate, of the relevant passages | Relevant to claim No. |
|---|---|---|
| X | CN 113039803 A (LG ELECTRONICS INC.) 25 June 2021 (2021-06-25) description, paragraphs [0060]-[0501] | 69 |
| A | CN 113039803 A (LG ELECTRONICS INC.) 25 June 2021 (2021-06-25) description, paragraphs [0060]-[0501] | 1-68, 70-74 |
| A | CN 112335241 A (CANON INC.) 05 February 2021 (2021-02-05) entire document | 1-74 |
| A | CN 114765685 A (FACEMON CO., LTD.) 19 July 2022 (2022-07-19) entire document | 1-74 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 June 2024** | **19 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| | International application No. |
|---|---|
| | **PCT/CN2023/123010** |

| Patent document cited in search report | | | Publication date (day/month/year) | Patent family member(s) | Publication date (day/month/year) |
|---|---|---|---|---|---|
| CN | 113039803 | A | 25 June 2021 | None | |
| CN | 112335241 | A | 05 February 2021 | None | |
| CN | 114765685 | A | 19 July 2022 | None | |

Form PCT/ISA/210 (patent family annex) (July 2022)